# EUROPÄISCHE PATENTSCHRIFT

(11) **EP 1 219 153 B1**
(45) Veröffentlichungstag und Bekanntmachung des Hinweises auf die Patenterteilung: **08.02.2006**
(21) Anmeldenummer: 01128386.8
(22) Anmeldetag: 03.12.2001
(51) Int. Cl.: A01B 79/00, A01B 69/00, A01D 43/07, A01D 43/073, G05D 1/02, A01D 43/06

(54) **Vorrichtung und Verfahren zur Koordination und Einstellung von landwirtschaftlichen Fahrzeugen**
Device and method for coordinating and controlling agricultural vehicles
Dispositif et méthode pour coordonner et contrôler des véhicules agricoles

(30) Priorität: 23.12.2000 DE 10064862
(43) Veröffentlichungstag der Anmeldung: 03.07.2002
(73) Patentinhaber: CLAAS Selbstfahrende Erntemaschinen GmbH, 33428 Harsewinkel (DE)
(72) Erfinder: Behnke, Willi, 33803 Steinhagen (DE); Diekhans, Norbert, Dr., 33335 Gütersloh (DE); Huster, Jochen, 33330 Gütersloh (DE); Quincke, Gunnar, 59494 Soest (DE)

(56) Entgegenhaltungen:
- WO-A-00/35265
- WO-A-00/58800
- WO-A-99/18482
- DD-A- 155 157
- DE-A- 4 322 293
- DE-A- 19 705 842

## Beschreibung

Die Erfindung bezieht sich auf eine Vorrichtung und ein Verfahren zur Koordination und Einstellung von landwirtschaftlichen Fahrzeugen, die sich auf einem gemeinsamen Bearbeitungsfeld befinden und insbesondere an selbstfahrenden landwirtschaftlichen Fahrzeugen zwischen denen Erntegut mittels zumindest einer wenigstens einem der Fahrzeuge zugeordneten Überladeeinrichtung überladen wird, wobei zwischen den Fahrzeugen eine von der Vorrichtung umfasste Datenübertragungsstrecke besteht und mindestens ein Fahrzeug mit mindestens einem von der Vorrichtung umfassten Navigationssystem ausgerüstet ist.

Selbstfahrende landwirtschaftliche Fahrzeuge sind selbstfahrende Erntemaschinen oder Erntefahrzeuge, wie beispielsweise Mähdrescher oder Feldhäcksler. Weiterhin sind unter selbstfahrenden landwirtschaftlichen Fahrzeuge auch Transportfahrzeuge, wie beispielsweise ein Transportgespann bestehend aus einem Zugfahrzeug und zumindest einem angehängten Transportbehälter oder ein selbstfahrendes Transportfahrzeug mit einem unmittelbar auf dem Transportfahrzeug angeordnetem Transportbehälter zu verstehen. Die Erntemaschinen nehmen während des Erntevorgangs kontinuierlich Erntegut auf, bearbeiten es in bekannter Weise und geben das Erntegut entweder kontinuierlich, beispielsweise bei einem selbstfahrenden Feldhäcksler oder nach einer Zwischenspeicherung, beispielsweise beim Mähdrescher an einen Transportbehälter ab. Zu diesem Zweck weisen die Erntemaschinen eine Überladeeinrichtung auf. Bei einem Mähdrescher wird die Überladeeinrichtung von einem Korntankauslaufrohr und bei einem Feldhäcksler von einem Auswurfkrümmer gebildet.

Bei kontinuierlich abzugebenden Erntegut, wie im Falle des selbstfahrenden Feldhäckslers, fährt das Transportfahrzeug während der Beladung neben oder hinter der Erntemaschine her. Auch bei Mähdreschern, die prinzipiell in der Lage sind das Erntegut zu speichern, erfolgt das Überladen (Abtanken des Korntanks) immer häufiger während des Erntevorgangs, also bei fahrender Erntemaschine.
Ein verlustfreies Überladen, ohne das Erntegut neben den Transportbehälter fällt und außerdem eine möglichst vollständige Auslastung des Transportbehälters erreicht wird, ist beim Überladen während der Fahrt sehr schwierig. Beide Fahrzeuge werden von jeweils einem Fahrzeugbediener gesteuert, wobei der Fahrzeugbediener des Erntefahrzeuges vorrangig den Ernteprozeß laufend überwachen und zusätzlich die Überladeeinrichtung steuern muß. Erfolgt eine Überladung von Erntegut auf ein nachfolgendes Transportfahrzeug, ergibt sich für ihn die zusätzliche Schwierigkeit, daß sich der Überladebereich in einer von dem Erntegutaufnahmebereich entgegengesetzt liegenden Richtung befindet. Der Maschinendiener muß bei der Überwachung und Steuerung der Überladeeinrichtung, den Blick von dem Erntegutaufnahmebereich weg auf den Überladebereich richten.
Die Koordination der einzelnen Fahrzeuge auf dem Bearbeitungsfeld, wird von dem jeweiligen Fahrzeugbediener des jeweiligen Fahrzeuges selbstständig durchgeführt. Dabei orientiert sich das Erntefahrzeug an dem zu erntenden Bearbeitungsfeld und den auf dem Bearbeitungsfeld vorhandenen Erntegutkanten beispielsweise an einer Getreidekante oder einem Grasschwad. Die weiteren Transportfahrzeuge folgen dann dem Erntefahrzeug auf dem schon abgeernteten Bearbeitungsfeld nach. Das an der Überladung beteiligte Transportfahrzeug fährt während der Überladung direkt neben oder hinter dem Erntefahrzeug und orientiert sich an dem Erntefahrzeug. Dabei folgt der Fahrzeugbediener des Transportfahrzeuges den weiteren Anweisungen des Maschinenbedieners des Erntefahrzeuges zur optimalen Befüllung des Transportbehälters. Dies ist besonders dann erforderlich, wenn die Einstellung der Überladeeinrichtung nicht mehr weiter in eine gewünschte Stellung verändert werden kann, beispielsweise dann, wenn die Überladeeinrichtung an einen Anschlag des Schwenkbereiches um die vertikale Drehachse angelangt ist. Der Fahrzeugbediener des Erntefahrzeuge kann dann eine entsprechende Fahranweisung mittels einfacher Handzeichen oder über eine Sprechfunkverbindung an den Fahrzeugbediener des Transportfahrzeuges richten. Außerdem haben beide Fahrzeugbediener und gegebenenfalls auch Fahrzeugbediener von noch weiteren Fahrzeugen auf dem Bearbeitungsfeld, zusätzlich auf Reaktionen des jeweiligen anderen Fahrzeuges zu achten, welche beispielsweise durch schwierige Ernte- oder Bodenverhältnisse, verursacht werden. Bei dem Auftreten einer Störung innerhalb des eigenen Fahrzeuges, hat der Fahrzeugbediener in der Regel keine Zeit mehr das jeweilige weitere Fahrzeug über seine Lage zu informieren, sondern ist dann um eine möglichst schnelle Behebung der Störung bemüht. Besonders beansprucht werden die Fahrzeugbediener auch zu Beginn des Überladeprozesses, beispielsweise dann, wenn die Bearbeitung auf einer neuen Bearbeitungsspur aufgenommen und/ oder die Überladeeinrichtung eingeschaltet wird, weil dann die Flugbahn des Erntegutes durch die Luft noch nicht eindeutig von den Fahrzeugbedienern abgeschätzt werden kann und der jeweilige Fahrzeugbediener das Fahrzeug zumindest in Fahrtrichtung und Geschwindigkeit an die neue Bearbeitungsspur anpassen muß, insbesondere muß hierbei der Fahrzeugbediener des Erntefahrzeuges das Erntefahrzeug an die Erntegutaufnahmemenge einstellen und kann sich dabei nicht gleichzeitig auf den Überladeprozeß konzentrieren.
Diese bekannten Arten der Kommunikation zwischen den Fahrzeugbedienem erfordert die stete, volle Aufmerksamkeit der Fahrzeugbediener zueinander als auch eine Definition der entsprechenden Handzeichen beziehungsweise der Sprachanweisungen. Mit dem Eintritt von Dunkelheit oder auch bei längerer, zunehmender Bearbeitungszeit kommt es zu Schwierigkeiten in der Kommunikation, die dann zu unnötigen Stillstandszeiten der Fahrzeuge, Erntegutverlusten oder auch zu Beschädigungen an Fahrzeugen durch entsprechende Fahrfehler führen.

Es sind nun einige Einrichtungen bekannt geworden, die darauf abzielen, das Überladen von Erntegut zu vereinfachen und die Fahrzeugbediener bei der Überwachung zu entlasten.
In der Patentschrift DD 155 157 wird beispielsweise eine Positioniereinrichtung zwischen einem Erntefahrzeug und einem Transportfahrzeug offenbart. Der Abstand zwischen dem Transportfahrzeug und dem Erntefahrzeug wird durch akustische oder optische Sensoren an dem Erntefahrzeug anhand reflektierten Signalen ermittelt und in eine entsprechende Bedienerinformation umgewandelt. Zwischen dem Erntefahrzeug und dem Transportfahrzeug besteht ferner eine Funkverbindung, mittels welcher die Bedienerinformation von dem Erntefahrzeug an das Transportfahrzeug übertragen und dort endsprechend angezeigt wird. Bei einer Unterschreitung eines Mindestabstandes zwischen den Fahrzeugen wird dies, mittels der Funkübertragungsstrecke, dem Bediener des Transportfahrzeuges mitgeteilt. Der Befüllungsgrad des Transportbehälters wird außerdem durch entsprechende Sensoren in dem Transportbehälter ermittelt. Ist der Behälter an einer bestimmten Stelle entsprechend befüllt, wird dies dem Fahrzeugbediener optisch und akustisch auf einem Anzeigegerät in der Fahrerkabine angezeigt. Er kann anhand dieser Signale die Position des Transportbehälters so steuern, daß der Behälter an einer anderen, weniger befüllten Stelle beladen wird. Verläßt der Transportbehälter den von den einzelnen Sensoren erfaßten Bereich, so wird die Überladeeinrichtung abgeschaltet.
Die vorgeschlagene Lösung beruht auf Sensorsignalen, die auf optischem oder akustischem Wege eine Entfernung in Abhängigkeit der Laufzeit einer ausgesendeten, magnetischen Welle zwischen dem Erntefahrzeug und dem Transportfahrzeug ermitteln. Dies wirkt sich nachteilig auf die Zuverlässigkeit der Sensorsignale aus. Im Umfeld der Erntemaschine befindet sich eine Menge Staub, die auch durch die teilweise frei durch die Luft stattfindende Überladung weiter erhöht wird und zur Verunreinigung der Sensoreinrichtungen oder Reflektoren führt. Bei herrschendem Staub sind die Sensoren und Reflektoren schnell verschmutz und eine ausreichende Funktion der vorgeschlagenen Lösung ist nicht mehr gegeben. Ein weiterer Nachteil ist das beschränkte Anwendungsgebiet der vorgeschlagenen Lösung. Mittels dieser vorgeschlagenen Lösung, lassen sich nur das direkt am Überladeprozeß beteiligte Fahrzeug überwachen. Desweiteren läßt sich diese Lösung nur an Erntefahrzeugen einsetzen, bei welchen zumindest zeitweise Erntegut zwischengespeichert werden kann, da die Überladeeinrichtung automatisch ein- beziehungsweise ausgeschaltet wird, wenn sich ein Transportfahrzeug innerhalb beziehungsweise außerhalb der Detektionsbereiche befindet. Jedes Transportfahrzeug muß außerdem mit einer entsprechenden, speziellen Einrichtung ausgestattet sein.

Aus der DE 195 31 662 A1 ist einer weitere Einrichtung bekannt, bei welcher die relative Ausrichtung der Überladeeinrichtung zu einem Transportbehälter mittels optischer Abstandssensoren, die direkt an der Überladeeinrichtung angebracht sind, ermittelt wird. Mit den Meßdaten der Sensoren soll dann die Überladeeinrichtung von der Erntemaschine aus manuell oder automatisch jeweils für ein optimales Überladen eingestellt werden. Hierbei kann auf verschiedene Verstellmechanismen für die Überladevorrichtung zurückgegriffen werden. So wird die Überladeeinrichtung beispielsweise von einem Auswurfkrümmer an einem selbstfahrenden Feldhäcksler gebildet, der horizontal und vertikal am Fahrzeug verschwenkbar angebracht ist. Darüber hinaus befindet sich am Ende des Auswurfkrümmers eine verschwenkbare Auswurfklappe, mit der die Abgaberichtung des Erntegutstromes zusätzlich verstellt werden kann.

Eine weitere, derartige Einrichtung ist für einen selbstfahrenden Feldhäcksler aus der DE 44 26 059A1 bekannt. Hier ist eine Kamera vorgesehen, deren Bildbereich sowohl auf die Auswurfklappe als auch auf den Transportbehälter gerichtet ist, wobei das Bild dem Fahrzeugbediener des selbstfahrenden Feldhäckslers zur Steuerung der Überladeeinrichtung auf einem Monitor in der Fahrerkabine angezeigt wird.
Alle diese Einrichtungen haben den Nachteil, daß sie versagen, wenn sich in dem Erfassungsbereich der Sensoren Staub befindet. Die optischen Sensoren beziehungsweise die Reflektoren verschmutzen dadurch schnell und eine ausreichend zuverlässige Erkennung des Transportbehälters ist dann nicht mehr möglich. Ferner versagen die bekannten Einrichtungen, wenn die Fahrzeugbediener der Fahrzeuge ungeübt oder unaufmerksam sind und der Transportbehälter in einen Bereich gefahren wird, der außerhalb des möglichen Überladebereiches liegt.

Es ist daher Aufgabe der Erfindung die bekannten Mängel zumindest zu verbessern.

Diese Aufgabe wird durch eine erfindungsgemäße Vorrichtung dadurch gelöst, daß zumindest von der Vorrichtung umfasstes ein Navigationssystem wenigstens eine Position eines Fahrzeuges ermittelt und zumindest diese mittels der von der Vorrichtung umfassten Datenübertragungsstrecke an wenigstens ein weiteres Fahrzeug übertragen wird.
Eine weitere Lösung der Aufgabe wird durch ein erfindungsgemäßes Verfahren gegeben, welches dadurch gekennzeichnet ist, dass die Position eines Fahrzeugs ermittelt und an mindestens ein weiteres Fahrzeug übertragen wird und wobei zumindest einem Fahrzeug eine Einrichtung angeordnet ist, mittels welcher der relative Abstand zwischen den Fahrzeugen ermittelt wird und das aus der Überladeeinrichtung austretende Erntegut auf dem weiteren Fahrzeug in einem Auftreffpunkt auftrifft, dessen Lage in Abhängigkeit von diesem relativen Abstand ermittelt wird.

Die erfindungsgemäß vorgeschlagene Lösung stellt eine enorme Verbesserung für eine verbesserte Koordination von Fahrzeugen auf dem Bearbeitungsfeld und auch für die angestrebte, verlustfreie Überladung von Erntegut dar. Das jeweilige andere Fahrzeug erhält erfindungsgemäß eine Information über wenigstens eine Position eines weiteren Fahrzeuges. Ein weiterer Vorteil liegt in der nahen, direkten Übertragung zumindest nur einer Position an ein weiteres Fahrzeug. Die Entfernungen der Fahrzeuge auf einem Bearbeitungsfeld untereinander, insbesondere der Fahrzeuge die direkt an dem Überladeprozeß beteiligt sind, sind nur gering. Für die Datenübertragung kann daher vorteilhaft auf eine einfache, kostengünstige und bekannte Datenübertragungseinrichtung zurückgegriffen werden. Durch die mittels der Datenübertragungsstrecke empfangene Position des jeweiligen anderen Fahrzeuges, wird das Fahrzeug selbst vorteilhaft in die Lage versetzt, bestimmte Einrichtungen in dem eigenen Fahrzeug über die Position des jeweilig weiteren Fahrzeuges zu informieren. Dabei ist die Übertragung lediglich der navigierten Position des eigenen Fahrzeuges an ein weiteres Fahrzeug vom besonderen Vorteil, da hierdurch jeweils keine große Datenmenge zu übertragen ist und somit schnell hintereinander die jeweilige aktuelle Position übertragen werden kann. Weiterhin ist die individuelle, der jeweiligen Ausstattung und Art des Fahrzeuges angepasste, nachfolgende Verwendung und Auswertung der Position in dem weiteren Fahrzeug ein weiterer Vorteil. Jedes Fahrzeug für sich enthält dafür eigene Auswerte-, Speicher- beziehungsweise Steuereinrichtungen und reagiert mit einer eigenen abgeleiteten Reaktion infolge der Auswertung der übertragenen Position oder Positionen.
Die Datenübertragungsstrecke, kann ferner auch vorteilhaft für einen weiteren Datenaustausch genutzt werden. Empfängt beispielsweise ein Fahrzeug eines Positionssignal von einem weiteren Fahrzeug im Datenübertagungsbereich, kann dieses Signal auch als ein Startsignal für eine gegenseitige Identifikation und anschließende weitere Kommunikation verwendet werden. Vorteilhaft kann auf eine übergeordnete Steuerung, die dann zumindest stationär auf dem Bearbeitungsfeld eingerichtet werden müßte und größere Datenübertragungsstrecken erforderlich machen würde, verzichtet werden.
Ein weiterer Vorteil der erfindungsgemäßen Lösungen besteht in der möglichen Verwendung von kostengünstigen Satellitennavigationssystemen. Diese können zwar bezüglich eines terrestrischen Bezugsystems stark verfälschte Positionen liefern. Dies ist aber für die erfindungsgemäße Verwendung unerheblich, da die Verfälschung der einzelnen Positionssignalen auf die relative Ausrichtung der Positionen zueinander gleich groß ist.

Gemäß der Erfindung ist es vorgesehen, daß auf mindestens einem Fahrzeug eine von der Vorrichtung umfasste Einrichtung vorhanden ist, in welcher die von der Datenübertragungsstrecke übermittelte Position eines weiteren Fahrzeuges in Verbindung mit der Position des mit der Einrichtung ausgestatteten Fahrzeuges gebracht und wenigstens ein Signal zur Beeinflussung mindestens eines Parameters eines Fahrzeuges erzeugt wird.

Hierdurch entsteht der Vorteil, daß anhand der Auswertung eine Aussage über die relative Ausrichtung des jeweilig weiteren Fahrzeuges bezüglich des eigenen Fahrzeugs auf dem Bearbeitungsfeld abgeleitet werden kann. Sicherheitseinrichtungen können vorteilhaft mit dieser Information gewisse Schutzabstände überwachen und gegebenenfalls Warnmeldungen veranlassen. Des weiteren können vorteilhaft Aussagen über relative Bewegungen der Fahrzeuge zueinander ermittelt und gegebenenfalls auch für weitere Sicherheits- und Steuerfunktionen im eigenen Fahrzeug herangezogen werden. Es ist vorteilhaft möglich, eigene Fahrzeugeinrichtungen anhand der übermittelten Position zu steuern. Dabei kann die Position des jeweiligen anderen Fahrzeuges selbst oder in Verbindung mit der eigenen Position, Einfluß in jeder beliebigen Einrichtung des eigenen Fahrzeug nehmen. Aus der übertragenen Position ist vorteilhaft zu entnehmen, ob sich die Position des übermittelten Fahrzeuges in einer vorgegebenen Zeit nicht geändert hat, ist dies der Fall, ist auf den Stillstand dieses Fahrzeuges zu schließen und entsprechend eine vorgesehene Reaktion des eigenen Fahrzeuges oder einer Einrichtung im Fahrzeug veranlaßbar. Hier seien beispielsweise separate oder gemeinsame Getriebe-, Motor-, Brems- oder Zusatzsteuerungen genannt.

In einer weiteren Ausgestaltung der Erfindung ist auf mindestens einem Fahrzeug eine Einrichtung vorhanden, die aus der mittels der Datenübertragungsstrecke übertragenen Position eines weiteren Fahrzeuges in Verbindung mit der Position des mit der Einrichtung ausgestatteten Fahrzeuges eine Fahrzeugbedienerinformation ableitet und diese dem Fahrzeugbediener anzeigt.
Der Fahrzeugbediener erhält somit vorteilhaft eine Information über die momentane Position beispielsweise des Erntefahrzeuges in Bezug auf die Position des eigenen Fahrzeuges und kann dann anhand der Anzeige die relative Ausrichtung der Fahrzeuge zueinander überwachen beziehungsweise steuern. Änderungen in der relativen Ausrichtung können dann entsprechend verfolgt und bei Bedarf durch eine entsprechende Korrektur der Fahrtrichtung oder Geschwindigkeit manuell ausgeglichen werden. Diese Einrichtung kann in jedem Fahrzeug auf dem Bearbeitungsfeld angebracht sein, so daß der Fahrzeugbediener vorteilhaft auch bei Dunkelheit eine Information über die relative Fahrzeugposition zu den weiteren Fahrzeugen und auch über die relativen Fahrzeugbewegungen der weiteren Fahrzeuge auf dem Bearbeitungsfeld erhält.

Die Erfindung läßt sich weiter durch eine Einrichtung ausgestalten, die es ermöglicht, die Ausrichtung der Längsachse des Fahrzeuges bezogen auf die entsprechende Position des Fahrzeuges anzuzeigen. Hierzu eignet sich besonders ein elektronischer Kompass, der sogenannte Kreiselkompaß. Mittels dieser Information kann der jeweiligen Position eines Fahrzeuges vorteilhaft auch die Ausrichtung beziehungsweise auch die Fahrtrichtung und gegebenenfalls auch die Abmessungen des eigenen beziehungsweise auch des jeweiligen, weiteren Fahrzeuges zugeordnet, mittels der Datenübertragungsstrecke übertragen und entsprechend auf einer Anzeige angezeigt werden. Fahrtrichtungsänderungen eines weiteren Fahrzeuges und die jeweiligen Abstände zu den weiteren Fahrzeugen lassen sich somit leicht überwachen. Eine entsprechende Anzeige läßt sich leicht in dem Blickfeld eine Maschinenbedieners anordnen.
Vorteilhaft wird die Position des sendenden Fahrzeuges beispielsweise des Erntefahrzeuges um einen gewünschten Abstand zu dem Transportfahrzeug beziehungsweise auch um einen gewissen Versatz in Fahrtrichtung vor der Übertragung verschoben und dann erst an das Transportfahrzeug übertragen. Der jeweilige Abstand beziehungsweise der Versatz der verschobenen Position des jeweiligen anderen Fahrzeuges zu der aktuellen Position des Fahrzeuges, kann fest oder beispielsweise mittels einfacher, bekannter Stellelemente von einem der Fahrzeugbediener vorgegeben werden. Somit erhält zumindest der Fahrzeugbediener des sendenden Erntefahrzeuges ohne Sicht- beziehungsweise Funkverbindung zu dem Bediener des Transportfahrzeuges jederzeit die Möglichkeit, eine Bedienerinformation an das Transportfahrzeug zu senden, indem er je nach Bedienerwunsch die eigene navigierte Position vor dem übertragen um einen gewünschten Betrag verschoben sendet.
Die Fahrzeugbedienerinformation ist unabhängig von der absoluten Position der Fahrzeuge auf dem Bearbeitungsfeld, daher ist es von untergeordneter Bedeutung, welche der Positionen als Vorgabeposition und welche Position verschoben dem jeweiligen Fahrzeugbediener angezeigt wird. Die eigene Position oder die Position des jeweils weiteren Fahrzeuges, kann in dem Fahrzeug in welchem die Positionen angezeigt wird oder auch vor dem übertragen an ein weiteres Fahrzeug in der entsprechenden Einrichtung verschoben werden.

In einer weiteren Ausgestaltung der Erfindung ist auf mindestens einem Fahrzeug, vorzugsweise auf einem selbstfahrenden Erntefahrzeug eine Speichereinrichtung vorhanden, in welche zumindest die aktuelle Position des Erntefahrzeuges beziehungsweise mindestens eine Position des Transportfahrzeuges abgespeichert werden kann. In diese Speichereinrichtung wird, je nach Vorgabe, sporadisch, weg- oder zeitabhängig mindestens eine Position eines Fahrzeuges abgespeichert. Aus der aktuellen Position und einer weiteren abgespeicherten, vorteilhaft der zuletzt abgespeicherten Position, kann die Fahrtrichtung des jeweiligen Fahrzeuges aus der Richtung der Verbindungsstrecke zwischen den beiden Positionen berechnet werden. Vorteilhaft kann hierdurch eine separate Einrichtung (Kompass) zur Ermittlung der Ausrichtung (Fahrrichtung) des Fahrzeuges bezogen auf die aktuelle Position entfallen. Aus den abgespeicherten Positionen und gegebenenfalls auch aus der aktuellen Position, läßt sich ferner erfindungsgemäß zumindest die zurückgelegte Fahrspur des jeweiligen Fahrzeuges berechnen und bei einer entsprechenden Ausstattung des Fahrzeuges dem jeweiligen Fahrzeugbediener anzeigen. Dies kann direkt auf dem Fahrzeug, welches mit der Speichereinrichtung ausgestattet ist oder auch für eine spätere Auswertung des Ernteprozesses auch auf einem fahrzeugunabhängigen Computersystem vorgenommen werden.
Anhand der abgespeicherten Positionen lassen sich vorteilhaft weitere Aussagen über die Position von beispielsweise der aktuellen Position eines an einem Zugfahrzeug angehängtem Transportbehälters machen. Aus der Anbringungsposition der Antenne auf dem Fahrzeug, den Abmessungen des Fahrgestelles des Transportbehälters, wie dessen Spurweite, Achsabstand und der dazu relativen Lage der Zugöse, läßt sich in Verbindung mit der zurückliegenden Fahrspur des Zugfahrzeuges die ungefähre Position des Transportbehälters, bezogen auf die aktuelle Position des Transportfahrzeuges, ableiten. Diese Parameter sowie die relative Lage des Transportbehälters, kann bei Bedarf während einer Identifikation an das Erntefahrzeug übertragen und anschließend bei der Ermittlung der Anzeige der Fahrzeugbedienerinformation berücksichtigt werden. Es wird somit an den Fahrzeugbediener des Transportfahrzeuges eine Fahrinformation gegeben, die die Vorgabe und Bedienanweisungen des Fahrzeugbedieners des Erntefahrzeuges und die Position des Transportbehälters berücksichtigt.

In einer weiteren Ausgestaltung der Erfindung, ist auf mindestens einem Fahrzeug eine Einrichtung zur automatischen Einwirkung auf die Fahrrichtung beziehungsweise auf die Fahrgeschwindigkeit in Abhängigkeit der von der Datenübertragungsstrecke übertragenen Information vorhanden. Die erfindungsgemäße Fahrzeugbedienerinformation ermöglicht dem jeweiligen Fahrzeugbediener sein Fahrzeug in der Fahrtrichtung beziehungsweise Fahrgeschwindigkeit an das jeweilige andere Fahrzeug manuell anzupassen. Durch die weitere erfindungsgemäße Ausgestaltung, kann diese Anpassung auch zumindest zum Teil automatisch erfolgen. Hierzu wird das entsprechende Fahrzeug, vorteilhaft das Transportfahrzeug, mit Einrichtungen ausgestattet, welche ein automatisches Einwirken auf die Fahrgeschwindigkeit und/oder auf die Fahrtrichtung ermöglichen. Für die gattungsgemäßen Fahrzeuge sind hydrostatischen, mechanische, elektrische oder sogar kombinierte derartige Antriebssysteme bekannt, welche in der Regel im Antriebsstrange eine Einrichtung beinhalten, mittels welcher die Fahrgeschwindigkeit in Stufen oder auch stufenlos variiert werden kann. Die erfindungsgemäße Einrichtung ermittelt aus dem relativen Ausrichtung der Positionssignalen eine Fahrgeschwindigkeit für das Transportfahrzeug, welche erforderlich ist, damit zumindest die von dem Erntefahrzeug vorgegebene Position und die aktuelle Position des Transportfahrzeuges deckungsgleich oder zumindest der relativen Abstand zwischen den Fahrzeugen eingehalten wird. Ein in der Einrichtung beinhalteter Regler, dient zur Steuerung der Stelleinrichtung, zur Beeinflußung der Fahrgeschwindigkeit und ermittelt aus einem Soll- und Ist-Positionsvergleich eine entsprechende Stellgröße. Hierbei kann der Fachmann auf bekannte Stellvorrichtungen für die Regelung der Fahrgeschwindigkeit zurückgreifen.
Des weiteren ist es vorteilhaft vorgesehen, daß zumindest ein Fahrzeug über eine Fernlenkungseinrichtung verfügt. Von den Erntefahrzeugen her sind sogenannte Autopiloten bekannt. Diese beinhalten Sensoren, die vor dem Erntefahrzeug den relativen Verlauf der Bearbeitungskante oder -spur abtasten. Der Autopilot steuert dann die Fahrtrichtung des Erntefahrzeuges anhand des Sensorssignals so, daß die Erntemaschine der Bearbeitungskante oder -spur automatisch folgt. Diese Erntefahrzeuge sind mit einer elektrohydraulischen Lenkung ausgestattet und jegliche Arten von Fahrzeugen können mit einer solchen Lenkung ausgerüstet werden. Somit kann die erfindungsgemäße Einrichtung, unter Verwendung der bekannten automatischen Lenkeinrichtungen, auch zur Steuerung der Fahrtrichtung zumindest eines Fahrzeuges eingesetzt werden. Die Abweichungen der Fahrtrichtungen zumindest zweier Fahrzeuge zueinander können dann mittels dieser Einrichtung automatisch ausgeregelt werden.
Diese Art der Steuerung von zumindest zwei Fahrzeugen zueinander, eignet sich besonders für die Überladung von Erntegut bei paralleler Nebenher- oder Hintereinanderherfahrt. Dabei können sich auch mehrere Fahrzeuge gleichzeitig in entsprechenden Abständen anhand der jeweiligen relativen Positionen zueinander führen. So können auch Transportfahrzeuge, auf welche momentan kein Erntegut überladen wird, durchaus automatisch in Geschwindigkeit und/oder Richtung gesteuert und somit während der automatischen Steuerung, die jeweiligen Fahrzeugbediener entlastet werden. Bei der automatischen Anpassung der Fahrgeschwindigkeit eines Fahrzeuges an die Fahrgeschwindigkeit eines weiteren Fahrzeuges, kann beispielsweise in einer Notsituation, automatisch erreicht werden, daß vorteilhaft alle am automatischen Führen beteiligten Fahrzeuge eine entsprechende Information über die entsprechende Situation des anderen Fahrzeuges erhalten. Die übertragene Position des Fahrzeuges, mit dem entsprechenden Problem, verändert sich dann nicht mehr und führt dann automatisch zu einer Sollpositionsabweichung, die dann zu einer Korrektur der Position bei den weiteren abhängigen Fahrzeugen bis hin zum Stillstand aller Fahrzeuge führt.
Für eine verbesserte Anzeige auf dem Monitor in dem jeweiligen Fahrzeug, kann von der Einrichtung zumindest koaxial zu einer dargestellten Position einen Kreis mit einem Radius, der etwa dem gewünschten Abstand der Positionen der Fahrzeuge zueinander entspricht, angezeigt werden. Dies vereinfacht die Überwachung der relativen Ausrichtung der Fahrzeuge zueinander dadurch, daß sich zumindest in der Nähe der weiteren, angezeigten Position auch der Kreis dargestellt wird. Vereinfacht kann dann auch der Kreis nicht voll, sondern nur durch einen Teilkreisbogen angezeigt werden, der in der Nähe der weiteren Position verläuft.
Vorteilhaft ist auch das Erntefahrzeug mit einer Einrichtung zur Steuerung der Fahrgeschwindigkeit und/oder der Fahrtrichtung ausgestattet. Es kann dann bei schlechten Bodenverhältnissen, besonders bei Hanglage des Bearbeitungsfeldstückes, zu ungewolltem Hangabdrift der Fahrzeuge kommen, wobei schlimmstenfalls die Fahrzeuge sich aufeinander zu bewegen. Hierzu ist es dann durchaus sinnvoll, daß zur Vermeidung von Erntegutverlusten und Fahrzeugschäden, nach der Überschreitung einer bestimmten Positionsabweichung, zumindest der am Überladeprozeß beteiligten Fahrzeuge, auch das Erntefahrzeug zumindest in der Fahrgeschwindigkeit automatisch an die des Transportfahrzeuges angepasst wird. Dies kann zwangsweise, durch einen automatischen Eingriff in die Fahrgeschwindigkeitsteuerung oder auch durch einen entsprechenden Fahr- beziehungsweise Warnhinweis an den Fahrzeugbediener des Erntefahrzeuges erfolgen. Diese Ausgestaltung der erfindungsgemäßen Einrichtung erbringt außerdem einen wirksamen Havarieschutz, insbesondere dann, wenn das Transportfahrzeug hinter dem Erntefahrzeug herfährt, wie dies zum Beispiel zu Beginn der Bearbeitung eines neuen Bearbeitungsfeldes mit dem selbstfahrenden Feldhäcksler notwendig ist. Sollte der selbstfahrende Erntefahrzeug dann beispielsweise wegen eines plötzlich auftauchenden Hindernisses abrupt abbremsen müssen, so kann in der entsprechenden Einrichtung ein entsprechendes Brems- beziehungsweise Stoppsignal erzeugt, an das Transportfahrzeug übertragen und dort entsprechend ausgewertet werden. Die hierfür benötigte Zeit dauert nur ein Bruchteil der Reaktionszeit des jeweiligen Fahrzeugbedieners.

In einer weiteren Ausführungsform der Erfindung ist es vorgesehen, daß auf mindestens einem Fahrzeug, vorzugsweise auf einem selbstfahrenden Erntefahrzeug, eine Einrichtung vorhanden ist, mittels welcher die Steuerung zur Koordination von mindestens einem weiteren Fahrzeug vorgenommen werden kann. Vorteilhaft ist in der Fahrerkabine ein weiteres Bedienungselement zur manuellen Steuerung vorhanden, mittels welchem der Fahrzeugbediener die erzeugte, weitere Position in seiner relativen Lage zur eigenen Position manuell steuern kann. Dazu ist für diese Zwecke beispielsweise in der linken Armlehne des Bedienersitzes ein Joystick angeordnet. Durch Vor- oder Zurückbewegung des Joysticks, kann der Fahrzeugbediener des Erntefahrzeuges dann den relativen Versatz des Transportfahrzeuges in Fahrtrichtung der Fahrzeuge und durch eine seitliche Bewegung des Joysticks die Positionsvorgabe nach links oder rechts, das heißt den Abstand verändern. Auf einer entsprechenden Anzeige in der Fahrerkabine, können dann die eigene Position und die weiteren erzeugten Positionsvorgaben zur Überprüfung der jeweiligen vorgegebenen Position angezeigt werden. Auf dieser Anzeige kann ferner wenigstens eine mittels der Datenübertragungsstrecke an das Erntefahrzeug übertragene aktuelle Position eines weiteren Fahrzeuges angezeigten werden. Das Transportfahrzeug, welches die Positionsvorgabe mittels der Datenübertragungsstrecke erhält, wird vorteilhaft von dem Fahrzeugbediener des Erntefahrzeuges gesteuert, indem der Fahrzeugbediener des Transportfahrzeuges versucht die Positionsvorgabe zu erfüllen. Der Fahrzeugbediener des Erntefahrzeuges, der gegenüber dem Fahrzeugbediener des Transportfahrzeuges in einer erhöhten Position sitzt und den Überladeprozeß besser einsehen kann, ist somit in der Lage das Transportfahrzeug für eine bessere Überladung manuell fernzusteuern.
Erfolgt die Auswertung der vorgegeben, übertragenen Position für das Transportfahrzeug auf dem Transportfahrzeug automatisch, so kann der Fahrzeugbediener des Erntefahrzeuges vorteilhaft direkt auf die Fahrtrichtung und gegebenenfalls auch auf die Fahrgeschwindigkeit des Transportfahrzeuges einflußnehmen.
Natürlich kann aus Sicherheitsgründen, die automatische Steuerung des Transportfahrzeuges jederzeit von dem Fahrzeugbediener des Transportfahrzeuges manuell gesteuert oder übersteuert werden. Dafür handelt er sich dann zwar eine größere Abweichung zwischen den Positionen ein, kann diese aber später, nach einer erneuten Aktivierung des Autopiloten, von dem Regler automatisch beheben lassen. Eine Deaktivierung der automatischen Regelung der Fahrgeschwindigkeit beziehungsweise der Fahrtrichtung des Transportfahrzeuges, kann beispielsweise durch eine manuelle Betätigung des Lenkrades oder des Gaspedals oder der Fußbremse herbeigeführt werden.

In einer weiteren Ausgestaltung der Erfindung wird die erfindungsgemäße Vorrichtung dahingehend ausgestaltet, daß auf mindestens einem Fahrzeug mindestens eine Einrichtung vorhanden ist, die aus den jeweiligen, navigierten Positionen den relativen Abstand zwischen mindestens zwei Positionen zweier Fahrzeuge ermittelt. Durch diese Auswertung der Positionen erhält der Fahrzeugbediener vorteilhaft überprüfbare Angaben über zumindest die relative Entfernung zu einem weiteren Fahrzeug. Der Fahrzeugbediener kann somit feststellen, wie weit sich eine weiteres Fahrzeug von ihm entfernt auf dem Bearbeitungsfeld befindet. So ist es für ihn besonders bei Dunkelheit erkennbar, ob sich hinter dem momentan an dem Überladeprozeß beteiligten Transportfahrzeug noch ein weiteres Transportfahrzeug befindet. Der Fahrzeugbediener kann dann anhand der berechneten, angezeigten Entfernung ablesbar, wie weit das weitere Transportfahrzeug von dem Erntefahrzeug oder dem Transportfahrzeug entfernt ist. Er kann ferner eine Abschätzung durchführen, ob er mit den ihm durch die Einstellmöglichkeiten der Überladeeinrichtung bekannten, vorgegebenen Einstellmöglichkeiten eine verlustfreie Überladung von Erntegut auf dieses weitere Transportfahrzeug erreichen könnte. Durch die Abstandsermittlung und entsprechende Anzeige erhält der Bediener des Erntefahrzeuges vorteilhaft die Möglichkeit, den bei einer vorherigen Beladung des entsprechenden Transportfahrzeuges herrschenden Abstandswert, zwischen den Positionen von Erntefahrzeug und Transportfahrzeug, bei einer nachfolgenden Beladung erneut einstellen zu können. Mittels der vorhandenen Datenübertragungsstrecke zwischen den Fahrzeugen, ist es auch durchaus möglich, den jeweiligen fahrzeugbezogen, relativen Abstandswerte automatisch anhand einer Fahrzeugkennung abzuspeichern und bei einer entsprechenden Überladung von Erntegut an dieses Fahrzeug aus der Speichereinrichtung erneut abzurufen. Somit wird, bei einer entsprechenden Koordination zwischen den entsprechenden Fahrzeugen, anhand einer Fahrzeugkennung, eine zuvor in der Speichereinrichtung zugeordnete Entfernung aus dem Speicher aufgerufen, die aktuelle navigierte Position des Fahrzeuges um den abgerufenen Entfernungsbetrag verschoben, dann an das weitere Fahrzeug übermittelt und zumindest zusammen mit der aktuellen navigierten Position des weiteren Fahrzeuges dem Fahrzeugbediener angezeigt.

In einer weiteren Ausgestaltung der Erfindung, ist auf mindestens einem Fahrzeug mindestens eine Einrichtung vorhanden, die aus dem ermittelten, relativen Abstand zu einem weiteren Fahrzeug ein Steuersignal generiert, um den relative Abstand der Positionen zwischen zumindest den beiden Fahrzeugen zu steuern.
Durch die automatische Steuerung werden die Fahrzeugbediener vorteilhaft entlastet. Für den Bediener des Transportfahrzeuges ist es nur noch erforderlich, daß Transportfahrzeug in die Nähe des Erntefahrzeuges oder eines weiteren Transportfahrzeuges zu steuern, um dann mittels der Datenübertragungsstrecke eine Position des jeweilig anderen Fahrzeuges zur Steuerung des eigenen Fahrzeuges übermittelt zu bekommen. Erscheint nun eine Positionsvorgabe auf einer Anzeige in der Fahrerkabine des Transportfahrzeuges oder erhält er eine Nachricht darüber, daß eine Positionsvorgabe vorhanden ist, kann der Bediener selbst entscheiden, ob er sich an das weitere Fahrzeug ankoppeln möchte oder nicht.

Es ist in einer Ausgestaltung der erfindungsgemäßen Vorrichtung vorgesehen, daß die Positionsdaten aller an der automatischen Koordination beteiligten Fahrzeuge in einer Einrichtung auf einem Fahrzeug verwaltet und verarbeitet werden. Für eine genaue Koordination der Fahrzeuge besonders bei der Überladung von Erntegut und besonders für die Fahrzeuge in der Nähe des Erntefahrzeugs, ist die Verwendung des Erntefahrzeuges als zentrale Einrichtung besonders vorteilhaft und es wird hierdurch eine weitere Verbesserung des Arbeitsablaufes durch eindeutige, klare Fahranweisungen, eine Vermeidung von Verlusten, Stillstandszeiten und Kollisionen erreicht. Der Bediener des Erntefahrzeuges erhält vorteilhaft die Möglichkeit, sämtliche Fahrzeuge in der Nähe des Erntefahrzeuges, mittels der Steuerung der Vorgabe der Fahrzeugpositionen zu koordinieren. Von dem Erntefahrzeug aus können weiterhin die gewünschten relativen Abstände der Fahrzeuge untereinander bestimmt werden, indem die einzelnen Sollpositionen entsprechend manuell von dem Fahrzeugbediener vorgegeben und beeinflußt oder von diesem aus einem Speicher abgerufen oder aber auch von den einzelnen Fahrzeugen mittels der Datenübertragungsstrecke abrufbar bereit gehalten werden.

In einer weiteren Ausgestaltung der Erfindung sind in einem Speicher bestimmte Fahrzeugkonstellationen, das heißt wenigstens zwei Positionsvorgaben in einer vorgegeben Konstellation zu der Position des Erntefahrzeuges vorab abgelegt worden. Diese können dann vorteilhaft entsprechend einer bestimmten zugeordneten Situation abgerufen und als Vorgabe für die einzelnen Fahrzeuge verwendet werden.
Ferner ist es durch eine zentrale Verwaltung und Koordination der einzelnen Positionsvorgaben vorteilhaft möglich, bestimmte Fahrzeugbewegungen von dem Bediener des Erntefahrzeugs automatisch durchführen zu lassen. Ist beispielsweise ein Transportbehälter befüllt, kann von dem Bediener des Erntefahrzeuges die Befüllung eines anderen Transportbehälters, durch einen automatisierten Wechsel des Transportfahrzeuges gestartet werden. Dafür wird dann das weitere nachfolgende Transportfahrzeug, mittels einer dafür für dieses Fahrzeug erzeugten sich ändernden Positionsvorgabe über die Datenübertragungsstrecke so gesteuert, daß ein einfacher Wechsel der Überladung von Erntegut auf das weitere Fahrzeug ermöglich wird. Der Bediener des Erntefahrzeuges muß dann lediglich die Überladeeinrichtung durch ein Steuerbefehl so steuern, daß der Gutstrom von dem befüllten Transportfahrzeug auf den weiteren Transportbehälter gelenkt wird. Der gestartete automatische Ablauf des Fahrzeugwechsels, kann dann weiterhin für das befüllte Transportfahrzeug so lange erfolgen, bis dieses Fahrzeug den Sendebereich der Datenübertragungsstrecke verläßt oder das nun an der Überladung beteiligte Transportfahrzeug die optimale Überladeposition gegenüber dem Erntefahrzeug erreicht hat. Erst dann kann dann der automatisierte Wechsel der Transportfahrzeuge beendet werden.
Die zentrale Koordination der einzelnen Fahrzeuge ist ferner besonders vorteilhaft, weil dadurch die einzelnen Einrichtungen auf den weiteren Fahrzeugen einfach ausgestaltet werden können. Diese weiteren Einrichtungen haben dann lediglich die Aufgabe, zumindest die beiden Positionen der Fahrzeuge zu verwalten und die Datenübertragungsstrecke zu steuern. Über gegebenenfalls vorhandene Schnittstellen, erfolgt dann die abhängige Steuerung des jeweiligen Transportfahrzeuges in Abhängigkeit von dem Erntefahrzeug zu den weiteren Einrichtungen im Fahrzeug wie beispielsweise dem Autopilot oder dem Fahrantrieb. Ein eventuell vorhandenes Bus-System auf dem Fahrzeug kann ferner, in bekannter Weise, die Vernetzung und Übertragung der Informationen über die Positionen, Fahranweisungen beziehungsweise über den Status des jeweiligen positionssendenden Fahrzeuges vornehmen und auch eventuelle eine Anzeige zur Fahrzeugbedienerinformation steuern.

Der momentane Status eines Fahrzeuges kann weiterer Bestandteil der mittels der Datenübertragungsstrecke übertragbaren Informationen sein. Das Erntefahrzeug bekommt diesen Status dann jeweils einem Transportfahrzeug zugeordnet mitgeteilt und abhängig davon wird eine entsprechende automatische Koordination erfindungsgemäße von dem Erntefahrzeug aus vorgenommen. So meldet sich ein Transportfahrzeug, beispielsweise beim Einfahren in den Sendebereich der Datenübertragungsstrecke des Erntefahrzeuges, bei der zentralen Einrichtung erfindungsgemäß als Leerfahrzeug an. Diese Einrichtung erzeugt dann eine Positionsvorgabe für diese Fahrzeug in einem freien Bereich in der Nähe des Erntefahrzeuges. Dabei werden zumindest die Positionen von weiteren Fahrzeugen auf dem Bearbeitungsfeldes und eventuell auch entsprechende Abmessungen der Fahrzeuge beachtet. Mittels der Datenübertragungsstrecke bekommt dann dieses Fahrzeug eine Position vorgegeben. Für den Bediener des Transportfahrzeuges besteht dann die Möglichkeit, den eigenen Autopilot einzuschalten. Erfolgt dieses, wird das Transportfahrzeug automatisch in Abhängigkeit der eigenen Position und die des Erntefahrzeuges gesteuert. Dafür werden ständig neue Positionsvorgaben von der Einrichtung auf dem Erntefahrzeug generiert und an das Transportfahrzeug übermittelt. Diese wird eventuell zuvor auf dem Erntefahrzeug um einen vorgegebenen Betrag verschoben. Die übertragene Position wird dann ständig mit der eigenen Position verglichen und bei einer Abweichung eine entsprechendes Steuersignal zur Verringerung der Abweichung erzeugt.
Für die erfindungsgemäße zentrale Koordination von dem Erntefahrzeug aus, ist es besonders wichtig, dass alle Fahrzeuge in der Nähe des Erntefahrzeugs von ihr erfasst werden. Hierdurch lassen sich vorteilhaft Kollisionen vermeiden, denn an die Stelle eines nicht automatisch gesteuerten Fahrzeugs, darf kein weiteres Fahrzeug automatisch hin gesteuert werden.

In einer weiteren Ausgestaltung der Erfindung ist es erfindungsgemäß für die Koordination der Fahrzeuge vorgesehen, daß die einzelnen Fahrzeuge vor dem Starten der automatisierten Koordination, zuerst in die gewünschte relative Position zu dem weiteren Fahrzeug bewegt werden und dann beim Anmelden oder beim Starten der automatisierten Koordination der vorhandene relative Abstand als Soll-Abstand erkannt und als Vorgabe für die weitere Koordination festgelegt wird. Entspricht eventuell dieser Abstand nicht mehr dem Wunsch eines Fahrzeugbedieners, kann dieser vorteilhaft die Koordination unterbrechen, das Fahrzeug dann manuell in eine neue, gewünschte Position steuern und erneut die Koordination starten, mit der dann neuen, vorhandenen Abstandsvorgabe.

In einer weiteren Ausgestaltung der Erfindung, ist zumindest auf einem Fahrzeug eine Einrichtung vorhanden, die zumindest bei der Vorgabe einer Position zur Koordination eines weiteren Fahrzeuges, zumindest die aktuelle Position des Erntefahrzeuges und eine Einstellung der Übergabeeinrichtung berücksichtigt und entsprechend als eine Vorgabe verwendet. Dabei wird zumindest die Stellung der Überladeeinrichtung relativ zur der Fahrtrichtung beziehungsweise zu der Längsachse des Erntefahrzeuges an der entsprechenden Drehachse erfasst und der erfindungsgemäßen Einrichtung zur Verfügung gestellt. Da die Überladeeinrichtung selbst mit den entsprechenden Sensoren und Steuereinrichtungen auf diesem Erntefahrzeug vorhanden ist, befindet sich vorteilhaft auf diesem Fahrzeug auch die Einrichtung für eine ferngesteuerte Einstellung der Überladeeinrichtung.
Es ist erfindungsgemäß vorgesehen, daß zu Beginn einer automatischen Koordination, zumindest bei der Übernahme des relativen Abstandes der Positionen zueinander, als Soll- Positionsvorgabe, auch anhand der aktuellen Einstellung der Überladeeinrichtung ein relativer Abstand oder eine Position zu der eigenen Fahrzeugposition beziehungsweise zu der Position des weiteren Fahrzeuges ermittelt wird. Das heißt es werden mehrere Abstände bei dem Start der Koordination ermittelt und als Sollvorgaben für die weitere Koordination zugrunde gelegt. Bewegt sich beispielsweise dann das Transportfahrzeug relativ zu dem Erntefahrzeug weiter auf den parallel verlaufenden Fahrspuren vorwärts, so kann die Einrichtung zur Steuerung zumindest der Überladeeinrichtung, durch eine Verschwenkung so gesteuert werden, daß der zuvor ermittelte Abstand zwischen der navigierten Position des Transportfahrzeuges und dem theoretischen Auftreffpunkt von Erntegut auf den Transportbehälter beibehalten wird oder sich erneut einstellt.

Die Berücksichtigung der Einstellung der Überladeeinrichtung für eine Koordination von zumindest zwei Fahrzeugen, ermöglicht vorteilhaft die erfindungsgemäße Verwendung verschiedener Verfahren. Zum einen kann aus zumindest einer Position des Erntefahrzeuges und der Einstellung der Überladeeinrichtung eine abhängige Positionsvorgabe für das Transportfahrzeug erzeugt und zum anderen kann aus zumindest den jeweiligen Positionen der am Überladeprozeß beteiligten Fahrzeuge, eine Einstellung für die Überladeeinrichtung abgeleitet werden. Ein entsprechendes Verfahren, welches beide vorherigen Verfahren beinhaltet, ist außerdem denkbar und kann dann besonders vorteilhaft sein, wenn beide Fahrzeuge manuell bedient werden. Eine manuelle Veränderung des relativen Abstandes der Fahrzeuge zueinander bewirkt dann eine korrigierte Einstellung der Überladeeinrichtung. Ebenso bewirkt dann eine Veränderung der Einstellung der Überladeeinrichtung eine korrigierte Vorgabe der Position und damit einen korrigierten relativen Abstand der Fahrzeuge zueinander. Die vorgenannten Verfahren bewirkt vorteilhaft eine Reaktion von der erfindungsgemäßen Vorrichtung derart, daß das Erntegut etwa auf die gleiche Stelle an den Transportbehälter überladen wird. Nach welchem Verfahren nun die Koordination der Fahrzeuge und die Steuerung der Überladeeinrichtung durchgeführt werden soll, wird dem Bediener des jeweiligen Fahrzeuges mittels Auswahl- und Einstellmöglichkeit überlassen. Die Verwendung eines Verfahren kann auch anhand der verwendeten Überladeeinrichtung ausgewählt und durch die Art der Überladung und der damit verbundenen Ausgestaltung der erfindungsgemäßen Vorrichtung bestimmt werden.

In einer vorteilhaften Weiterbildung der Erfindung, wird die Vorgabe der Position für zumindest das an dem Überladeprozeß beteiligte Fahrzeug entsprechend der Stellung der Überladeeinrichtung automatisch vorgegeben. Vorteilhaft ergibt dies, daß der Bediener des Erntefahrzeuges mittels der Einstellung der Überladeeinrichtung, bezogen auf die Position des Erntefahrzeuges, die Seite der Überladung vorwählt kann, an welcher das zu beladene Transportfahrzeug bei der Überladung von Erntegut fahren sollte. Die Auswahl der Seite gibt dann automatisch die Überladerichtung bezüglich des Erntefahrzeuges vor und veranlaßt dann eine entsprechende Erzeugung einer Vorgabe zumindest einer Position für wenigstens das am Überladeprozeß beteiligte Transportfahrzeug. Diese Vorgabe wird dann erfindungsgemäß an das entsprechende Transportfahrzeug übermittelt und in einer dortigen Einrichtung zur Koordination des Transportfahrzeuges verwendet. Der Bediener des Erntefahrzeuges verschenkt beispielsweise die Überladeeinrichtung in Fahrtrichtung gesehen nach links. Diese Stellung der Überladeeinrichtung wird von der Einrichtung auf dem Erntefahrzeuge erkannt und dann in Verbindung mit der aktuellen Position des Erntefahrzeuges eine Positionsvorgabe für das Transportfahrzeug erzeugt. Diese Vorgabe wird in Bezug auf die aktuelle Position des Erntefahrzeuges und entsprechend der Stellung der Überladeeinrichtung beispielsweise so erzeugt, daß die Position des Erntefahrzeuges um einen Betrag von 10m senkrecht zur Fahrtrichtung des Erntefahrzeuges nach links und um einen weiteren Betrag von 10m in Fahrtrichtung des Erntefahrzeuges verschoben und dann an das Transportfahrzeug übertragen wird. Diese Verschiebeparameter können konstante Vorgabewerte oder auch wie zuvor beschrieben ein Abstandswert sein.
Ist das Erntefahrzeug mit einer starren Überladeeinrichtung ausgestattet, wie beispielsweise mit einem Kettenförderer an einem Rübenroder, ist prinzipiell eine Berücksichtigung der Einstellung der Überladeeinrichtung nur derart möglich, daß hierbei nur spezifische Überladeparameter, wie Stellung Transport/ Überladung, Ausladung, Fördermenge oder -geschwindigkeit und eventuell auf den Überladeprozeß von außen einwirkende Parameter, wie beispielsweise Wind oder Feuchtigkeit, von der erfindungsgemäßen Vorrichtung entsprechend bei der Koordination der Fahrzeuge berücksichtigt werden können. Eine Variation zumindest eines dieser Parameter hat an solchen Überladeeinrichtungen lediglich einen Einfluß auf die Überladeweite, die relative Richtung der Überladung bezogen auf die Fahrzeuglängsachse ist konstant. Vielmehr ist in solchen Fällen der Überladung eine Bereitstellung einer Vorgabe der Position für ein Transportfahrzeug mittels der Datenübertragungsstrecke in Abhängigkeit der Stellung der Überladeeinrichtung besonders vorteilhaft. In der Transportstellung der Überladeeinrichtung ist in der Regel keine Überladung von Erntegut auf ein Transportfahrzeug möglich, so daß dann auch in dieser Stellung der Überladeeinrichtung keine Vorgabe der Position für ein Transportfahrzeug für eine entsprechende Koordination eines Fahrzeuges an der Überladestelle erfolgt. Vorteilhaft wird erreicht, daß entsprechend der jeweiligen Stellung der Überladeeinrichtung, eine Vorgabe der Position für das Transportfahrzeug erzeugt oder das entsprechende Verfahren zur Ermittlung der Parameter für die Koordination der Fahrzeuge ausgewählt wird.
Kann dagegen die Einstellung der Überladeeinrichtung beziehungsweise der einstellungsabhängige Auftreffpunkt/ Überladepunkt von Erntegut auf den Transportbehälter auch während des Überladeprozeßes in der relativen Position zu dem Erntefahrzeug verändert werden, ist eine Koordination und insbesondere die Vorgabe einer Position und zumindest ein relativen Abstandes für die oder zwischen den beiden an dem Überladeprozeß beteiligten Fahrzeuge, zumindest in Verbindung mit der Position des Erntefahrzeuges und der Einstellung der Überladeeinrichtung vorteilhaft möglich. Entsprechend der Einstellung der Überladeeinrichtung wird dann die Vorgabe der Position an das weitere Fahrzeug erzeugt und übertragen. Eine Bewegung der Überladeeinrichtung beziehungsweise einer Veränderung der Einstellung bewirkt automatisch eine Veränderung der Übergabeposition auf dem Transportfahrzeug und hat eine entsprechende erfindungsgemäße Reaktion wenigstens eines weiteren Fahrzeuges zur Folge. Die Vorgabe der Position an das entsprechend Fahrzeug wird verfahrensgemäß entsprechend der Veränderung der Einstellung der Überladeeinrichtung verändert. Hiermit wird dem Erntefahrzeugbediener vorteilhaft die Möglichkeit gegeben, das entsprechende Transportfahrzeug mittels der Steuerung für die Überladeeinrichtung auch manuell zu koordinieren um beispielsweise das Transportfahrzeug in eine veränderte relative Position zum Erntefahrzeug zu bewegen, ohne dabei den Auftreffpunkt des Erntegutes auf den Transportbehälter zu verändern. Dieses Verfahren der Steuerung ist besonders dann von Nutzen, wenn der Bediener beispielsweise aufgrund von sich ändernden Bearbeitungsfeldeigenschaften, wie beispielsweise eine geänderte Hangneigung, eine Veränderung des Abstandes zu dem Transportfahrzeug als erforderlich ansieht oder wünscht.

Im erfindungsgemäßen Verfahren, wird zumindest aus einer Position des Erntefahrzeuges und aus zumindest einer Position eines Transportfahrzeuges die Einstellung der Überladeeinrichtung berechnet und für eine entsprechende Einstellung verwendet. Durch dieses erfindungsgemäße Verfahren wird vorteilhaft erreicht, daß zumindest die aktuelle Position des Transportfahrzeuges bei der Einstellung der Überladeeinrichtung automatisch berücksichtigt wird. Hierdurch wird eine weitere Verbesserung der erfindungsgemäßen Vorrichtung erreicht, indem die Überladeeinrichtung automatisch auf eine geänderte relative Ausrichtung der Fahrzeuge zueinander, mit einer automatischen Korrektur der Einstellung der Überladeeinrichtung reagiert, die dann zumindest die Einhaltung des Auftreffpunktes von Erntegut auf den Transportbehälter auch weiterhin ermöglicht. Werden beispielsweise beide an dem Überladeprozeß beteiligte Fahrzeuge unabhängig voneinander gesteuert, so wird vorteilhaft durch dieses Verfahren eine sichere Überladung von Erntegut auf ein Transportbehälter gewährleistet. Beide Fahrzeuge sind mit einer Navigationseinrichtung ausgestattet und zumindest eine Position wird mittels der Datenübertragungsstrecke an das weitere Fahrzeug übertragen. Anhand der Positionen kann ein relativer Abstand und auch anhand der Einstellung der Überladeeinrichtung ein theoretischer Auftreffpunkt des Erntegutes auf den Transportbehälter errechnet werden. Erfindungsgemäß wird aus den Positionen der Fahrzeuge eine Einstellung der Überladeeinrichtung errechnet, die einen Auftreffpunkt des Erntegutes auf den Transportbehälter ermöglicht. Beispielsweise werden beide Fahrzeuge jeweils von einem Fahrzeugbediener von Hand in Parallelfahrt auf einem Bearbeitungsfeld gesteuert. Anhand der bekannten geometrischen Abmessungen des Transportfahrzeuges und der aktuellen Positionen der Fahrzeuge, wird in wenigstens einer Einrichtung auf dem Erntefahrzeug eine Einstellung der Überladeeinrichtung berechnet, die einen Auftreffpunkt des Erntegutes mittig auf den Transportbehälter ergibt. Ändert sich dann der relative Abstand der Fahrzeuge zueinander, wird anhand des erfindungsgemäßen Verfahrens die Überladeeinrichtung so nachgesteuert oder geregelt, daß sich vorteilhaft der zuvor erzielte Auftreffpunkt erneut einstellt. Sollte der Transportbehälter an einer Stelle ausreichend gefüllt sein, kann ein Fahrzeugbediener die Einstellung der Überladeeinrichtung manuell so ändern beziehungsweise an die Transportbehälterabmessungen anpassen, daß der Transportbehälter an einer weiteren Stelle befüllt wird. Aufgrund der Veränderung der Einstellung der Überladeeinrichtung, wird vorteilhaft in der entsprechenden Einrichtung, der neue erwünschte theoretische Überladepunkt/ Auftreffpunkt relativ zu den Fahrzeugpositionen und den Einstellungen der Überladeeinrichtung ermittelt und für die weitere Überladung so lange als Vorgabe übernommen bis eine weitere manuelle oder automatische Änderung des Überladepunktes erfolgt. Die Einstellungen der Überladeeinrichtung ändert sich automatisch dann, wenn sich der relative Abstand, der am Überladeprozeß beteiligten Fahrzeuge zueinander verändert. Hierdurch wird eine enorme Verbesserung der Überladung von Erntegut auf ein weiteres Fahrzeug erzielt. Des weiteren werden weniger Ernteverluste verursacht, da die Einstellung der Überladeeinrichtung, zumindest innerhalb der möglichen Einstellbereichen, automatisch der Position des Transportbehälters angepasst wird. Beide Fahrzeugbediener müssen lediglich darauf achten, das der Behälter an dem momentanen Auftreffpunkt nicht überfüllt wird und dann Erntegut verloren geht.
In einem weiteren Ausgestaltung der Erfindung, wird zumindest aus einer Position des Erntefahrzeuges und aus zumindest einer Position eines Transportfahrzeuges und aus der Einstellung der Überladeeinrichtung eine Vorgabe für die Einstellung der Überladeeinrichtung und/oder eine Positionsvorgabe für mindestens ein Transportfahrzeug berechnet und entsprechend zur Einstellung beziehungsweise als Vorgabe verwendet. Hierdurch wird vorteilhaft eine besonders flexible Koordination der einzelnen Fahrzeuge erreicht. Die Einstellung der Überladeeinrichtung nimmt erfindungsgemäß einen Einfluß auf die Vorgabe der Fahranweisung für das Transportfahrzeug und wird erfindungsgemäß auch von der Position des Transportfahrzeuges beeinflußt. Dies erbringt den Vorteil, daß dann, wenn die aktuelle Position des Transportfahrzeuges von der vorgegeben Position abweicht, sei es durch eine gewollte oder ungewollte manuelle Fahrzeugbedienung oder durch eine Regelabweichung in einem Autopilot, die Einstellung der Überladeeinrichtung automatisch an diese Abweichung angepasst wird und somit ein eventueller Verlust von Erntegut verhindert wird.

In einer vorteilhaften Weiterbildung der Erfindung, steht erfindungsgemäß wenigstens eine Einrichtung mit mindestens einem Mittel in Verbindung, welches mindestens einen Parameter des Ernteprozesses, wie beispielsweise die Erntegutart oder den Windeinfluß beziehungsweise mindestens einen Parameter eines Fahrzeuges, wie beispielsweise die Transportbehälterabmessungen oder die Fahrzeugabmessungen, erfasst. Erfindungsgemäß wird dann bei dem Vorhandensein von mindestens einen auf den Überladeprozeß einflußnehmenden Parameter, die berechnete Einstellung beziehungsweise die berechnete Vorgabe entsprechend korrigiert und erst dann entsprechend an mindestens einem Fahrzeug eingestellt oder an mindestens ein Fahrzeug übertragen.
Durch die Einbeziehung weiterer Parameter bei der Einstellung der Überladeeinrichtung oder der Berechnung einer Positionsvorgabe für ein weiteres Fahrzeug, wird eine weitere Verbesserung der erfindungsgemäßen automatischen Steuerung zumindest des Abstandes der Fahrzeuge erreicht. Eine genauere Berechnung des theoretischen Auftreffpunktes des Erntegutes auf den Transportbehälter kann vorteilhaft durchgeführt werden. Die spezifische Dichte, Struktur und Stoffeigenschaft jedes Erntegutes fließt somit in die Berechnung eine und stellt zumindest bei der Bestimmung und Vorgabe des Abstandes des Erntefahrzeuges zum Transportfahrzeuges eine Verbesserung dar. Die automatische Einbeziehung zumindest eines Parameters, ermöglicht ferner eine selbsttätige Anpassung der Fahrzeugkoordination an die sich ändernden Parameter des Ernteprozeßes. Änderungen in der Erntegutfeuchte oder der -dichte haben somit automatisch einen Einfluß auf die Vorgabe der Position an ein weiteres Fahrzeug, insbesondere auf das momentan erntegutaufnehmende Transportfahrzeug.
Ferner ist es vorgesehen, die einzelnen Fahrzeugeinstellungen des Erntefahrzeuges, wie die Motordrehzahl, Drehzahl der Bearbeitungseinrichtung, Einzugsgeschwindigkeit, Drehzahl des Wurfbeschleunigers und weitere fahrzeugspezifische und emtegutspezifische Parameter zu berücksichtigen, zumindest solche Parameter, die auf die Förder- und Überladeeigenschaften des Erntegutes einen Einfluß haben. Besonders vorteilhaft ist es, auf dem Erntefahrzeug und insbesondere an der Überladeeinrichtung eine Einrichtung zur Bestimmung des Windes anzubringen und den Einfluß des Windes auf die Überladung zu bestimmen und bei der Steuerung beziehungsweise bei der Koordination der Fahrzeuge zu berücksichtigen. Eine Änderung der Einstellung der Überladeeinrichtung erfolgt dann automatisch bei einer Änderung des zusätzlich berücksichtigten Parameters des Überladeprozeßes. Die erfindungsgemäße Vorrichtung reagiert nach dem erfindungsgemäßen Verfahren vorteilhaft mit einer veränderten Einstellung der Überladeeinrichtung oder Vorgabe der Position derart, daß ein gewünschter Überladepunkt annähernd beibehalten wird.
Für die automatische Vorgabe der Position für das momentan erntegutaufnehmende Transportfahrzeug und für die Ermittlung der Einstellung der Überladeeinrichtung, stellt die Berücksichtigung der Abmaße der beteiligten Fahrzeuge eine weitere Verbesserung dar. Anhand der navigierten Position, der Fahrspur des Transportfahrzeuges und der Abmessung des Fahrzeuges, läßt sich in Bezug auf ein aktuelle Position der Bereich ermitteln, in welchem sich das Transportfahrzeug befindet. Bei der erfindungsgemäßen Berücksichtigung weiterer Abmaße des Fahrzeuges kann auch der Bereich ermitteln werden, in welchem sich derzeit der Transportbehälter befindet. In Abhängigkeit dieser Informationen ist es nun vorteilhaft möglich, das Transportfahrzeug so zu koordinieren, daß sich der Transportbehälter zumindest in dem Überladebereich befindet, der von der Überladeeinrichtung zur Überladung von Erntegut an das Transportfahrzeug geeignet und erreichbar ist. Die Abmessungen des Transportfahrzeuges können vorteilhaft mittels der Datenübertragungsstrecke einmalig oder bei jedem erneuten Start einer Koordination an die Einrichtung übergeben werden, die eine Vorgabe der Position für das Transportfahrzeug in Bezug auf die Position des weiteren Fahrzeuges, insbesondere des Erntefahrzeuges ermittelt.

In einer weiteren Ausgestaltung der Erfindung, kann wenigstens ein Einrichtung in einem Fahrzeug zusätzlich mit mindestens einem Mittel zur Ermittlung von fahrzeugspezifischen Größen, wie beispielsweise die Fahrgeschwindigkeit, die Zuladung oder die Ertragsmenge beziehungsweise zur Ermittlung von Sicherheitsgrößen, wie beispielsweise den relativen Mindestabstand, in Verbindung steht.
Dies erbringt eine weitere Verbesserung der jeweiligen Berechnungen, indem noch weitere Einflußgrößen berücksichtigt werden können und erfindungsgemäß eine weitere Verbesserung bei der erfindungsgemäßen Überladung und Koordination von Fahrzeugen. Durch die Berücksichtigung der Fahrgeschwindigkeit der einzelnen Fahrzeuge können gewisse Sicherheitsfaktoren und Einstellungen geschwindigkeitsabhängig eingestellt und vorgegeben werden. So kann beispielsweise der Mindestabstand zwischen den Fahrzeugen bei der Koordination entsprechend vorgegeben werden. Die Einbeziehung der Ertragsmenge oder des momentanen Gutdurchsatzes erbringt einen weiteren Vorteil für die Berechnung oder eine Abschätzung der Befülldauer eines Behälters und die davon abhängige Koordination des Transportfahrzeuges und der folgenden Leerfahrzeuge. So ist es durchaus denkbar, die Koordination zumindest eines Fahrzeugs vorteilhaft anhand der überladenen Erntemenge an den Transportbehälter mit bekannter Größe durchzuführen. Ferner ist es vorteilhaft möglich die Beladung der Transportbehälter nur bis an die zulässige Zuladung heran durchzuführen oder die Vorgabe der Position an das am Überladeprozeß beteiligte Transportfahrzeug in gewissen Bereichen zu variieren, um eine gleichmäßige Verteilung der Gutmenge auf dem Transportbehälter zu erreichen. Die fahrzeugspezifischen Größen können Meßgrößen oder ferner auch einfache Fahrzeugparameter sein und mittels der Datenübertragungsstrecke lediglich an zumindest ein weiteres Fahrzeug übertragen werden und dort informativ zur Anzeige gebracht werden oder auch dort eine entsprechende weitere Verwendung finden.

In einer weiteren Ausgestaltung der Erfindung kann es vorgesehen sein, daß eine Änderung der Einstellung der Überladeeinrichtung nur aufgrund einer Änderungen der relativen Ausrichtung der Fahrzeug zueinander erfolgt. Vorteilhaft kann eine Berechnung der Lage des Überladepunktes entfallen. Es muß lediglich beim Start der Koordination der Fahrzeuge darauf geachtet werden, daß in diesem Startmoment die Überladung mit einer Einstellung der Überladeeinrichtung vorgenommen wird, welche zu einer Überladung von Erntegut in den Transportbehälter geeignet ist. Liegt diese Einstellung der Überladeeinrichtung beim Starten der Koordination nicht vor, kann der Bediener des Erntefahrzeuges jederzeit durch beispielsweise eine manuelle Veränderung der Einstellung der Überladeeinrichtung, diese Einstellung so lange verändern, bis eine zufriedenstellende Einstellung erreicht wird. Durch dieses vereinfachte Verfahren läßt sich der Berechnungsaufwand und der Aufwand an weiteren Sensoreinrichtungen begrenzen.

Bei einem Start der Koordination kann es ferner erfindungsgemäß so vorgesehen sein, daß die Vorgabe der Position für das Transportfahrzeug abhängig von der Position des Erntefahrzeuges, der Einstellung der Überladeeinrichtung, den Abmessungen des Transportfahrzeuges und eventuell vorhanden weiteren Parametern zuerst so vorgenommen wird, daß Erntegut auf die Mitte des Transportbehälters übergeben wird. Hiermit wird zuverlässig erreicht, daß zu Beginn der Überladung auf einen leeren Transportbehälter der Erntegutstrom in den Transportbehälter trifft und kein Erntegut verloren geht. Diese Startsteuerung ist beispielsweise nur so lange aktiv, bis der Bediener der Überladeeinrichtung eine manuelle Korrektur der Einstellung der Überladeeinrichtung oder des relativen Abstandes durchführt beziehungsweise ein anderes Verfahren zur Koordination vorgibt. Gegenüber der Vorgabe eines festen, relativen Abstandes, beispielsweise durch eine fahrzeugbezogene Auswahl eines Abstandes aus einem Speicher, oder einer manuellen Koordination des Transportfahrzeuges bis zum Starten der automatischen Koordination, hat diese Art der automatischen Vorgabe der Position für das Transportfahrzeug, den besonderen Vorteil, daß viele selbst für die Fahrzeugbediener unbekannte Fahrzeug- und Erntegutparameter schon zu Beginn der Koordination bei der Vorgabe berücksichtig werden und dies insbesondere beim Starten der Übergabe zu einer verbesserten Überladung und Vermeidung von Ernteverlusten führt.

In einer weiteren Ausgestaltung der Erfindung, ist mindestens einem Fahrzeug, vorzugsweise auf einem selbstfahrenden Erntefahrzeug, eine Einrichtung vorhanden, die mit einer Bearbeitungsfeldkarte des momentanen Bearbeitungsfeldes in Verbindung steht. Diese Bearbeitungsfeldkarte kann in digitaler Form auf einem Datenträger oder in einem Speicher in der erfindungsgemäßen Einrichtung vorhanden sein oder laufend aufgezeichnet werden. Anhand zumindest der navigierten Position des Erntefahrzeuges auf dem Bearbeitungsfeld, kann in Verbindung mit der Bearbeitungsfeldkarte die Überladerichtung beziehungsweise die Koordination weiterer Fahrzeuge auf dem Bearbeitungsfeld vorteilhaft automatisch vorgewählt werden. Dabei überprüft die Einrichtung anhand der vorhandenen Karte und der momentanen Position des Erntefahrzeuges, in welcher relativen Richtung zum Erntefahrzeuges zumindest sich schon bearbeitetes Feld befindet. Zu Beginn der Feldbearbeitung, ist dies nur hinter dem Erntefahrzeug der Fall und es wird dann nur der Feldbereich und die zugehörige Überladerichtung in Richtung der zurückliegenden Fahrspur des Erntefahrzeuges ausgewählt. Dies setzt natürlich voraus, daß sich neben dem Bearbeitungsfeld kein für das Transportfahrzeug befahrbarer Feldbereich, wie beispielsweise ein Weg befindet. Diese Angabe kann ferner in einer zuvor in der Einrichtung hinterlegten Bearbeitungsfeldkarte beinhaltet sein. Befinden sich in mehreren Richtungen bezüglich des Erntefahrzeuges ein bearbeiteter Feldbereich oder sind Fahrbereiche außerhalb des Bearbeitungsfeldes für Transportfahrzeuge bekannt, so wird vorrangig eine Überladerichtung zumindest annähernd senkrecht zur Längsachse des Erntefahrzeuges ausgewählt. Durch diese Einrichtung wird vorteilhaft ein weitere Erleichterung für die Bediener der Fahrzeuge erreicht, indem sich die Überladeeinrichtung und wenigstens die Vorgabe einer Position für ein Transportfahrzeug automatisch an die für den Bediener logische entsprechende Einstellung beziehungsweise Vorgabe einstellt. Manuelle Betätigungen können somit vermindert werden und die mögliche Konzentration der Bediener auf den Ernteprozeß erhöht werden.

In einer Weiterbildung der Erfindung ist auf mindestens einem Fahrzeug, vorzugsweise auf einem selbstfahrenden Erntefahrzeug, eine Anzeigeeinrichtung vorhanden, auf welcher die jeweilige, eigene Position und die Position eines weiteren Fahrzeuges in Verbindung mit zumindest einem Teil der Bearbeitungsfeldkarte angezeigt wird. Durch diese erfindungsgemäße Anzeigeeinrichtung bekommt der Fahrzeugbediener und insbesondere der Bediener des Erntefahrzeuges die Möglichkeit, automatische Reaktion von Einrichtungen auf wenigstens dem eigenen Fahrzeug nachvollziehen zu können. Ferner kann er insbesondere bei Dunkelheit den umliegenden Bearbeitungsfeldbereich, relativ zum Erntefahrzeug auf der Anzeige einsehen. Wird das ganze Bearbeitungsfeld auf der Anzeigeeinrichtung angezeigt, ermöglicht dies den völligen Überblick über alle auf dem Bearbeitungsfeld befindlichen Fahrzeuge und den Vergleich zwischen der bearbeiteten und der unbearbeiteten Feldfläche.

In einer weiteren Ausgestaltung der Erfindung, ist die Anzeigeeinrichtung ein Touchscreenmonitor, mittels welchem der Fahrzeugbediener des Erntefahrzeuges beispielsweise ein angezeigtes Transportfahrzeug zur Befüllung mit Erntegut auswählen kann. Die Verwendung einer solchen Anzeige- und Eingabeeinrichtung vereinfacht den Bedienungsaufwand für die gesamte erfindungsgemäße Vorrichtung erheblich. Ein Touchscreenmonitor ermöglicht eine einfache Eingabe und Anzeige von Befehlen zur Auswahl von Bedienungsvorgaben und Einstellungen. Jegliche Art von Auswahlmöglichkeit kann in der Anzeige leicht erzeugt und durch einfache Berührung des Monitors an der entsprechenden Stelle ausgewählt werden. Die Auswahl eines Fahrzeuges, an welches nun Erntegut überladen werden sollte, kann durch eine einfache Berührung des Positionspunktes auf der Anzeigefläche erfolgen. So lassen sich auch ferner die angezeigten Vorgaben von Positionen für die Koordination von Fahrzeugen, durch eine Berührung der angezeigten Position und eine anschließende Verschiebung derselben, leicht an neue Bedingungen und Wünsche der Bediener anpassen. Meldet sich ferner beispielsweise ein Leerfahrzeug an der zentralen Einrichtung für die Koordination der Fahrzeuge an oder erscheint ein Position eines Transportfahrzeuges neu auf der Anzeigeeinrichtung, so kann der Fahrzeugbediener einfach dieses Fahrzeug durch eine Berührung der Position und anschließende Berührung einer Vorgabe einer angezeigten freien Position oder Positionsvorgabe zuordnen. Die Anzeige von Informationen auf der Anzeige ist nicht nur auf die Anzeige von Positionspunkten beschränkt, sondern läßt sich bis zu einer Anzeige der kompletten jeweiligen Kontur des Fahrzeuges und eventuell mit weiteren Angaben und Kennungen beziehungsweise der Darstellung des Bearbeitungsfeldes ausgestalten. Für den Bediener ergibt sich durch diese Ausführungsvariante, eine genaue visuelle Überwachung aller Vorgänge und Bewegungen auf dem Bearbeitungsfeld sowie eine leichte Bedienung und Auswahl von Einstellungen der erfindungsgemäßen Vorrichtung.

Auf dem Erntefahrzeug ist in der Regel auch ein Betätigungsmittel zur manuellen Steuerung der Einstellung der Überladeeinrichtung vorhanden. Diese Betätigungsmittel können auch mehrfach ausgeführt sein, so daß ein Betätigungsmittel erfindungsgemäß auch auf dem Transportfahrzeug angeordnet sein kann. Mittels zumindest eines dieser Betätigungsmittel, bekommt der jeweilige Fahrzeugbediener die Möglichkeit direkt oder mittels der Datenübertragungsstrecke auf die Einstellung der Überladeeinrichtung einflußzunehmen. Manuelle Betätigungen werden dann von der Einrichtung zur automatischen Einstellung der Überladeeinrichtung als manuelle Betätigungen erkannt und als Korrektureinstellungen für die Überladeeinrichtung berücksichtigt. Eine manuelle Veränderung der Einstellung bewirkt somit eine entsprechende direkte Veränderung der Einstellung der Überladeeinrichtung und hat zur Folge, daß die erfindungsgemäße automatische Steuerung der Überladeeinrichtung hierbei nicht unterbrochen wird. Diese direkte manuelle Veränderung der Einstellung der Überladeeinrichtung bewirkt erfindungsgemäß keine automatische Änderung der Positionsvorgabe an das weitere Fahrzeug, sondern wird als eine Änderungen erkannt, die als neue Basiseinstellung für eine folgende automatisch vorgenommene Änderung der Einstellung der Überladeeinrichtung zugrunde zugelegt wird. Der Bediener der Überladeeinrichtung bekommt vorteilhaft hierdurch jederzeit die Möglichkeit, anhand des im bekannten Verfahrens, die Einstellung der Überladeeinrichtung seinen Wünschen und den jeweiligen Erntebedingungen anpassen zu können, ohne dabei die erfindungsgemäße automatische Koordination der Fahrzeuge beziehungsweise die erfindungsgemäße automatische Einstellung der Überladeeinrichtung zu deaktivieren.

In einer vorteilhaften Ausgestaltung der Erfindung, wird ein theoretischer Auftreffpunkt des Erntegutes auf den Transportbehälter berechnet, mit mindestens einer Position des Transportfahrzeuges und den entsprechenden Abmessungen des Transportbehälters verglichen und zumindest dann eine Warnmeldung erzeugt, wenn der theoretische Auftreffpunkt außerhalb des Transportbehälters liegt. Vorteilhaft wird der Warnhinweis mittels der Datenübertragungsstrecke an den Bediener des weiteren Fahrzeugs übertragen. Eine beiderseitige Benachrichtigung ist weiterhin vorteilhaft, da auch das Transportfahrzeug, durch eine entsprechende Änderung der relativen Ausrichtung des Transportfahrzeuges zu dem Erntefahrzeug oder durch eine entsprechende manuelle Betätigung der Überladeeinrichtung, Verursacher des Warnhinweises sein kann. Durch die erfindungsgemäße Generierung eines Warnhinweises wird die Erfindung weiter verbessert, indem der Bediener der Überladeeinrichtung oder des Transportfahrzeuges, bei einer Fehlbedienung mit einem drohenden Verlust von Erntegut, durch eine Warnhinweis darüber benachrichtigt wird und dann entsprechend reagieren kann.

In einer weiteren Ausgestaltung der Erfindung, wird eine von einem Fahrzeugbediener beabsichtigte, manuelle Verstellung der Einstellung der Überladeeinrichtung beziehungsweise die Vorgabe zumindest einer Position an ein weiteres Fahrzeug dann unterbunden, wenn dieses zu einem theoretischen Auftreffpunkt des Erntegutes außerhalb des Transportbehälters führen würde. Hierdurch wird vorteilhaft erreicht, daß der Bediener der Überladeeinrichtung, bei einer entsprechenden Betätigung der Überladeeinrichtung, die Überladeeinrichtung nicht so verstellen kann, daß Erntegut neben den Transportbehälter überladen würde. Besonders vorteilhaft ist dies für die Vermeidung von Fehlbedienungen und Verlusten, wenn der jeweilige Bediener schon längere Zeit auf dem Fahrzeug sitzt und ermüdet ist oder wenn bei einsetzender Dunkelheit die Konturen der Fahrzeuge nicht mehr genau erkannt werden können. Das jeweilige Ausbleiben einer Reaktion auf eine Betätigung oder das Stoppen der entsprechenden Reaktion auf eine Betätigung, zeigt dann dem Fahrer die beabsichtigte oder bevorstehende Überschreitung einer Einstellgrenze und Überladung außerhalb des Transportbehälters vorteilhaft an. Eine vorteilhafte kombinierte Reaktion, bestehend aus einem Warnhinweise und einem gleichzeitigen oder späteren Unterbinden der Reaktion, auf die manuelle Betätigung ist weiterhin denkbar.

In einer weiteren Ausgestaltung der Erfindung, wird bei einer von einem Fahrzeugbediener beabsichtigten, manuellen Veränderung des Auftreffpunktes des Erntegutes auf den Transportbehälter, bei der Überschreitung mindestens eines vorgegebenen Arbeitsbereiches der Überladeeinrichtung, die relative Position des Transportfahrzeuges derart verändert, daß sich die von dem Fahrzeugbediener beabsichtigte, manuelle Veränderung des Auftreffpunktes einstellt. Durch dieses Verfahren ergeben sich erhebliche Verbesserung der Koordination von Fahrzeugen auf einem Bearbeitungsfeld sowie eine vorteilhafte Vermeidung von Erntegutverlusten. Besonders bei größeren, in Fahrtrichtung längeren Transportbehältern und auch bei aneinander angehängten Transportbehältern ist diese erfindungsgemäße Steuerung vorteilhaft. Die Einstellbereiche der Überladeeinrichtung werden nun erfindungsgemäß in einer Einrichtung hinterlegt, dabei werden die möglichen Einstellung der Überladeeinrichtung, für zumindest einen Überladebereich, den anhand von mittels Sensoren erfaßbaren Einstellgrenzen definiert zugeordnet. Vorteilhaft werden dann die definierten Bereiche zumindest an die mechanischen Einstellgrenzen der Überladeeinrichtung angepasst hinterlegt, wobei die Definition des Überladebereichs auch frei von dem Bediener, sinnvoll innerhalb der möglichen Einstellgrenzen, vorgegeben werden kann.
Befindet sich die Überladeeinrichtung mit ihren Einstellungen innerhalb des definierten Überladebereiches, bewirkt eine manuelle oder automatisierte Betätigung der Überladeeinrichtung eine Veränderung der Einstellung der Überladeeinrichtung und hat erfindungsgemäße keine Korrektur der Vorgabe der jeweiligen Position an zumindest das koordinierte Transportfahrzeug zur Folge. Erstreckt sich nun der mögliche Überladebereich nur auf einen Teilbereich des Transportbehälters, wird die Befüllung der momentan nicht erreichbaren Bereiche durch das erfindungsgemäße Verfahren einfach ermöglicht. Betätigt der Bediener des Erntefahrzeuges die Mittel, die für eine manuelle Veränderung der Einstellung der Überladeeinrichtung dienen und verläßt hierauf die Überladeeinrichtung den entsprechenden, definierten Überladebereich, wird dieses anhand zumindest eines Sensorsignals erkannt. Der Wunsch des Bedieners der Überladeeinrichtung wird nun vorteilhaft in eine Änderung der Vorgabe der Position für das Transportfahrzeug derart überführt, daß sich die von dem Fahrzeugbediener beabsichtigte, manuelle Veränderung des Auftreffpunktes auf dem Transportfahrzeug einstellt. Durch dieses Verfahren wird ein Betätigungselement für eine eventuelle Korrektur der Vorgabe der Position für das weitere Fahrzeug überflüssig. Verfahrensgemäß kann der Bediener der Überladeeinrichtung vorteilhaft mittels der Betätigungselemente für die Überladeeinrichtung die Vorgabe der Position für das weitere Fahrzeug beeinflussen.
Dieses Verfahren kann in einer weiteren Ausgestaltung der Erfindung noch weiter verbessert werden, indem erfindungsgemäß dann auch noch die Zeit berücksichtigt wird, die vergeht bis ein Transportfahrzeug die erforderliche Änderung des relativen Abstandes auszuführen beginnt. Die Verbesserung wird durch eine vorzeitige Einleitung einer entsprechenden Korrektur der Vorgabe der Position für das Transportfahrzeug herbeigeführt. Bei der Definition des Übergabebereiches kann hierfür erfindungsgemäß zumindest ein weiterer Bereich, an zumindest einer Einstellgrenze innerhalb des definierten Arbeitsbereiches/ Überladebereiches der Überladeeinrichtung festgelegt werden. Innerhalb dieses Bereiches wird die Vorgabe der Position für das weitere Fahrzeug, während einer entsprechenden Bewegung der Überladeeinrichtung innerhalb dieses Bereiches, zumindest bei einer Bewegung in Richtung einer Einstellgrenze, schon vor dem Erreichen der Grenze entsprechend entgegengesetzt verändert. Bis dann das Transportfahrzeug auf diese Änderung der Vorgabe der Position reagiert, kann dann die Überladeeinrichtung noch weiter in die Richtung der gewünschten Änderung des Auftreffpunktes von Erntegut auf den Transportwagen beziehungsweise kann dann die Einstellung noch weiter in die veranlaßte Richtung vorgenommen werden. Wird dann die gewünschte relative Bewegung der Fahrzeuge erkannt, wird die Bewegung der Überladeeinrichtung gestoppt und die gewünschte Änderung des Auftreffpunktes auf den Transportwagen nur noch durch eine entsprechende Änderung der Vorgabe der Position an das Fahrzeug herbeigeführt.
Prinzipiell ist auch eine gleichzeitige gegenläufige Veränderung der Einstellung der Überladeeinrichtung und der Vorgabe der Position für zumindest ein weiteres Fahrzeug in einem definierten oder in dem gesamten Einstellbereich der Überladeeinrichtung denkbar. Die jeweilige Änderung des Auftreffpunktes, kann ferner anhand der dem Bediener des Erntefahrzeugs bekannten Änderungsgeschwindigkeit durchgeführt werden. Eine entsprechende Änderungsgeschwindigkeit der Vorgabe der Position für das weitere Fahrzeug oder eine entsprechende Steuerung der Änderungen aus einer kombinierten Änderung der Vorgabe der Position für das Transportfahrzeug und der Einstellung der Überladeeinrichtung, kann in der Summe immer so gesteuert werden, daß sich jederzeit eine bekannte Änderungsgeschwindigkeit des Auftreffpunktes auf dem Transportfahrzeug einstellt. Ein manueller Änderungswunsch eines Bediener der Überladeeinrichtung, hat vorteilhaft unabhängig von einer entsprechenden erfindungsgemäßen Reaktion, eine dem Bediener vertraute Änderungsgeschwindigkeit des Auftreffpunktes von Erntegut auf das Transportfahrzeug zur Folge.

Dem Bediener der Vorrichtung steht zur Koordination der Fahrzeuge ferner, in einer weiteren Ausgestaltung der Erfindung, ein Mittel zur Verfügung, mittels welchem er zwischen verschiedenen Verfahren zur Koordination der Fahrzeuge beziehungsweise der Steuerung der Überladeeinrichtung auswählen kann. So kann beispielsweise durch die Betätigung eines Tasters, eine Betätigung der Betätigungsmittel zur Steuerung der Überladeeinrichtung, in eine entsprechende Korrektur der Vorgabe der Position für das weitere Fahrzeug (Transportfahrzeug) umgeleitet werden. Die nach dieser Vorgehensweise durchgeführten Änderungen, unterbrechen den automatischen Ablauf zumindest für die Zeit der Betätigung des erfindungsgemäßen speziellen Mittels und ermöglichen vorteilhaft auf einfachste Weise den manuellen Eingriff des Fahrzeugbedieners, um schnell auf spezielle Bedingungen und Anforderungen an die Koordination auf dem Bearbeitungsfeld oder auf individuelle Wünsche der Fahrzeugbediener reagieren zu können.
Das erfindungsgemäße Mittel kann auch mit weiteren Einstellmöglichkeiten versehen werden. Diesen können dann jeweils unterschiedliche Parameter, beispielsweise unterschiedliche Einstellungen der Überladeeinrichtung oder Vorgaben von Positionen für weitere Fahrzeuge, zugeordnet werden. In einer Stellung des erfindungsgemäßen Mittels wird beispielsweise in einer ersten Einstellung eine Grundeinstellung der gesamten Koordination zumindest zwischen einem Transportfahrzeug und einem Erntefahrzeug zugeordnet und kann dann entsprechend ausgewählt und automatisch eingestellt werden. Diese Grundeinstellung beinhaltet beispielsweise eine Einstellung der Überladeeinrichtung und der Vorgabe der Position für zumindest ein weiteres Fahrzeug sowie die Vorgabe des Verfahrens, nach welchem die erfindungsgemäße Vorrichtung arbeiten soll. In einer weiteren Stellung des Mittels wird eine automatische Koordination nach einem ersten erfindungsgemäßen Verfahren und es werden beispielsweise in weiteren Stellungen des entsprechenden Mittels jeweils weitere Verfahren aktiviert. Ein kombiniertes Mittel aus einem Taster zur Übersteuerung einer Automatik und ein Drehschalter zur Auswahl des Verfahrens ist weiterhin vorteilhaft vorsehbar. Weiterhin kann auch eine Kombination dieses erfindungsgemäßen Mittels mit einem vorhandenen Touchscreenmonitor vorteilhaft ausgeführt sein. Mittels des Touchscreenmonitors lassen sich dann zumindest ein Verfahren auswählen und dem erfindungsgemäßen Mittel zuordnen. Bei der Betätigung des erfindungsgemäßen Mittels wird dann die Reaktion ausgeführt oder die Betätigungen weiterer Mittel entsprechend umgeleitet oder beispielsweise auch ein automatischer Wechsel des Transportfahrzeuges gestartet. Dieses Mittel mit den verschiedenen genannten Möglichkeiten erhöht die Flexibilität und dadurch auch die Zufriedenheit der Fahrzeugbediener bei der Nutzung der erfindungsgemäßen Vorrichtung und der Verwendung der erfindungsgemäßen Verfahren. Durch das erfindungsgemäße Mittel erhält ferner wenigstens ein Bediener eines Fahrzeuges die Möglichkeit, die beim Starten einer Koordination vorherrschenden Bedingungen/ Einstellungen an wenigstens einem Fahrzeug einer Stellung des Mittels zuzuordnen und jederzeit erneut abrufen zu können.

In einer weiteren Ausgestaltung der Erfindung, ist auf dem Erntefahrzeug mindestens eine Navigationsantenne direkt auf beziehungsweise zumindest in der Nähe der vertikalen Drehachse der Überladeeinrichtung angebracht. Durch die erfindungsgemäße Anbringung, läßt sich vorteilhaft eine verbesserte Ermittlung der Überladerichtung durchführen. Für eine automatische Einstellung der Überladeeinrichtung ist es notwendig, eine Solleinstellung zu generieren und als solche vorzugeben. Dazu ist es erforderlich anhand zumindest der aktuellen Positionen der beiden am Überladeprozeß beteiligten Fahrzeuge, eine Sollrichtung für die Überladeeinrichtung relativ zum Erntefahrzeug zu generieren. Im einfachsten Fall wird die Einstellung der Überladeeinrichtung, bei dem Starten der Koordination beziehungsweise der automatischen Einstellung, ermittelt und als weitere Sollvorgabe angenommen. Änderungen der relativen Ausrichtung der Positionen der beiden Fahrzeuge zueinander werden dann entsprechend in einen neue Einstellung umgerechnet und automatisch eingestellt. Weiterhin läßt sich zumindest aus den beiden Positionen ein paralleler Abstand zwischen den beiden Fahrspuren ermitteln. Dieser kann als Abstandswert und eventuell mit einem vorgegebenen Offset versehen als Vorgabe für die Überladeweite verwendet werden.
Aus der Position der Antenne auf dem Transportfahrzeug, läßt sich weiterhin, anhand der Fahrspur und den bekannten Abmessungen des Fahrzeuges, die Lage zumindest eines Punkte im Transportbehälter oder auch die Lage der jeweiligen Transportbehälterwand ermitteln. Dieser Punkt im Behälter beziehungsweise die Lagen der Transportbehälterwände, dienen dann als Ziel- beziehungsweise als Grenzwerte für die Einstellung zumindest der Überladerichtung. Um nun eine Soll- Überladerichtung ermitteln zu können, ist es notwendig, eine weitere Soll- Position des Erntefahrzeuges mit dieser berechneten Transportfahrzeugposition in Verbindung zu bringen. Eine Anbringung der Antenne an der der Überladeeinrichtung zugewandten Seite der Fahrerkabine, verbessern diese Berechnung. Befindet sich die Navigationsantenne in der Nähe oder auch direkt auf der vertikalen Drehachse der Überladeeinrichtung, kann die navigierte Position der Erntemaschine dann direkt zur Ermittlung der Richtung der Strecke zwischen der Position der vertikalen Drehachse der Überladeeinrichtung und der weiteren berechneten Position auf dem Transportfahrzeuges verwendet werden. Eine Umrechnung der aktuellen Position der Navigationsantenne auf dem Erntefahrzeug, auf die vertikale Drehachse der Überladeeinrichtung kann dann entfallen. Die Zielrichtung für die Überladeeinrichtung wird dann anhand der beiden Zielpunkten bezogen auf ein Basispunkt oder ein Bezugsystem und vorteilhaft auch bezogen auf die Längsrichtung des Erntefahrzeugs berechnet. Eine Einstellung der Überladerichtung erfolgt dann anhand einer aus der Zielrichtung berechneten Winkeleinstellung der Überladeeinrichtung bezogen auf die Längsachse des Erntefahrzeuges. Der Berechnungsaufwand kann durch die erfindungsgemäße Anbringung der Navigationsantenne vermindert und die Genauigkeit weiter verbessert werden. Ferner wird die Bewegung der Erntemaschine um die jeweilige Längs-, Quer-, und Hochachse direkt erkannt und kann unmittelbar in eine entsprechende Korrektur der Überladerichtung eingerechnet werden. Auf weitere Sensoren, die die verschiedenen Bewegungen der Erntemaschine ermitteln, kann dann vorteilhaft verzichtet werden. Durch eine einfache, ausladende Halterung an der rückwärtigen Seite der Fahrerkabine oder durch eine direkte Anbringung der Navigationsantenne auf der Drehachse der Überladeeinrichtung läßt sich außerdem diese vorteilhafte Anbringung der Navigationsantenne erzielt.

In einer Weiterbindung der Erfindung ist zumindest eine Navigationsantenne auf dem Erntefahrzeug an der Überladeeinrichtung angebracht. Hierdurch läßt sich der Berechnungsaufwand zur Ermittlung der Überladerichtung, eines Überladepunktes oder des Auftreffpunkt des Erntegutes in den Transportbehälter weiter verringern. Befindet sich das Ende der Überladeeinrichtung für eine optimale Überladung oberhalb des Transportbehälters, wie es beispielsweise bei der Überladung von Erntegut von einem Mähdrescher an ein Transportfahrzeug der Fall ist, und ist zumindest eine Navigationsantenne an dieser Seite der Überladeeinrichtung angebracht, ist für ein automatische Steuerung nur dafür zu sorgen, daß sich diese Navigationsantenne oberhalb der aus der Navigationsantenne des Transportfahrzeuges errechneten Zielposition im Transportbehälter befindet. Die relative Ausrichtung des Erntefahrzeuges zu dieser Navigationsantenne ist hierbei von untergeordneter Bedeutung. Die Koordination zumindest eines Fahrzeuges abhängig von dieser Navigationsantenne, ist vorteilhaft hierbei vereinfacht möglich. Für die Ermittlung der Vorgabe der Position für das Transportfahrzeug muß dann diese Antennenposition lediglich um eine Betrag in Fahrtrichtung eines Fahrzeugs verschoben werden. Sollte die Überladeeinrichtung hierbei an eine Einstellgrenze gelangen und eine weitere Einstellung über diese Grenze hinaus als notwendig erkannt werden, kann erfindungsgemäß eine zuvor beschriebene Korrektur der Vorgabe der Position an das Transportfahrzeug veranlaßt werden.
Ferner läßt sich erfindungsgemäß auch wenigstens eine weitere Navigationsantenne an dem Erntefahrzeug, beispielsweise auf der vertikalen Drehachse und/ oder an der gutabgebenden Seite der Überladeeinrichtung, anbringen. Befindet sich eine erste Navigationsantenne auf der Überladeeinrichtung an der gutabgebenden Seite und eine weitere Navigationsantenne außerdem in der Nähe oder direkt auf dem vertikalen Drehpunkt der Überladeeinrichtung, so entspricht die Richtung der Strecke zwischen den beiden Positionspunkten der momentanen Überladerichtung. Dies ermöglicht vorteilhaft die Ermittlung der tatsächlichen Überladerichtung der Überladeeinrichtung, anhand einer Ermittlung der Richtung der Strecke zwischen den beiden Navigationsantennen. Auf eine Ermittlung der momentanen Ausrichtung der Erntemaschine im Bezugsystem und eine entsprechende Berechnung der Überladerichtung in Verbindung mit einem entsprechenden Winkelsensor an der Verbindungsstelle der Überladeeinrichtung zur Erntemaschine, kann gänzlich verzichtet werden. Die Berechnung der Überladerichtung kann somit direkt anhand von zwei Antennenpositionen im terrestrischen Bezugsystem durchgeführt werden. Auch eine Umrechnung zwischen der Soll- Überladerichtung und dem Winkel zwischen der Erntemaschine und der Überladeeinrichtung kann dann vorteilhaft entfallen. Der Berechnungsaufwand wird hierdurch verringert und eine daraus resultierende geringere Reaktionsgeschwindigkeit der Einrichtung erreicht.

In einer weiteren Ausgestaltung der Erfindung, ist auf mindestens einem Transportfahrzeug mindestens eine Navigationsantenne an dem Transportbehälter angebracht. Somit befinden sich beispielsweise zwei Navigationsantennen auf dem Transportfahrzeug.

Dabei ist vorteilhaft die Navigationsantenne auf der Fahrerkabine für die Koordination der Fahrzeuge und die Antenne an dem Transportbehälter zur genaueren Ortung des Behälters und die daraus abgeleitete automatische Steuerung zumindest der Einstellung der Überladeeinrichtung an dem Erntefahrzeug vorgesehen. Durch eine erfindungsgemäße Anbringung der Navigationsantenne an dem Transportbehälter, wird eine genauere Ermittlung der Lage des Transportbehälters erreicht, wobei dies besonders dadurch ermöglicht wird, indem zumindest eine Position einer Transportbehälterwand direkt navigiert werden kann. Anhand der bekannten Abmessungen und der bekannten Ausrichtung des Behälters bezogen auf die navigierte Position am Transportbehälter, wird eine genaue Ermittlung der Lage und der Grenzen des Transportbehälters ermöglicht. Der Berechnungsaufwand zur Ermittlung der relativen Lage des Transportbehälters wird hierdurch vereinfacht und die Genauigkeit der Ermittlung verbessert. Ferner wird der jeweilige Berechnungsaufwand für die Generierung von weiteren von der Lage des Transportbehälters abgeleiteten Auswertungen verbessert und vereinfacht.
In einer Weiterbildung der Erfindung werden mehrere Navigationsantennen an dem Transportbehälter angebracht. Eine Ermittlung zumindest eines Punktes an jeder Transportbehälterwand wird hierdurch ermöglicht. Durch die bekannten Formen der Transportbehälter, kann dann jeder ermittelten Position am Transportbehälter einer Wand zugewiesen und der genaue Verlauf der Wandung ermittelt und eventuell angezeigt werden. Beispielsweise werden vier Navigationsantennen an jeweils einer Wand angeordnet, die jeweilige Lage ermittelt und mittels der Datenübertragungsstrecke an zumindest eine Einrichtung in dem Erntefahrzeug übertragen. In der Einrichtung wird dann anhand der einzelnen navigierten Positionen des Transportbehälters, der zusammenhängende Verlauf der Transportbehälterwandungen errechnet und dies dann für weitere Berechnungen und gegebenenfalls auch auf einer Anzeigeeinrichtung dargestellt.
In einer besonders vorteilhaften Ausgestaltung der Erfindung werden zwei Navigationsantennen auf diagonal gegenüberliegenden Eckpunkten des Transportbehälters angebracht. Durch die geringere Anzahl von Navigationsantennen können die Kosten reduziert und die jeweilige Ausstattung des Transportfahrzeuges und die Menge der zuübertragenen Daten verringert werden. Weiterhin wird durch diese Ausgestaltung der Erfindung, die Anzahl der anzugebenden, bekannten und gegebenenfalls auch in einer Einrichtung gespeicherten Abmaße des Transportfahrzeuges auf ein notwendiges Maß verringert oder sogar überflüssig. Anhand einer bekannten Behälterform und der Ausrichtung der beiden, ermittelten Position zueinander sowie anhand deren Bewegungsrichtung, kann die jeweilige Position einer Transportbehälterwand eindeutig zugeordnet werden. Die Angabe über eine Breite oder Länge kann somit gänzlich wegfallen. Sollten mehrere Fahrzeuge auf einem Bearbeitungsfeld mit der erfindungsgemäßen Ausstattung an Antennen vorhanden sein, kann jede übertragene Fahrzeugposition mit einer entsprechenden Kennung versehen werden. Ferner ist es durchaus denkbar auch aus dem Signal zumindest einer Navigationsantenne an dem Transportbehälter, und hierbei insbesondere dem Signal der Antenne, die am weitesten in Fahrtrichtung vorne liegt, eine Position zur Angabe der momentanen Fahrzeugposition für eine Koordination der Fahrzeuge zu verwenden.

In einer weiteren Ausgestaltung der Erfindung, ist zumindest ein Navigationssystem und die Einrichtung für die Datenübertragung als eine mobile Einheit ausgebildet. Hierdurch entsteht vorteilhaft eine mobile Einheit, die leicht an einem Fahrzeug angebaut beziehungsweise nachgerüstet werden kann. Diese Einheit kann aus einem Gehäuse mit einem integrierten Navigationssystem und einer Sende- und Empfangseinrichtung für die Datenübertragung aufgebaut sein. An der Außenseite sind beispielsweise eine Navigationsantenne und eine Funkantenne angebracht. Ferner befinden sich dort Befestigungsmittel, wie Halterungen oder Magnetfüße, für eine Verbindung der Einheit mit dem Fahrzeug. Des weiteren beinhaltet diese Einheit auch eine eigene Energieversorgung oder eine Schnittstelle für eine Versorgung von dem Fahrzeug her. Werden mehrere Navigationsantennen an einem Fahrzeug verwendet, so kann die mobile Einheit auch mit Anschlußmittel, für den Anschluß weiterer Navigationsantennen ausgestattet sein. Beispielsweise wird die Einheit vor dem Bearbeiten eines Feldstückes an einem Transportfahrzeug angebracht und in Betrieb genommen. Vorteilhaft besitzt dann jede Einheit eine eigene Kennung. Diese kann dann der zentralen Koordinationseinrichtung auf dem Erntefahrzeug mitgeteilt und dann weitere dem Transportfahrzeug entsprechende Abmaße oder Vorgabe für eine fahrzeugspezifische Koordination hinzugefügt werden. An der Einheit können ferner Anzeigemittel zumindest für die Anzeige des Funktion der Einheit vorhanden sein.

Die Erfindung soll anhand der folgenden Zeichnungen näher erläutert werden. Es zeigen:
- Figur 1: einen selbstfahrenden Feldhäcksler in der Seitenansicht,
- Figur 2: eine Draufsicht auf drei Fahrzeuge auf einem Bearbeitungsfeld,
- Figur 3: einen selbstfahrenden Feldhäcksler mit einem nachfolgenden Transportbehälter, im einer Seitenansicht,
- Figur 4: einen selbstfahrenden Feldhäcksler bei einer rückwärtigen Überladung von Erntegut auf ein nachfolgendes Transportfahrzeug in der Draufsicht,
- Figur 5: einen selbstfahrenden Feldhäcksler bei der seitlichen Überladung von Erntegut auf ein Transportfahrzeug,
- Figur 6: einen Mähdrescher bei der seitlichen Überladung von Erntegut auf ein Transportfahrzeug,
- Figur 7: ein Ausführungsbeispiel des schematischen Aufbaus der Vorrichtung zur Koordination von Fahrzeugen und der Steuerung der Überladeeinrichtung.

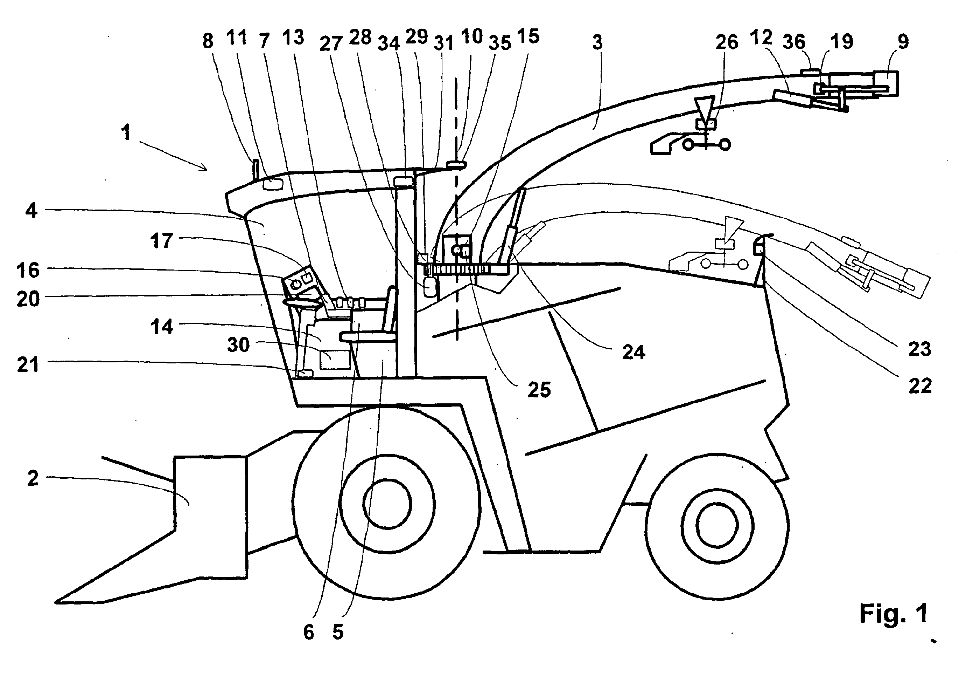

In der Figur 1 wird ein selbstfahrender Feldhäcksler 1 in der Seitenansicht gezeigt. Dieser nimmt über die Erntegutaufnahmeeinrichtung 2 Erntegut von dem Bearbeitungsfeld auf, zerkleinert es und gibt es mittels der Überladeeinrichtung 3 an einen Transportbehälter ab. Der selbstfahrende Feldhäcksler 1 besitzt eine Fahrerkabine 4. In dieser Fahrerkabine 4 befindet sich ein Sitz 5 mit einem an der Armlehne 6 angebrachten Multifunktionsgriff 7. Der Multifunktionsgriff 7 ist mit mehreren Bedientasten und -schaltern ausgestattet. Der Fahrzeugbediener kann mittels dieser Bedientasten und -schaltern die Funktion und Einstellung des Fahrzeuges durch vorhanden Antriebe ferngesteuert beeinflussen. Er kann beispielsweise die Erntegutaufnahmeeinrichtung 2 in seiner Höhe zum Bearbeitungsfeld einstellten, die Überladeeinrichtung 3 um die vertikalen Drehachse 10 verschwenken, die Richtung der Überladeklappe 9 steuern oder die Höhe der Überladeeinrichtung 3 um die horizontale Drehachse 15 verändern. Weitere Bedienelemente können an dem vorhandenen Multifunktionsgriff 7 oder an einem weiteren Bedienelement in Form eine Joystick direkt an dem Sitz 5, an einer weiteren Armlehne oder in der neben dem Sitz befindlichen Bedienerkonsole 14 angeordnet werden. Diese dienen dann beispielsweise zur manuellen Vorgabe oder zur Korrektur einer Vorgabe der Position für wenigstens ein weiteres Fahrzeug und/ oder zur Steuerung der Koordination von Fahrzeugen 1 auf dem Bearbeitungsfeld. An der Bedienerkonsole 14 befinden ferner weitere Bedienelemente 13, 16, wie Schalter oder Dreh- Einstellelemente sowie Anzeigeelemente 17 und je nach Ausstattung des Fahrzeuges 1 bei Bedarf auch einen Monitor 20 oder ein oder mehrere LCD-Anzeigen. Auf dem Fahrerkabinenboden befindet sich ein weiteres Bedienelement 21, ein Fußtaster zur Aktivierung beziehungsweise zur Deaktivierung zumindest einer Einrichtung der erfindungsgemäßen Vorrichtung. In der Bedienerkonsole 14 können sich weiterhin wenigstens eine nicht näher dargestellt Auswerteelektronik und weitere Einrichtungen zur Fahrzeugsteuerung befinden. Über die einzelnen Bedienelemente 13, 16 oder 7, kann der Fahrzeugbediener die Einstellungen des Erntefahrzeuges 1 direkt mittels elektrohydraulische Stellantriebe und sonstige Antriebe durchführen. Durch die Betätigung eines Schalters 13 an der Bedienerkonsole 14 kann beispielsweise die Überladehöhe von dem Fahrzeugbediener eingestellt werden. Das Schaltersignal des Schalters 13 steuert ein nicht näher gezeigtes Hydraulikventil an, welches dann eine Ölmenge an den Hydraulikzylinder 24 abgibt und somit die gutabgebenden Seite der Überladeeinrichtung 3 erhöht. In der Figur 1 sind zwei verschiedene Stellungen der Überladeeinrichtung 3 dargestellt. Eine Arbeitsstellung und eine Transportstellung. In die Transportstellung der Überladeeinrichtung 3 wird die Überladeeinrichtung 3 auf einem Bügel 22 abgelegt. Diese Stellung der Überladeeinrichtung 3 wird von einem Schalter 23 erfasst und an eine Auswerteelektronik gemeldet. An der horizontalen Drehachse 15 der Überladeeinrichtung 3 befindet sich ein Sensor 25, der die relative Stellung der Überladeeinrichtung 3 zur Erntefahrzeug 1 ermittelt, das heißt für eine Ermittlung der Überladehöhe verwendet werden kann. Die Einstellung der Überladeklappe 9 wird von der Stellung des Hydraulikzylinders 12 vorgegeben und mittels eines weiteren Sensors 19 erfaßt. Der Sensor 19 ermittelt somit eine relative Winkelstellung oder die relative Abgaberichtung der Überladeeinrichtung 3 bezogen auf die Überladeeinrichtung 3. Beispielsweise durch einen Taster an dem Multifunktionsgriff 7, kann der Fahrzeugbediener die Richtung der Überladeklappe 9 manuell verändern und damit die Überladeweite steuern. Die von den Sensoren 19 und 25 erfasste, jeweilige Stellung der Überladeeinrichtung 3 beziehungsweise der Überladeklappe 9, wird an eine Auswerteelektronik übertragen. Diese kann dann in Verbindung mit der bekannten Höhe der horizontalen Drehachse über dem Bearbeitungsfeld und den weiteren Abmessungen der Überladeeinrichtung 3, eine theoretische Überladeweite ermitteln und über den Monitor 20 oder eine entsprechende LCD-Anzeige dem Fahrzeugbediener anzeigen beziehungsweise in einer Einrichtung erfindungsgemäß verwenden. Die Überladerichtung der Überladeeinrichtung 3 kann von dem Fahrzeugbediener beispielsweise durch eine Betätigung eines weiteren Tasters an dem Multifunktionsgriff 7 ferngesteuert, verändert werden. Die Überladerichtung wird dann, je nach Richtungswunsch des Maschinenbedieners, mittels einer entsprechenden Ansteuerung des Hydraulikantriebes 27, dessen Abtrieb in einen Zahnkranz 28 eingreift, um die vertikale Drehachse 10 verschwenkt. Ein Sensor 29 erfasst die jeweilige eingestellte Überladerichtung der Überladeeinrichtung 3 relativ zum selbstfahrenden Feldhäcksler 1.
Die aktuelle Position der Erntemaschine 1 auf dem Bearbeitungsfeld, wird mittels einer Navigationseinrichtung ermittelt. An dem in der Figur 1 dargestellten selbstfahrenden Feldhäcksler 1, wird als Navigationseinrichtung eine Satellitennavigationseinrichtung verwendet. Hierfür sind Navigationssystem geeignet, welche eine relative Position des Fahrzeuges 1 bezüglich eines Fixpunktes oder eines Bezugsystems ermitteln können. So eignet sich beispielsweise ein auf dem Triangulationsprinzip basierendes Navigationssystem, welches die Position des Fahrzeuges 1 auf dem Bearbeitungsfeld anhand von zwei ermittelten Entfernung zu zwei festen, voneinander beabstandeten, bekannten Positionen ermittelt. Besonders geeignet ist ein für die mobile Anwendung geeignete Satellitennavigationssystem, wie beispielsweise das GPS- Navigationssystem. Die ermittelte Position eines Fahrzeuges 1 wird erfindungsgemäß mittels einer Datenübertragungsstrecke an mindestens ein weiteres Fahrzeug übertragen. Diese Datenübertragungsstrecke kann eine einfache Funkstrecke sein. Vorzugsweise wird sie aber als bidirektionale Funkstrecke mit einer nur geringen Reichweite ausgebildet. So ist beispielsweise das Erntefahrzeug 1 mit einer einfachen Funkeinrichtung ausgestattet, welche die Position des Erntefahrzeuges 1 in einem Umkreis von 50m um die Funkantenne 8 herum versendet. Fährt nun ein Transportfahrzeug in diesen Funkbereich ein, so kann es die Position des Erntefahrzeuges 1, bei einer entsprechenden Ausstattung des Transportfahrzeuges mit einem Funkempfänger, automatisch empfangen. Das Transportfahrzeug kann wiederum mit einer Funkantenne beziehungsweise mit einem Navigationssystem ausgestattet sein und die eigene beziehungsweise die empfangene Position in einem bestimmten Umkreis versenden.
An der Fahrerkabine 4 ist rückwärtig auf einem Halter 31 eine GPS- Antenne 35 direkt auf der vertikalen Drehachse 10 der Überladeeinrichtung 3 angeordnet. Die Anbringungsposition der Antenne 8 gibt die jeweilige von dem Navigationssystem ermittelte Position im Bezugssystem repräsentativ für das jeweilige Fahrzeug 1 an. Eine weitere GPS- Antenne 36 kann Bedarfsweise zusätzlich an der erntegutabgebenden Seite der Überladeeinrichtung 3 angebracht werden. Diese GPS- Antennen 35, 36 können auch Einrichtungen zum Empfangen eines Korrektursignals für die jeweilige navigierte Position enthalten und werden dann D- GPS- Antennen 35,36 genannt. Der selbstfahrende Feldhäcksler 1 ist, je nach Ausstattungsgrad der erfindungsgemäßen Vorrichtung und der verwendeten Verfahren, auch mit mindestens einer weiteren Einrichtung 34 zur Ermittlung der Ausrichtung der Erntemaschine 1 in einem Bezugsystem, beispielsweise mit einem elektronischen Kompaß ausgestattet. Diese Einrichtung 34 kann durch weitere Einrichtungen zur Ermittlung von Bewegungen und Ausrichtungen der Erntefahrzeuge auf dem Bearbeitungsfeld, wie Neigungs- oder Beschleunigungssensoren erweitert werden. An der Überladeeinrichtung 3 ist ferner eine Windmesseinrichtung 26, beispielsweise um zumindest eine horizontale Achse frei pendelnd, angebaut.
Die einzelnen Einrichtungen in einem Fahrzeug 1 können untereinander mit den weiteren Elektroniksteuerungen, beispielsweise über ein Fahrzeugbussystem in Verbindung stehen. Weitere Informationen über die aktuellen Einstellungen des selbstfahrenden Feldhäckslers 1, beispielsweise über die Stellung der Erntegutaufnahmeeinrichtung 2, den Status der einzelnen Antriebseinrichtungen oder über Arbeitsparameter, wie beispielsweise die Fahrgeschwindigkeit, den Emtegutdurchsatz oder die Erntegutfeuchte, werden durch nicht dargestellte Einrichtungen ermittelt und können einer Auswerteelektronik über das Bussystem zur Verfügung gestellt werden.
Auf dem selbstfahrenden Feldhäcksler 1, kann ferner ein hier nicht dargestelltes Computersystem installiert sein. Dieses wertet die einzelnen Parameter der Erntemaschine 1 aus und stellt sie dann grafisch auf einer LCD- Anzeige 17 oder dem Monitor 20 dar.
In dieses nicht näher dargestellte Computersystem 63 kann, über eine bekanntes, vorhandenes Übertragungsmedium, auch vor dem Beginn der Bearbeitung des Bearbeitungsfeldes eine Bearbeitungsfeldkarte abgespeichert oder auch während der Bearbeitung aufgezeichnet werden. Die relative Position der Erntemaschine 1 zu dem besagten Bearbeitungsfeld wird dann laufend mittels der Navigationseinrichtung anhand der aktuellen navigierten Position von dem Computersystem 63 ermittelt. Bei einer Annäherung des selbstfahrenden Feldhäckslers 1 an ein neue Bearbeitungsfeld, kann eine in einem Speicher hinterlegte Bearbeitungsfeldkarte teilweise oder auch komplett automatisch ausgewählt und auf dem Monitor 20 angezeigt werde. Vor der Bearbeitung des Bearbeitungsfeldes schwenkt der Fahrzeugbediener normalerweise die Überladeeinrichtung 3 aus der Transportstellung in ein Arbeitsstellung. Diese kann aber auch erfindungsgemäß automatisch erfolgen, indem die erfindungsgemäße Vorrichtung automatisch dann aktiviert wird, wenn der selbstfahrende Feldhäcksler 1 sich unmittelbar an der Bearbeitungsfeldgrenze befindet und der Fahrzeugbediener zumindest ein Arbeitsaggregat beispielsweise die Häckseltrommel beziehungsweise die Erntegutaufnahmeeinrichtung 2 einschaltet. Die Überladerichtung 3 wird dann automatisch anhand der vorhanden, möglichen Fahrbereiche für ein Transportfahrzeug ausgerichtete.
Der Monitor 20 kann zur Anzeige einer vorhandene Bearbeitungsfeldkarte und relativ dazu die ein schematische Darstellung des Erntefahrzeuges 1 sowie zur Darstellung von weiteren Fahrzeuge und zur Anzeige von Fahrzeugeinstellungen und Ernteparametern dienen. In der Ausführung des Monitors 20 als Touchscreenmonitor, können dann auch Einstellungen und Vorgaben mittels des Monitors 20 durchgeführt werden. Ferner können aktivierte Einrichtungen und ausgewählte Verfahren sowie aktivierte Vorrichtung und automatisch erzeugte Vorgabe, durch jeweils geeignete Anzeigeelemente 17 oder auch durch beispielsweise eine entsprechende symbolische Anzeige auf dem Monitor 20 erfolgen.
Auf dem Dach der Fahrerkabine 4 befindet sich eine Antenne 8. Diese Antenne 8 dient zur Kommunikation mit wenigstens einem weiteren Fahrzeug auf dem Bearbeitungsfeld und ist zumindest Teil der Datenübertragungsstrecke und zum Empfang beziehungsweise Senden einer Position von einem oder an ein weiteres Fahrzeug geeignet und gegebenenfalls auch geeignet eine empfangene Position an ein weiteres Fahrzeug zuübertragen. Der Antenne 8 direkt zugeordnet, ist eine Einrichtung 11, welche die Steuerung der Datenübertragung übernimmt und ferner als Schnittstelle zwischen der Datenübertragungsstrecke und den weiteren Fahrzeugeinrichtungen dient.
Auf eine Darstellung von weiteren Einrichtungen und Steuerungen, wie beispielsweise den Aufbau des Fahrantriebes und ein entsprechende Steuerung sowie die Erfassung von Fahrzeugeinstellungen und Parametern, wie die Fahrgeschwindigkeit, wird hier verzichtet. Verschiedene Aufbauten und Funktionsweisen bis hin zu einem gemeinsamen Fahrzeugmanagementsystem für Motor und Antrieb können hier Verwendung finden.

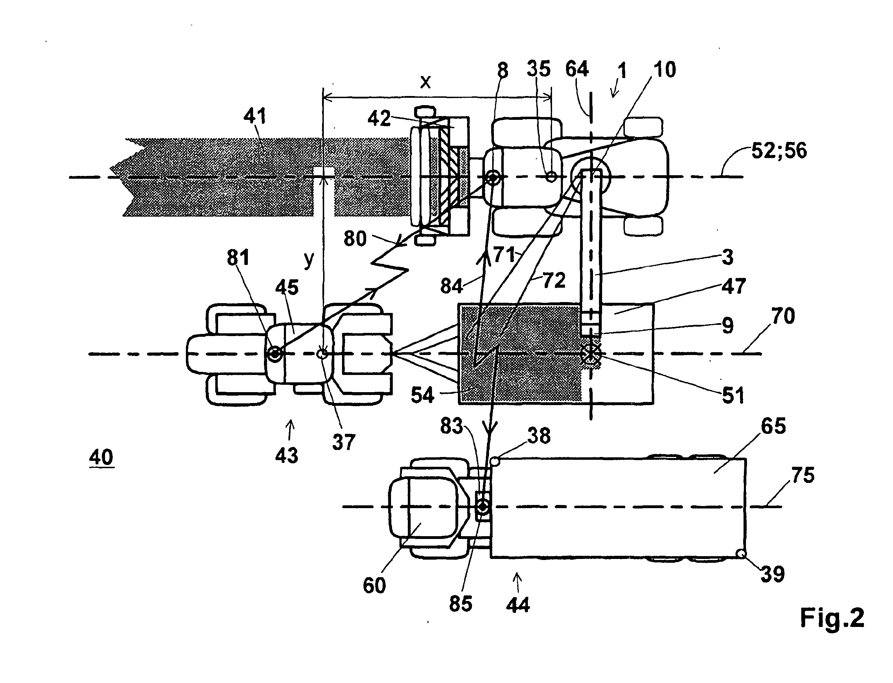

Figur 2 zeigt eine Draufsicht auf drei Fahrzeuge auf einem Bearbeitungsfeld. Eine erstes Fahrzeug ist als ein selbstfahrender Feldhäcksler 1 ausgebildet. Dieses Erntefahrzeug 1 nimmt mittels einer Pickup- Einrichtung 42 auf dem Bearbeitungsfeld 40 zuvor zusammengeführtes Erntegut 41 von dort auf und überlädt dieses nach einer Bearbeitung, an ein erstes auf der Fahrspur 70 befindliches Transportfahrzeug 43. Dieses Fahrzeug 43 besteht aus einem Zugfahrzeug 45 und einem schon teilweise mit Erntegut 54 befüllten, angehängten Transportbehälter 47. Ein weiteres Transportfahrzeug 44, ist als eine Aufliegerfahrzeug mit einem Zugfahrzeug 60 und einem unbefüllten Transportbehälterauflieger 65 dargestellt. Dieses Transportfahrzeug 44 bewegt sich auf einer weiteren Fahrspur 75 mit den weiteren Fahrzeugen 1, 43 mit und steht für nachfolgende Überladung von Erntegut bereit. Die Koordination dieser Fahrzeuge 1,43,44 erfolgt nach dem sogenannten Master-Slave Prinzip. Das Erntefahrzeug 1 ist das Masterfahrzeug, dessen Fahrtrichtung von dem Erntegutschwaden 41 vorgegeben wird und gibt dann anhand der eigenen Position auch zumindest die Fahrtrichtung der beiden Slavefahrzeuge 43,44 an. Die einzelnen Längsrichtungen der Fahrzeuge 1,43,44 und die der Transportbehälter 47,65, liegen hier auf den jeweiligen Bearbeitungs- und Fahrspur 52,70,75 und sind ferner parallel zu der weiteren Bearbeitungs- und Fahrspur 52,70,75 des weiteren Fahrzeuges 1,43,44. Für die Koordination und Einstellung von landwirtschaftlichen Fahrzeugen, auf einem Bearbeitungsfeld 40, müssen bei nicht übereinander und eventuell nicht parallel verlaufenden Fahrspuren 52,70,75 und unterschiedlich ausgerichteten Längsachsen der Fahrzeuge und Transportbehälter, jeweils separat bei den Auswertungen und Berechnung berücksichtigt werden. Zur besseren Veranschaulichung der Erfindung, wurde hier eine einfache Konstellation der Fahrzeug 1,43,44 gewählt.
Der Erntefahrzeug 1 ist mit einer Antenne 8 und einer GPS- Antenne 35 ausgestattet. Mittels der Datenübertragungstrecke 80 überträgt dieses Fahrzeug 1 jeweils seine aktuell navigierte Position als eine Vorgabe an das Transportfahrzeug 43. Dieses empfängt diese Positionsvorgabe mittels einer eigenen Antenne 81 und bringt diese Vorgabe in einer Einrichtung mit der mittels der GPS- Antenne 37 navigierten, eigenen Position. Die relative Ausrichtung der beiden Positionen wird dann zur Generierung einer Fahranweisung oder auch zur automatischen Spurführung und Vorfahrtsteuerung des Fahrzeuges 43 verwendet. Die Generierung des jeweilig notwendigen Signals, wird anhand einer relativen Positionsvorgabe vorgenommen. Dafür kann eine vektorielle Angabe oder auch eine Vorgabe des relativen Abstandes in Form eines Abstandswerte y und eines Abstandswertes x zwischen den beiden Positionen bezogen auf die Längsrichtung des Fahrzeuges 43 verwendet werden. Bei der Aktivierung der Einrichtung für die Koordination der Fahrzeuge, können diese Werte x und y einmalig ermittelt und dann als Vorgabe verwendet werden. Die ermittelte Position des Transportfahrzeuges 43 kann auch an das Erntefahrzeug 1 übergegeben werden. Dabei kann es so vorgesehen sein, daß anhand der Position des Transportfahrzeuges 43 und der Position des Erntefahrzeuges 1, eine Einstellung der Überladeeinrichtung 3 berechnet und automatisch eingestellt wird. Ein gewünschter Auftreffpunkt 51 von Erntegut auf den Transportbehälter 47 läßt sich in Verbindung mit den beiden Position und zumindest zwei weitere, fahrzeugbezogene Abstandswerten ermitteln. Ein erster Abstandswert gibt den Abstand zwischen der Antenne 37 und dem Auftreffpunkt 51 auf dem Transportbehälter 47 und der zweite Abstandswert den Abstand zwischen der Antennen 35 und der vertikalen Drehachse 10 der Überladeeinrichtung 3 an. Werden nun die jeweiligen navigierten Positionen um den jeweiligen fahrzeugbezogen Abstandswert, fahrzeugbezogen entgegen der Fahrtrichtung in Richtung der Längsachse 56 des Erntefahrzeuges 1 verschoben, so ergibt die Richtung der Strecke zwischen den beiden verschobenen Positionen, bezogen auf die Ausrichtung des Erntefahrzeuges 1, den einzustellenden Winkel zwischen der Längsachse 56 des Erntefahrzeuges 1 und der Längsachse 64 der Überladeeinrichtung 3. Die erforderliche Überladeweite zwischen dem Auftreffpunkt 51 und der vertikalen Drehachse 10, kann ferner aus der Länge der Strecke zwischen den beiden verschobenen Positionen ermittelt und eine entsprechende Einstellung der Überladeeinrichtung 3 veranlaßt werden. Der mögliche Überladebereich wird in dem Schwenkbereich der Überladeeinrichtung 3 um die vertikale Drehachse 10 in einer Richtung von der Einstellgrenze 71 vorgegeben. Eine weitere freigewählte Einstellung der Überladeeinrichtung 3 wird durch die Linie 72 angegeben. Überschreitet die Überladeeinrichtung 3 die Linie 72 oder gelangt sie an die Einstellgrenze 71, werden entsprechende Einstellungen und Vorgabe an den landwirtschaftlichen Fahrzeugen nach gegeben Verfahren verursacht.
Zwischen dem weiteren Transportfahrzeug 44 und dem Erntefahrzeug 1 besteht eine weitere Datenübertragungsstrecke 84. Mittels dieser können Daten für die Koordination und Einstellung derselben ausgetauscht werden. An dem Transportbehälterauflieger 65 sind auf diagonal gegenüberliegenden Eckpunkten der Behälterwandungen jeweils eine GPS- Antenne 38 und 39 angebracht. Die Antennen 38 und 39 stehen mit einer an der vorderen Behälterwand angebrachten Einrichtung in Verbindung. Diese Einrichtung kann eine mobile Einheit 83 sein und beinhaltet eine Sende- und Empfangseinrichtung sowie eine Antenne 85 für den Datenaustausch mit wenigstens einem weiteren Fahrzeug. Ein Datenspeicher mit spezifische Angaben über das Transportfahrzeug 44 und eventuell weitere Verbindungseinrichtungen zu weiteren Einrichtungen in dem Fahrzeug, können weiterer Bestandteil dieser Einrichtung sein.

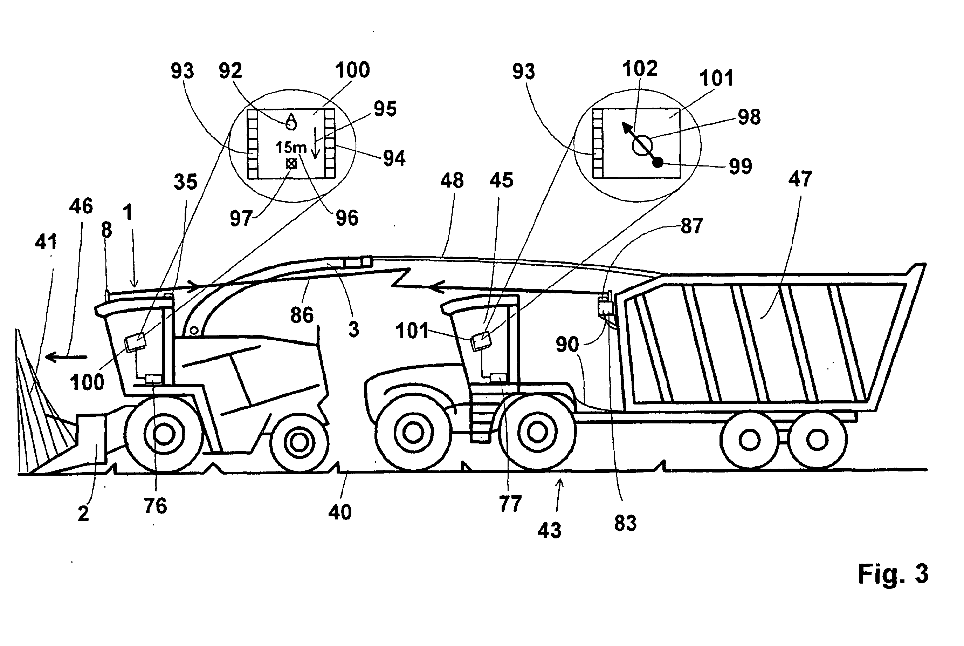

Figur 3 zeigt einen selbstfahrenden Feldhäcksler 1 auf einem Bearbeitungsfeld 40, welcher hier Mais 41 mit der Erntegutaufnahmeeinrichtung 2 von dem Bearbeitungsfeld 40 aberntet, es häckselt und mittels der Überladeeinrichtung 3, entgegen der Ernterichtung 46 an einen, von einem Zugfahrzeug 45 gezogenen Transportbehälter 47 überlädt. Die Überladerichtung und -weite der Überladeeinrichtung 3 wird anhand der navigierten Position des selbstfahrenden Feldhäckslers 1 und einer weiteren, mittels der Datenübertragungsstrecke 86 von der mobilen Einheit 83 an das Erntefahrzeug 1 übertragenen Position berechnet und entsprechend eingestellt. Die Einstellung der Überladeeinrichtung 3 bestimmt die Flugrichtung des, an der gutabgebenden Seite der Überladeeinrichtung 3 abgegebenen Erntegutes 48. An der mobilen Einheit 83 ist eine GPS- Antenne 87 direkt angebracht. Ferner steht diese Einheit 83 mit weiteren Einrichtungen 101, 77 auf dem Transportfahrzeug 43 über die Leitungen 90 in Verbindung. Für eine Koordination der Fahrzeuge 1 und 43 befindet sich auf dem Erntefahrzeug 1 eine Einrichtung 76, die mit einem Bedienerterminal 100 versehen und ferner mit den weiteren Einrichtungen in dem Fahrzeug verbunden ist. Die mittels der GPS-Antenne 35 navigierten Position des Erntefahrzeuges 1, wird von der Einrichtung 76 auf dem Bedienerterminal 100 in Form eines Kreises 92 und in Verbindung mit der relativen Ernterichtung 46 in Form eines angefügten Pfeiles angezeigt. Ein Verfahren für die Koordination der Fahrzeuge 1,43, kann der Bediener des Erntefahrzeuges 1 mittels der Bedienerleiste 93 auswählen und hiermit auch eventuelle, erforderliche Angaben eingeben. Anhand einer weiteren Bedienerleiste 94, können die Einstellungen der Überladeeinrichtung 3 ausgewählt und eventuell auch manuell korrigiert werden. In dem dargestellten Fall, wurde eine Überladung in die entgegen der Ernterichtung 46 gesetzte Richtung ausgewählt und dies durch eine entsprechenden Pfeil 95 angezeigt. Als eine weitere Angabe für die Koordination, wurde hier eine Verschiebung der Position des Erntefahrzeuges 1 um 15m entgegen der Ernterichtung 46, für eine Vorgabe der Position für das Transportfahrzeug 43, ausgewählt. Eine entsprechende Anzeige 96 des ausgewählten Verschiebeabstandes und eine relative, symbolische Darstellung 97 der Vorgabeposition, wird auf dem Bedienerterminal 100 vorgenommen. Die Vorgabe der Position für das Transportfahrzeug 43 wird an die mobile Einheit 83 übergeben und in einer weiteren Einrichtung 77 in Verbindung mit der navigierten Position des Transportfahrzeuges 43 gebracht und eine entsprechende Bedienerinformation generiert. In der Fahrerkabine des Transportfahrzeuges 43 ist eine Bedieneranzeige 101 angeordnet, welche mit der Einrichtung 77 in Verbindung steht. Auf der Anzeige 101 ist eine Bedienerleiste 93 für die Bedienung der Anzeige 101 und insbesondere für die Auswahl der Darstellungsgröße der Symbole 98,99,102 und des Bearbeitungsfeldbereichs. Die empfangene Vorgabeposition wird in Form eines Kreissymbols 98 dargestellt. Relativ dazu wird die Position des Transportfahrzeuges 43 in Form eines Punktes 99 angezeigt. Der Fahrzeugbediener hat nun die Aufgabe, durch eine entsprechende Steuerung des Fahrzeuges 43, die relative Ausrichtung seines Fahrzeuges 43 zu dem Erntefahrzeug 1, so durchzuführen, daß sich die beiden Symbole 98 und 99 überdecken. Das heißt der Punkt 99 wird bei einer erfüllten Positionsvorgabe innerhalb des Kreissymbols 98 angezeigt. Bei einer Abweichung der relativen Lage zueinander, kann von der Einrichtung 77 auch eine Fahranweisung an den Fahrzeugbediener in Form des dargestellten Pfeiles 102 beziehungsweise auch akustische Hinweise erzeugt werden.
Für eine einfache Anzeige, kann es auch vorgesehen sein, daß auf dem Bedienerterminal 101 die übertragene Position 98 direkt, das heißt ohne eine vorherige Verschiebung, angezeigt wird. Vorteilhaft wird dann koaxial zu der dargestellten Position, ein Kreis mit einem Radius, der etwa dem gewünschten Abstand der Positionen der Fahrzeuge 1,43 zueinander entspricht, angezeigt. Dies vereinfacht dann die Überwachung der relativen Ausrichtung der Fahrzeuge 1,43 zueinander dadurch, daß sich zumindest in der Nähe der weiteren, angezeigten Position 99 des Transportfahrzeuges 43 auch der Kreis dargestellt wird. Vereinfacht kann dann auch der Kreis nicht voll, sondern nur durch einen Teilkreisbogen angezeigt werden, der in der Nähe der weiteren Position 99 verläuft. Selbstverständlich kann die Einrichtung 77, zur Entlastung des Fahrzeugbedieners auch mir einem Fahrzeugmanagementsystem, zur automatischen Spurführung und Vorfahrtregelung, in Verbindung stehen.

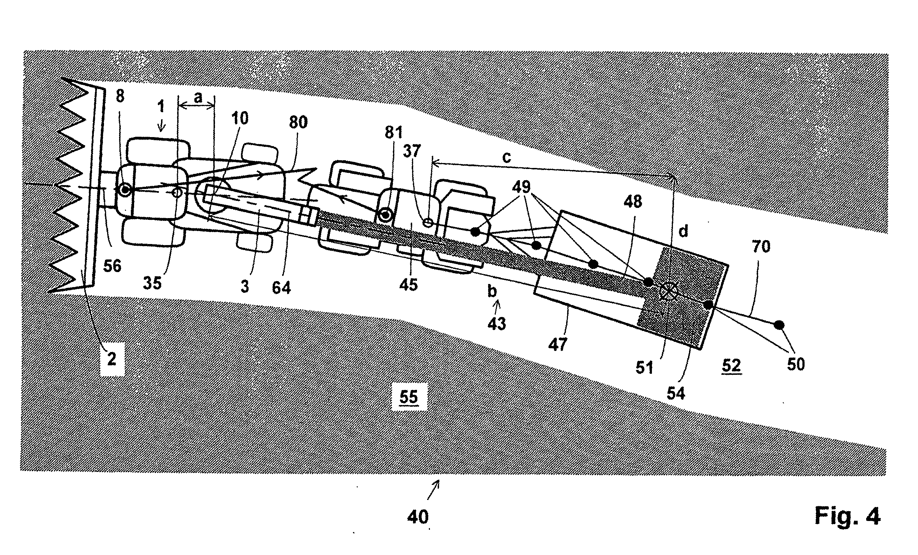

Figur 4 zeigt einen selbstfahrenden Feldhäcksler 1 während einer rückwärtigen Überladung von Erntegut 48 auf ein nachfolgendes Transportfahrzeug 43 in der Draufsicht. Der selbstfahrende Feldhäcksler 1 hat entlang der Bearbeitungsspur 52 Erntegut von dem Bearbeitungsfeld 40 aufgenommen, bearbeitet und mittels der Überladeeinrichtung 3 über das Zugfahrzeug 45 hinweg auf den Transportbehälter 47 überladen. Der Transportbehälter 47 ist zum Teil schon mit Erntegut 54 beladen. Links, rechts und vor dem selbstfahrenden Feldhäcksler 1 befindet sich noch weiteres, unbearbeitetes Bearbeitungsfeld 55. Bei dem sogenannten Durchstoßen des Bearbeitungsfeldes 40, beispielsweise zur Teilung eines Bearbeitungsfeldes 40 in mehrere Teilfelder zur Reduzierung von Leerfahren an dem Bearbeitungsfeldende, ist eine Überladung von Erntegut 48 auf einen Transportbehälter 47 nur in der dargestellten Weise möglich.
Zur Bestimmung der Einstellung der Überladeeinrichtung 3 wird von der GPS- Antenne 35 auf dem Kabinendach des Erntefahrzeuges 1 eine Position des Erntefahrzeuges 1 und von der GPS- Antenne 37 auf dem Kabinendach des Zugfahrzeuges 45 eine Position des Transportfahrzeuges 43 ermittelt. Die Position des Transportfahrzeuges 43 wird laufend mittels der Datenübertragungsstrecke 80 und den zugehörigen Antennen 8 und 81 an das Erntefahrzeug 1 übergeben. Auf dem Erntefahrzeug 1 werden die jeweiligen Positionen der Fahrzeuge 1, 43 in einem nicht näher dargestellten Speichereinrichtung 32 hinterlegt. Aus den einzelnen abgespeicherten Positionen 49, 50 läßt sich die Fahrspur 70 des Transportfahrzeuges ermitteln. Für die Berechnung der Einstellung der Überladeeinrichtung 3, wird die Lage der vertikalen Drehachse 10 der Überladeeinrichtung 3, aus der aktuelle Position des Erntefahrzeuges 1 und einer entsprechenden Verschiebung auf der Längsachse 56 des Erntefahrzeuges 1 um eine Betrag a berechnet. Da ein angehängter Transportbehälter 47 im Zugbetrieb mit nur geringen Fahrtrichtungsänderungen in der Regel annähernd der Fahrspur 70 des Zugfahrzeuges folgt, kann anhand der Fahrspur 70 des Zugfahrzeuges 45 und der aktuellen Position des Transportfahrzeuges 43, auch eine Aussage über die momentane Position des Transportbehälters 47 auf dem Bearbeitungsfeld 40 gemacht werden. Ein gewünschter Auftreffpunkt 51 und der zulässige Überladebereich von Erntegut 48 auf den Transportbehälter 47, ist durch die aktuelle Position des Transportfahrzeuges 43, den bekannten Abmessungen des Fahrzeuges 43, des Transportbehälters 47 und der aufgezeichneten Fahrspur 70 des Transportfahrzeuges 43 gegeben. Anhand zumindest der speziellen Entfernungsangabe c, d bezogen auf die aktuelle Längsachse 56 des Erntefahrzeuges 1 und der Position des Transportfahrzeuges 43, läßt sich dann jeder gewünschte Auftreffpunkt 51 vorgeben und als Vorgabe auswählen. Der berechnete Auftreffpunkt 51, in Relation zu der Position der vertikalen Drehachse 10 des Erntefahrzeuges 1, ergibt dann die Vorgabe für die Überladerichtung 64 und die Überladeweite b.

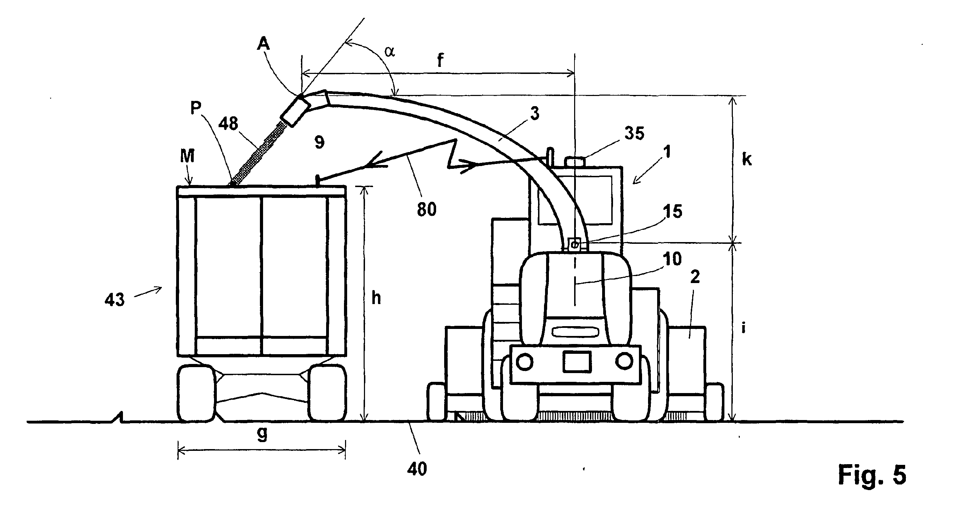

In Figur 5 ist ein selbstfahrender Feldhäcksler 1 bei der seitlichen Überladung von Erntegut 48 auf ein Transportfahrzeug 43 dargestellt. Für eine automatische Nachführung der Überladeeinrichtung 3 und die Überwachung der Überladung ist es erforderliche, einen Überladepunkt P zu ermitteln. Der Überladepunkt P liegt in einer Ebene M, die von den oberen Kanten der Transportbehälterwänden vorgegeben wird. Dabei wird diese Ebene M von der relativen Lage des Transportfahrzeuges 43 auf dem Bearbeitungsfeld 40 vorgegeben und läßt sich folglich aus der aktuellen Position des Transportfahrzeuges 43 auf dem Bearbeitungsfeld 40 und aus den bekannten Abmessungen, wie die Breite g und die Höhe h und Länge des Transportbehälters 47, ermitteln. Der Überladepunkt P selbst wird von der Stelle in der Ebene M gebildet, an welcher das überladene Erntegut 48 diese Ebene M durchstößt. Der Überladepunkt P kann aus einer Verrechnung der relativen Lage des Punktes A zu der aktuellen GPS- Position 35 des Erntefahrzeuges 1, des Abgabewinkels a und der relativen Lage der Ebene M zur aktuellen GPS- Position 35 des Erntefahrzeuges 1 bestimmen werden. Dabei läßt sich die Lage des Abgabepunktes A und der Abgabewinkel α aus den Einstellungen und Abmessungen des Erntefahrzeuges 1 berechnen. Die Abgabehöhe über dem Bearbeitungsfeld 40 wird von der Höhe i der horizontalen Schwenkachse 15 über dem Bearbeitungsfeld 40 und dem Abstand k zwischen der horizontalen Schwenkachse 15 und dem Punkt A vorgegeben. Der Abstand f wird von der Lage der gutabgebenden Seite an dem Punkt A und der vertikalen Drehachse 10 der Überladeeinrichtung 3 vorgegeben. Die relative Lage des Punktes A zu der aktuellen GPS- Position 35 des Erntefahrzeuges 1, ist von der aktuellen Einstellung der Überladeeinrichtung 3 abhängig. Mittels der Datenübertragungsstrecke 80, können anhand der jeweiligen bekannten Position, die berechnete Ebene M und die Lage des Punktes A in Relation zueinander gesetzt werden. Unter Berücksichtigung der aktuellen Stellung der Überladeklappe 9 und dem davon abhängigen Abgabewinkel α, kann der Überladepunkt P relativ zu den einzelnen Positionen der Fahrzeuge 1,43 berechnet werden.
Aus den aktuellen Positionen der Fahrzeuge 1,43, den dazugehörigen Fahrspuren und den jeweiligen Fahrzeugabmessungen, ist es ferner vorgegeben, wo sich in der Ebene M die einzelnen Transportbehälterwände, relativ zu dem Überladepunkt P, befinden. Die entsprechende Auswertung dient dann in weiteren Einrichtungen zur Einstellung und Koordination der jeweiligen landwirtschaftlichen Fahrzeugen 1,43.

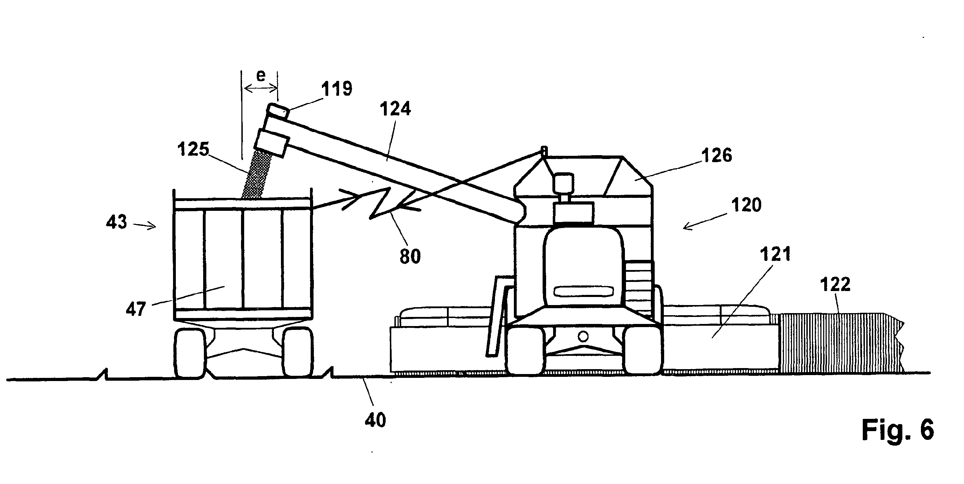

In Figur 6 wird ein Mähdrescher 120 bei der seitlichen Überladung von Erntegut 125 auf ein Transportfahrzeug 43 gezeigt. Der Mähdrescher 120 nimmt mittels des Schneidwerkes 121 Getreide 122 von dem Bearbeitungsfeld 40 auf, drischt es und speichert das geerntete Getreide in einem Korntank 126 zwischen. Bei Bedarf wird dann der Inhalt des Korntanks 126 mittels der Überladeeinrichtung 124, während einer seitlichen Überladung auf den Transportbehälter 47 überladen. An dieser Überladeeinrichtung 124 ist an dem gutabgebenden Ende eine GPS- Antenne 119 angebracht. Die ermittelte Position wird dann laufend von einer Einrichtung auf dem Mähdrescher 120 um einen vorgebbaren Betrag e verschoben und dann wenigstens als ein Abstandsvorgabe mittels der Datenübertragungsstrecke 80 an das Transportfahrzeuge 43 übermittelt. Diese Vorgabe wird in Verbindung einer Position des Transportfahrzeuges 43 dem Bediener des Transportfahrzeuges 43 angezeigt und dient zur manuellen und gegebenenfalls auch zur automatischen Koordination zumindest des Abstandes zwischen den beiden Fahrzeugen 43,120. Die Datenübertragungsstrecke 80 eignet sich auch besonders bei dieser Art Überladung, für einen Datenaustausch weiterer Daten und insbesondere für den Austausch, von auf dem Mähdrescher 120 ermittelten dem jeweiligen Inhalt des Korntanks 126 entsprechenden Erntegutparametern, wie zum Beispiel die Feuchte oder die Menge.

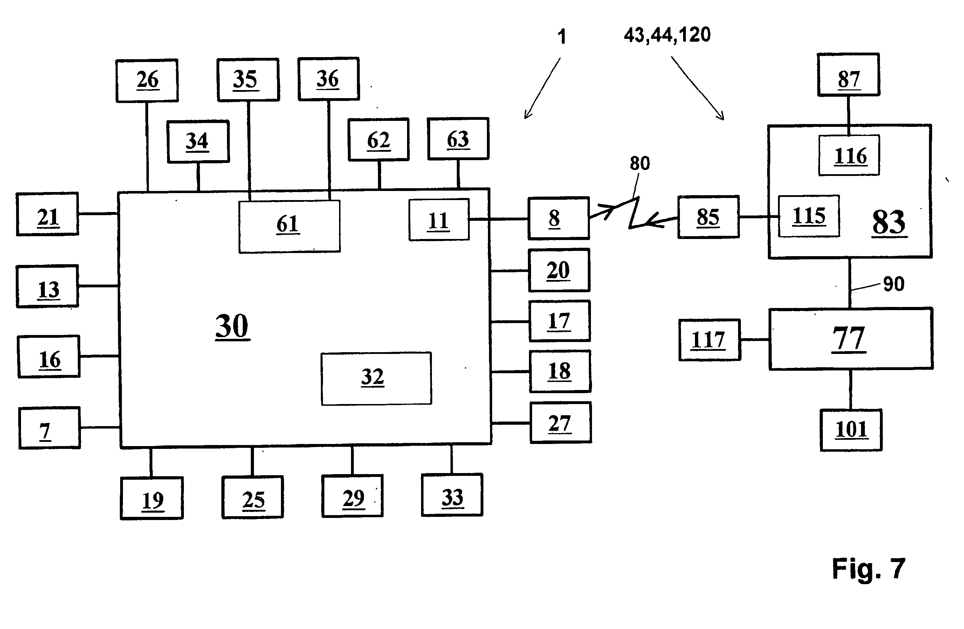

In Figur 7 wird ein Ausführungsbeispiel des schematischen Aufbaus der Vorrichtung zur Koordination von Fahrzeugen und der Steuerung der Überladeeinrichtung gezeigt. Eine Auswerteelektronik 30 ist in der Bedienerkonsole 14 in der Fahrerkabine des selbstfahrenden Erntefahrzeuges anbracht und beinhaltet beispielsweise auch eine Navigationseinrichtung 61 und eine Speichereinrichtung 32. Die Auswerteelektronik 30 ist zum Austausch von Daten oder Parametern mit den weiteren, elektrischen Einrichtungen oder Sensoren in dem Erntefahrzeug 1,120, mit Einrichtungen zur Ermittlung der Fahrgeschwindigkeit oder mit Einrichtungen zur Ermittlung von Parametern des Erntegutes, wie beispielsweise des Erntegutdurchsatzes, über eine Busanbindung 62 und gegebenenfalls mit einem Computersystem 63 verbunden. Aus den Signalen und Stellungen der Bedienelemente, wie beispielsweise dem Fußtaster 21, den Schaltern 13 an der Bedienerkonsole 14, den verschiedenen Bedienelementen an dem Multifunktionsgriff 7, erhält die Auswerteelektronik 30 Befehle zur Aktivierung von Einrichtungen oder zur manuellen Steuerung der Überladeeinrichtung 3. Eine Aktivierung und Bedienung der Vorrichtung kann ferner mittels eines Touchscreenmonitors 20 vorgenommen werden. Die Einstellungen und Vorgaben können ferner auf einem vorhandenen Monitors 20 beziehungsweise auf Anzeigeelementen 17 angezeigt werden. Findet eine Aktivierung oder Deaktivierung der Vorrichtung statt, so kann dies durch ein akustisches Signal, beispielsweise durch einen Summer 18, dem Fahrzeugbediener angezeigt werden. Das Drehelement 16 in der Fahrerkabine 4 dient beispielsweise zur variablen Vorgabe von Werten beispielsweise für eine Vorgabe eines Abstandes für eine Verschiebung der Position zur Vorgabe dieser Position für ein weiteres Fahrzeug 1,43,44,120. Die Korrektur des Windeinflusses kann auch, wenn vorhanden, aus den Signalen einer Windmesseinrichtung 26 abgeleitet werden.
Die Überladeweite ermittelt die Auswerteelektronik 30 in Verbindung mit den Signalen der Sensoren 19 und 25, zur Erfassung der Einstellparameter der Überladeeinrichtung 3, und weiteren gespeicherten Parametern des Erntefahrzeuges 1. Da die tatsächliche Überladeweite von den Parametern des geernteten Erntegutes 48,125 abhängig ist, können diese bei der Bestimmung einer Einstellung mit berücksichtigt werden, indem an die Auswerteelektronik 30 auch weitere Sensoren 33, wie beispielsweise ein Erntegutfeuchtesensor, angeschlossen werden.
Die relative Stellung der Überladeeinrichtung 3 zur Längsachse 56 der Erntemaschine 1, wird durch den Sensor 29 erfaßt und an die Auswerteelektronik 30 übermittelt. Dieser Sensor 29 dient bei der Steuerung beziehungsweise Regelung der Überladerichtung 64, mittels des Hydraulikantriebes 27, auch als Ist- Stellungsanzeiger. Die jeweilige Stellung der Überladeeinrichtung 3 kann auf einem Monitor 20, auf einer LCD- Anzeige 17 beziehungsweise auch auf einem Zeigerinstrument dem Fahrzeugbediener angezeigt werden.
Durch zumindest eine Navigationseinrichtung 61, wird die aktuelle Position des Erntefahrzeuges 1 auf dem Bearbeitungsfeld 40 ermittelt. Dafür wird an der Auswerteelektronik 30 beziehungsweise an die Navigationseinrichtung 61 mindestens eine GPS- Antenne 35 angeschlossen. Für eine optionale, zweite GPS- Antenne 36 steht dort eine weitere, entsprechende Anschlußmöglichkeit zur Verfügung. Der Auswerteelektronik 30 wird weiterhin eine Sende- und Empfangseinrichtung 11 als Schnittstelle und zur Steuerung einer Datenübertragungsstrecke 80 zu einer mobilen Einheit 83 auf einem weiteren Fahrzeug 43,44,120 auf dem Bearbeitungsfeld 40 zugeordnet. Somit können dann Informationen zwischen den Antennen 8 und 85 und insbesondere eine Position eines Fahrzeuges 1,43,44,120 an ein weiteres Fahrzeug 1,43,44,120 übertragen werden. Die mobile Einheit 83 beinhaltet selbst eine Sende- und Empfangseinrichtung 115 für die Steuerung des Datenaustausches, mittels der Datenübertragungsstrecke 80. Sie ist ferner mit einer Navigationseinrichtung 116 einschließlich einer GPS- Antenne 87 ausgestattet. Über zumindest eine Leitung 90, ist mobile Einheit 83 an weitere Einrichtungen in einem Fahrzeug 43, zur Energieversorgung und für eine Austausch von Daten, wie Positionen, Einstellungen und Parametern verbunden. Eine Einrichtung 77 ermöglicht diese Anbindung und verarbeitet ferner die empfangen Daten/ Position mit der von der mobilen Einheit 83 ermittelten Position, in entsprechende Signale für eine Anzeige auf einer Bedieneranzeige 101 und für die weiteren Verwendungen in weiteren Einrichtungen auf dem Fahrzeug 43,44,120, durch eine entsprechende Anbindung an ein Bussystem 117.
Anhand der jeweiligen aktuellen Position eines Fahrzeuges 1,43,44,120, kann relativ zu dem Bearbeitungsfeld 40 im Zusammenhang mit einer Bearbeitungsfeldkarte, das Fahrzeug 1,43,44,120 schematisch auf einem Monitor 20 oder Bedienerterminal 101 dargestellt werden. Für die Darstellung der Längsrichtung 56 des Erntefahrzeuges 1 in einem Bezugsystem, wird beispielsweise ein Kompaß 34 mit der Auswerteelektronik 30 verbunden. Dadurch kann in Verbindung mit der aktuellen Position des Erntefahrzeuges 1, die Längsachse 56 ermittelt und entsprechend dargestellt werden.

Die erfindungsgemäße Vorrichtung und das Verfahren beschränken sich nicht nur auf die näher dargestellten, landwirtschaftlichen Fahrzeuge 1,43,44,120, sondern kann, bei einer entsprechenden Ausstattung eines selbstfahrenden landwirtschaftlichen Fahrzeugs 1,43,44,120, auch für jede Art von Überladung von Erntegut 48,125 auf ein nachfolgenden Transportbehälter 47 angewendet werden. Die Vorrichtung und das Verfahren lassen sich auch dann zur Steuerung der Überladeeinrichtung anwenden, wenn ein Transportbehälter 47 direkt an einem selbstfahrenden Erntefahrzeug 1 angehängt oder in einer besonderen Ausgestaltung auch direkt auf dem selbstfahrenden Erntefahrzeug 1 aufgesattelt ist.

### Bezugszeichenliste:

- 1: Feldhäcksler
- 2: Erntegutaufnahmeeinrichtung
- 3: Überladeeinrichtung
- 4: Fahrerkabine
- 5: Sitz
- 6: Armlehne
- 7: Multifunktionsgriff
- 8: Antenne
- 9: Überladeklappe
- 10: vertikale Drehachse
- 11: Sende- und Empfangseinrichtung
- 12: Hydraulikzylinder
- 13: Bedienelemente
- 14: Bedienkonsole
- 15: horizontale Drehachse
- 16: Bedienelement
- 17: Anzeigeelement
- 18: Summer
- 19: Sensor
- 20: Monitor
- 21: Bedienelement
- 22: Bügel
- 23: Schalter
- 24: Hydraulikzylinder
- 25: Sensor
- 26: Windmesseinrichtung
- 27: Hydraulikantrieb
- 28: Zahnkranz
- 29: Sensor
- 30: Auswerteelektronik
- 31: Halter
- 32: Speichereinrichtung
- 33: Sensoren
- 34: Einrichtung
- 35: GPS- Antenne
- 36: GPS- Antenne
- 37: GPS- Antenne
- 38: GPS- Antenne
- 39: GPS- Antenne
- 40: Bearbeitungsfeld
- 41: Erntegut
- 42: Pickup- Einrichtung
- 43: Transportfahrzeug
- 44: Transportfahrzeug
- 45: Zugfahrzeug
- 46: Ernterichtung
- 47: Transportbehälter
- 48: Erntegut
- 49: abgespeicherte Positionen
- 50: abgespeicherte Positionen
- 51: Auftreffpunkt
- 52: Fahrspur
- 54: Erntegut
- 55: Bearbeitungsfeld
- 56: Längsachse Erntefahrzeug
- 60: Zugfahrzeug
- 61: Navigationseinrichtung
- 62: Busanbindung
- 63: Computersystem
- 64: Längsachse Überladeeinrichtung
- 65: Transportbehälterauflieger
- 70: Fahrspur
- 71: Einstellgrenze
- 72: Linie
- 75: Fahrspur
- 76: Einrichtung
- 77: Einrichtung
- 80: Datenübertragungsstrecke
- 81: Antenne
- 83: mobile Einheit
- 84: Datenübertragungsstrecke
- 85: Antenne
- 86: Datenübertragungsstrecke
- 87: GPS- Antenne
- 90: Leitungen
- 92: Kreis
- 93: Bedienerleiste
- 94: Bedienerleiste
- 95: Pfeil
- 96: Anzeige
- 97: Vorgabeposition
- 98: Kreissymbol
- 99: Punkt
- 100: Bedienerterminal
- 101: Bedieneranzeige
- 102: Pfeil
- 115: Sende- und Empfangseinrichtung
- 116: Navigationseinrichtung
- 117: Bussystem
- 119: Antenne
- 120: Mähdrescher
- 121: Schneidwerk
- 122: Getreide
- 124: Überladeeinrichtung
- 125: Erntegut
- 126: Korntank

## Patentansprüche

1. Vorrichtung zur Koordination und Einstellung von landwirtschaftlichen Fahrzeugen (1, 43, 44, 120), die sich auf einem gemeinsamen Bearbeitungsfeld (40, 55) befinden und insbesondere an selbstfahrenden landwirtschaftlichen Fahrzeugen (12, 43, 44, 120) zwischen denen Erntegut (48, 125) mittels zumindest einer wenigstens einem der Fahrzeuge (12, 43, 44, 120) zugeordneten Überladeeinrichtung (3) überladen wird, wobei zwischen den Fahrzeugen (1, 43, 44, 120) eine von der Vorrichtung umfasste Datenübertragungsstrecke (80, 84, 86) besteht und mindestens ein Fahrzeug (1, 43, 44, 120) mit mindestens einem von der Vorrichtung umfassten Navigationssystem (61, 116) ausgerüstet ist,
**dadurch gekennzeichnet, dass** die Vorrichtung derart ausgeführt ist, dass
das Navigationssystem (61, 116) die Position des Fahrzeugs (1, 43, 44, 120) ermittelt und zumindest diese Position mittels der Datenübertragungsstrecke (80, 84, 86) an wenigstens ein weiteres Fahrzeug (1, 43, 44, 120) übertragen wird und wobei zumindest einem Fahrzeug (1, 43, 44, 120) eine von der Vorrichtung umfasste Einrichtung (30, 76, 77) zugeordnet ist, mittels welcher der relative Abstand zwischen den Fahrzeugen (1, 43, 44, 120) ermittelt wird und das aus der Überladeeinrichtung (3) austretende Erntegut (48, 125) auf dem weiteren Fahrzeug (43, 44) in einem Auftreffpunkt (51, P) auftrifft, dessen Lage in Abhängigkeit von diesem relativen Abstand ermittelt wird.

2. Vorrichtung nach Anspruch 1,
**dadurch gekennzeichnet, daß**
auf mindestens einem Fahrzeug (1,43,44,120) eine Einrichtung (30,76,77) vorhanden ist, in welcher die von der Datenübertragungsstrecke (80,84,86) übermittelte Position eines weiteren Fahrzeuges (1,43,44,120) in Verbindung mit der Position des mit der Einrichtung (30,76,77) ausgestatteten Fahrzeuges (1,43,44,120) gebracht und wenigstens ein Signal zur Beeinflussung mindestens eines Parameters eines Fahrzeuges (1,43,44,120) erzeugt wird.

3. Vorrichtung nach mindestens einem der Ansprüche 1 oder 2,
**dadurch gekennzeichnet, daß**
auf mindestens einem Fahrzeug (1,43,44,120) eine Einrichtung (30,76,77) vorhanden ist, die aus der mittels der Datenübertragungsstrecke (80,84,86) übertragenen Position eines weiteren Fahrzeuges (1,43,44,120) in Verbindung mit der Position des mit der Einrichtung (30,76,77) ausgestatteten Fahrzeuges (1,43,44,120) eine Fahrzeugbedienerinformation ableitet und diese dem Fahrzeugbediener anzeigt.

4. Vorrichtung nach mindestens einem der Ansprüche 1 bis 3,
**dadurch gekennzeichnet, daß**
auf mindestens einem Fahrzeug (1,34,44,120), vorzugsweise auf einem selbstfahrenden Erntefahrzeug (1,120) eine Speichereinrichtung (32) vorhanden ist, in welche zumindest die aktuelle Position des Erntefahrzeuges (1,120) beziehungsweise mindestens eine Position des Transportfahrzeuges (43,44) abgespeichert werden kann.

5. Vorrichtung nach mindestens einem der Ansprüche 1 bis 4,
**dadurch gekennzeichnet, daß**
auf mindestens einem Fahrzeug (1,43,44,120) eine Einrichtung zur automatischen Einwirkung auf die Fahrrichtung beziehungsweise die Fahrgeschwindigkeit in Abhängigkeit der von der Datenübertragungsstrecke (80,84,86) übertragen Information vorhanden ist.

6. Vorrichtung nach mindestens einem der Ansprüche 1 bis 5,
**dadurch gekennzeichnet,daß**
auf mindestens einem Fahrzeug (1,43,44,120), vorzugsweise auf einem selbstfahrenden Erntefahrzeug (1,120) eine Einrichtung (7,13,16) vorhanden ist, mittels welcher die Steuerung zur Koordination von mindestens einem weiteren Fahrzeug (1,43,44,120) vorgenommen werden kann.

7. Vorrichtung nach mindestens einem der Ansprüche 1 bis 6,
**dadurch gekennzeichnet, daß**
auf mindestens einem Fahrzeug (1,43,44,120) mindestens eine Einrichtung (30,76,77) vorhanden ist, die aus den jeweiligen, navigierten Positionen den relativen Abstand zwischen mindestens zwei Positionen zweier Fahrzeuge (1,43,44,120) ermittelt.

8. Vorrichtung nach mindestens einem der Ansprüche 1 bis 7,
**dadurch gekennzeichnet, daß**
auf mindestens einem Fahrzeug (1,43,44,120) mindestens eine Einrichtung (30,76,77) vorhanden ist, die aus dem ermittelten, relativen Abstand zu einem weiteren Fahrzeug (1,43,44,120) ein Steuersignal generiert, um den relative Abstand der Positionen zwischen zumindest den beiden Fahrzeugen (1,43,44,120) zu steuern.

9. Vorrichtung nach mindestens einem der Ansprüche 1 bis 8,
**dadurch gekennzeichnet, daß**
auf mindestens einem Fahrzeug (1,43,44,120) eine Einrichtung (30,76,77) vorhanden ist, die zumindest bei der Ermittlung der Vorgabe einer Position für wenigstens ein weiteres Fahrzeug (1,43,44,120), zumindest die aktuelle Position des Erntefahrzeuges (1,120) und wenigstes einen Einstellparameter der Übergabeeinrichtung (3) berücksichtigt.

10. Vorrichtung nach mindestens einem der Ansprüche 1 bis 9,
**dadurch gekennzeichnet, daß**
auf mindestens einem Fahrzeug (1,43,44,120) eine Einrichtung (30,76,77) vorhanden ist, die zumindest aus der aktuellen Position des Erntefahrzeuges (1,120) und zumindest aus der aktuellen Position eines Transportfahrzeuges (43,44) eine Einstellung der Überladeeinrichtung (3) berechnet und ein entsprechendes Signal zur Einstellung derselben generiert.

11. Vorrichtung nach mindestens einem der Ansprüche 1 bis 10,
**dadurch gekennzeichnet, daß**
wenigstens eine Einrichtung (30,76,77) mit mindestens einem Mittel (13,16,26,33,93,94,100,101) in Verbindung steht, welches mindestens einen Parameter des Ernteprozesses, wie beispielsweise die Erntegutart oder den Windeinfluß beziehungsweise mindestens einen Parameter eines Fahrzeuges (1,43,44,120), wie beispielsweise die Transportbehälterabmessungen oder die Fahrzeugabmessungen, erfasst.

12. Vorrichtung nach mindestens einem der Ansprüche 1 bis 11,
**dadurch gekennzeichnet, daß**
auf dem Erntefahrzeug (1,120) mindestens eine Navigationsantenne (35) direkt auf beziehungsweise zumindest in der Nähe der vertikalen Drehachse (10) der Überladeeinrichtung (3,124) angebracht ist.

13. Vorrichtung nach mindestens einem der Ansprüche 1 bis 12,
**dadurch gekennzeichnet, daß**
mindestens eine Navigationsantenne (36,119) auf dem Erntefahrzeug (1,120) an der Überladeeinrichtung (3,124) angebracht ist.

14. Vorrichtung nach mindestens einem der Ansprüche 1 bis 13,
**dadurch gekennzeichnet, daß**
auf mindestens einem Transportfahrzeug (43,44) mindestens eine Navigationsantenne (38,39) an dem Transportbehälter (47,65) angebracht ist.

15. Vorrichtung nach mindestens einem der Ansprüche 1 bis 14,
**dadurch gekennzeichnet, daß**
zumindest ein Navigationssystem (116) und die Einrichtung zur Datenübertragungsstrecke (115) als eine mobile Einheit (83) ausgebildet ist.

16. Vorrichtung nach mindestens einem der Ansprüche 1 bis 15,
**dadurch gekennzeichnet, daß**
zumindest auf einem weiteren Fahrzeug (43,44) eine Betätigungseinrichtung zur manuellen Steuerung der Einstellung der Überladeeinrichtung (3) mittels der Datenübertragungsstrecke (80,84,86) in Verbindung steht.

17. Vorrichtung nach mindestens einem der Ansprüche 1 bis 16,
**dadurch gekennzeichnet, daß**
auf mindestens einem Fahrzeug (1,43,44,120), vorzugsweise auf einem selbstfahrenden Erntefahrzeug (1,120), eine Einrichtung (30,63,76,77) vorhanden ist, die mit einer Bearbeitungsfeldkarte des momentanen Bearbeitungsfeldes (40,55) in Verbindung steht.

18. Vorrichtung nach mindestens einem der Ansprüche 1 bis 17,
**dadurch gekennzeichnet, daß**
auf mindestens einem Fahrzeug (1,43,44,120), vorzugsweise auf einem selbstfahrenden Erntefahrzeug (1,120), eine Anzeigeeinrichtung (17,20,100,101) vorhanden ist, auf welcher die jeweilige, eigene Position und die Position eines weiteren Fahrzeuges (43,44) in Verbindung mit zumindest einem Teil der Bearbeitungsfeldkarte angezeigt wird.

19. Vorrichtung nach mindestens einem der Ansprüche 1 bis 18,
**dadurch gekennzeichnet, daß**
die Anzeigeeinrichtung (20,100,101) ein Touchscreenmonitor ist, mittels welchem der Fahrzeugbediener des Erntefahrzeuges (1,120) beispielsweise ein angezeigtes Transportfahrzeug (43,44) zur Befüllung mit Erntegut (48,125) auswählen kann.

20. Vorrichtung nach mindestens einem der Ansprüche 1 bis 19,
**dadurch gekennzeichnet, daß**
wenigstens eine Einrichtung (30,76,77) auf einem Fahrzeug (1,43,44,120) zusätzlich mit mindestens einem Mittel zur Ermittlung von fahrzeugspezifischen Größen, wie beispielsweise die Fahrgeschwindigkeit, die Zuladung oder die Ertragsmenge beziehungsweise zur Ermittlung von Sicherheitsgrößen, wie beispielsweise den relativen Mindestabstand, in Verbindung steht.

21. Verfahren zur Koordination und Einstellung von landwirtschaftlichen Fahrzeugen (1, 43, 44, 120), die sich auf einem gemeinsamen Bearbeitungsfeld (40, 55) befinden und insbesondere an selbstfahrenden landwirtschaftlichen Fahrzeugen (12, 43, 44, 120) zwischen denen Erntegut (48, 125) mittels zumindest einer wenigstens einem der Fahrzeuge (12, 43,44,120) zugeordneten Überladeeinrichtung (3) überladen wird, wobei zwischen den Fahrzeugen (1, 43, 44, 120) eine Datenübertragungsstrecke (80, 84, 86) besteht und mindestens ein Fahrzeug (1, 43, 44, 120) mit mindestens einem Navigationssystem (61, 116) ausgerüstet ist,
**dadurch gekennzeichnet, dass**
die Position eines Fahrzeugs (1, 43, 44, 120) ermittelt und an mindestens ein weiteres Fahrzeug (1, 43, 44, 120) übertragen wird und wobei zumindest einem Fahrzeug (1, 43, 44, 120) eine Einrichtung (30, 76, 77) zugeordnet ist, mittels welcher der relative Abstand zwischen den Fahrzeugen (1, 43, 44, 120) ermittelt wird und das aus der Überladeeinrichtung (3) austretende Erntegut (48, 125) auf dem weiteren Fahrzeug (43, 44) in einem Auftreffpunkt (51, P) auftrifft, dessen Lage in Abhängigkeit von diesem relativen Abstand ermittelt wird.

22. Verfahren nach Anspruch 21,
**dadurch gekennzeichnet, daß**
zumindest während dem Überladen von Erntegut (48,125) von einem Erntefahrzeug (1,120) auf ein Transportfahrzeug (43,44), mindestens jeweils eine Position eines Fahrzeuges (1,43,44,120) ermittelt und zumindest eine Position an mindestens ein weiteres Fahrzeug (1,43,44,120) übermittelt wird.

23. Verfahren nach mindestens einem der Ansprüche 21 oder 22,
**dadurch gekennzeichnet, daß**
die jeweilige aktuelle Position von mindestens einem Fahrzeug (1,43,44,120) auf dem Bearbeitungsfeld (40,55) in mindestens einer Speichereinrichtung (32) auf mindestens einem Fahrzeug (1,43,44,120) abgespeichert und aus den abgespeicherten Positionen (49,50) eine Fahrspur (52,70,75) für zumindest eines der Fahrzeuge (1,43,44,120) berechnet wird.

24. Verfahren nach mindestens einem der Ansprüche 21 bis 23,
**dadurch gekennzeichnet, daß**
zumindest aus einer Position des Erntefahrzeuges (1,120) und aus der Einstellung der Überladeeinrichtung (3) wenigstens eine Positionsvorgabe (97,98) für mindestens ein Transportfahrzeug (43,44) berechnet und entsprechend als Vorgabe verwendet wird.

25. Verfahren nach mindestens einem der Ansprüche 21 bis 24,
**dadurch gekennzeichnet, daß**
zumindest aus einer Position des Erntefahrzeuges (1,120) und aus zumindest einer Position eines Transportfahrzeuges (43,44) wenigstens die Einstellung der Überladeeinrichtung (3) berechnet und zur entsprechenden Einstellung verwendet wird.

26. Verfahren nach mindestens einem der Ansprüche 21 bis 25,
**dadurch gekennzeichnet ,daß**
zumindest aus einer Position des Erntefahrzeuges (1,120) und aus zumindest einer Position eines Transportfahrzeuges (43,44) und aus der Einstellung der Überladeeinrichtung (3) wenigstens eine Vorgabe für die Einstellung der Überladeeinrichtung (3) und/oder eine Positionsvorgabe (97,98) für mindestens ein Transportfahrzeug (43,44) berechnet und entsprechend zur Einstellung beziehungsweise als Vorgabe verwendet wird.

27. Verfahren nach mindestens einem der Ansprüche 24 bis 26,
**dadurch gekennzeichnet, daß**
wenigstens eine berechnete Einstellung beziehungsweise Vorgabe beim Vorhandensein von mindestens einen auf den Überladeprozeß einflußnehmenden Parameter, die berechnete Einstellung beziehungsweise Vorgabe entsprechend korrigiert und erst dann entsprechend an mindestens einem Fahrzeug (1,43,44,120) eingestellt oder an mindestens ein Fahrzeug (1,43,44,120) übertragen wird.

28. Verfahren nach mindestens einem der Ansprüche 21 bis 27,
**dadurch gekennzeichnet, daß**
die Position mindestens einer Transportbehälterwand aus der Position der Navigationsantenne (37) am Transportfahrzeug (43,44), der Fahrtrichtung und den bekannten Abmessungen des Transportfahrzeuges (43,44) berechnet wird.

29. Verfahren nach mindestens einem der Ansprüche 21 bis 28,
**dadurch gekennzeichnet, daß**
für eine automatisierte Koordination von wenigstens zwei Fahrzeugen (1,43,44,120), zuvor die jeweiligen Fahrzeuge (1,43,44,120) manuell in die gewünschte relative Position zueinander gebracht und der dann aktuelle relative Abstand auf einen Befehl hin, als relativer Sollabstand von einer Einrichtung (30,76,77) für die folgende automatische Koordination übernommen wird.

30. Verfahren nach mindestens einem der Ansprüche 21 bis 29,
**dadurch gekennzeichnet, daß**
der theoretische Auftreffpunkt (51) aus den Abmessungen und der aktuellen Einstellung der Überladeeinrichtung (3), aus mindestens einer Position und der Ausrichtung der Erntemaschine (1,120) und bei dem Vorhandensein von mindestens einen, auf den Überladeprozeß einflußnehmenden Parameter, wie beispielsweise Wind oder eine Fahrzeugneigung, auch unter Einbeziehung dieses Einlußes berechnet wird.

31. Verfahren nach mindestens einem der Ansprüche 21 bis 30,
**dadurch gekennzeichnet,daß**
ein theoretischer Auftreffpunkt (51) des Erntegutes (48,125) auf den Transportbehälter (47,65) berechnet, mit mindestens einer Position des Transportfahrzeuges (43,44) und den entsprechenden Abmessungen des Transportbehälters (47,65) verglichen und zumindest dann eine Warnmeldung erzeugt wird, wenn der theoretische Auftreffpunkt (51) außerhalb des Transportbehälters liegt.

32. Verfahren nach mindestens einem der Ansprüche 21 bis 31,
**dadurch gekennzeichnet, daß**
eine von einem Fahrzeugbediener beabsichtigte, manuelle Verstellung der Einstellung der Überladeeinrichtung (3) beziehungsweise die Vorgabe zumindest einer Position an ein weiteres Fahrzeug (1,43,44,120) dann unterbunden wird, wenn diese zu einem theoretischen Auftreffpunkt (51) des Erntegutes (48,125) außerhalb des Transportbehälters (47,65) führen würde.

33. Verfahren nach mindestens einem der Ansprüche 21 bis 32,
**dadurch gekennzeichnet, daß**
bei einer von einem Fahrzeugbediener beabsichtigten, manuellen Veränderung des Auftreffpunktes (51) des Erntegutes (48,125) auf den Transportbehälter (47,65), bei der Überschreitung mindestens eines vorgegebenen Arbeitsbereiches (71,72) der Überladeeinrichtung (3), die relative Position des Transportfahrzeuges (43,44) derart verändert wird, daß sich die von dem Fahrzeugbediener beabsichtigte, manuelle Veränderung des Auftreffpunktes (51) einstellt.

## Claims

1. Apparatus for the co-ordination and adjustment of agricultural vehicles (1, 43, 44, 120) which are on the same working field (40, 55) and in particular on self-propelled agricultural vehicles (12, 43, 44, 120) between which crop material (48, 125) is transferred by means of at least one transfer device (3) associated with at least one of the vehicles (12, 43, 44,120), wherein there is a data transmission section (80, 84, 86) embraced by the apparatus between the vehicles (1, 43, 44, 120) and at least one vehicle (1, 43, 44, 120) is equipped with at least one navigation system (61, 116) embraced by the apparatus, **characterised in that** the apparatus is so designed that the navigation system (61, 116) determines the position of the vehicle (1, 43, 44, 120) and at least said position is transmitted by means of the data transmission section (80, 84, 86) to at least one further vehicle (1, 43, 44, 120) and wherein there is associated at least with one vehicle (1, 43, 44, 120) a device (30, 76, 77) which is embraced by the apparatus and by means of which the relative distance between the vehicles (1, 43, 44, 120) is determined and the crop material (48, 125) issuing from the transfer device (3) impinges on the further vehicle (43, 44) at an impingement point (51, P) whose position is determined in dependence on said relative distance.

2. Apparatus according to claim 1 **characterised in that** provided on at least one vehicle (1, 43, 44, 120) is a device (30, 76, 77) in which the position of a further vehicle (1, 43, 44, 120), which is communicated by the data transmission section (80, 84, 86), is related to the position of the vehicle (1, 43, 44, 120) equipped with the device (30, 76, 77) and at least one signal is produced for influencing at least one parameter of a vehicle (1, 43, 44, 120).

3. Apparatus according to at least one of claims 1 and 2 **characterised in that** provided on at least one vehicle (1, 43, 44, 120) is a device (30, 76, 77) which derives an item of vehicle operator information from the position of a further vehicle (1, 43, 44, 120) which is transmitted by means of the data transmission section (80, 84, 86), in conjunction with the position of the vehicle (1, 43, 44, 120) equipped with the device (30, 76, 77) and displays said item of vehicle operator information to the vehicle operator.

4. Apparatus according to at least one of claims 1 to 3 **characterised in that** provided on at least one vehicle (1, 43, 44, 120), preferably on a self-propelled harvester vehicle (1, 120), is a storage device (32) in which at least the current position of the harvester vehicle (1, 120) or at least one position of the transport vehicle (43, 44) can be stored.

5. Apparatus according to at least one of claims 1 to 4 **characterised in that** provided on at least one vehicle (1, 43, 44, 120) is a device for automatically acting on the direction of travel or the speed of travel in dependence on the information transmitted by the data transmission section (80, 84, 86).

6. Apparatus according to at least one of claims 1 to 5 **characterised in that** provided on at least one vehicle (1, 43, 44, 120), preferably on a self-propelled harvester vehicle (1, 120), is a device (7, 13, 16), by means of which control can be effected for the co-ordination of at least one further vehicle (1, 43, 44, 120).

7. Apparatus according to at least one of claims 1 to 6 **characterised in that** provided on at least one vehicle (1, 43, 44, 120) is at least one device (30, 77, 77) which, from the respective navigated positions, determines the relative distance between at least two positions of two vehicles (1, 43, 44, 120).

8. Apparatus according to at least one of claims 1 to 7 **characterised in that** provided on at least one vehicle (1, 43, 44, 120) is at least one device (30, 76, 77) which generates a control signal from the determined relative distance with respect to a further vehicle (1, 43, 44, 120) in order to control the relative distance of the positions between at least the two vehicles (1, 43, 44, 120).

9. Apparatus according to at least one of claims 1 to 8 **characterised in that** provided on at least one vehicle (1, 43, 44, 120) is a device (30, 76, 77) which, at least when determining the presetting of a position for at least one further vehicle (1, 43, 44, 120), takes into account at least the current position of the harvester vehicle (1, 120) and at least one adjustment parameter of the transfer device (3).

10. Apparatus according to at least one of claims 1 to 9 **characterised in that** provided on at least one vehicle (1, 43, 44, 120) is a device (30, 76, 77) which calculates a setting of the transfer device (3) at least from the current position of the harvester vehicle (1, 120) and at least from the current position of a transport vehicle (43, 44) and generates a corresponding signal for adjustment of the transfer device.

11. Apparatus according to at least one of claims 1 to 10 **characterised in that** at least one device (30, 76, 77) is connected to at least one means (13, 16, 26, 33, 93, 94, 100, 101) which detects at least one parameter of the harvesting process such as for example the kind of crop material or the wind influence or at least one parameter of a vehicle (1, 43, 44, 120) such as for example the transport container dimensions or the vehicle dimensions.

12. Apparatus according to at least one of claims 1 to 11 **characterised in that** at least one navigation antenna (35) is mounted on the harvester vehicle (1, 120) directly on or at least in the proximity of the vertical axis of rotation (10) of the transfer device (3,124).

13. Apparatus according to at least one of claims 1 to 12 **characterised in that** at least one navigation antenna (36, 119) is mounted on the harvester vehicle (1, 120) at the transfer device (3, 124).

14. Apparatus according to at least one of claims 1 to 13 **characterised in that** at least one navigation antenna (38, 39) is mounted on at least one transport vehicle (43, 44) at the transport container (47, 65).

15. Apparatus according to at least one of claims 1 to 14 **characterised in that** at least one navigation system (116) and the device to the data transmission section (115) is in the form of a mobile unit (83).

16. Apparatus according to at least one of claims 1 to 15 **characterised in that** at least on a further vehicle (43, 44) an actuating device is connected for manual control of the setting of the transfer device (3) by means of the data transmission section (80, 84, 86).

17. Apparatus according to at least one of claims 1 to 16 **characterised in that** provided on at least one vehicle (1, 43, 44, 120), preferably on a self-propelled harvester vehicle (1, 120), is a device (30, 63, 76, 77) which is connected to a working field map of the current working field (40, 55).

18. Apparatus according to at least one of claims 1 to 17 **characterised in that** provided on at least one vehicle (1, 43, 44, 120), preferably on a self-propelled harvester vehicle (1, 120) is a display device (17, 20,100, 101) on which the respective position of that vehicle and the position of a further vehicle (43, 44) are displayed in conjunction with at least a part of the working field map.

19. Apparatus according to at least one of claims 1 to 18 **characterised in that** the display device (20, 100, 101) is a touch screen monitor by means of which the vehicle operator of the harvester vehicle (1, 120) can for example select a displayed transport vehicle (43, 44) for filling with crop material 948, 125).

20. Apparatus according to at least one of claims 1 to 19 **characterised in that** at least one device (30, 76, 77) on a vehicle (1, 43, 44, 120) is additionally connected to at least one means for determining vehicle-specific parameters such as for example the vehicle speed, the useful load or the crop amount or for determining safety parameters such as for example the relative minimum spacing.

21. Method of the co-ordination and adjustment of agricultural vehicles (1, 43, 44, 120) which are on the same working field (40, 55) and in particular on self-propelled agricultural vehicles (12, 43, 44, 120) between which crop material (48, 125) is transferred by means of at least one transfer device (3) associated with at least one of the vehicles (12, 43, 44, 120), wherein there is a data transmission section (80, 84, 86) between the vehicles (1, 43, 44, 120) and at least one vehicle (1, 43, 44, 120) is equipped with at least one navigation system (61, 116), **characterised in that** the position of the vehicle (1, 43, 44, 120) is determined and is transmitted to at least one further vehicle (1, 43, 44, 120) and wherein there is associated at least with one vehicle (1, 43, 44, 120) a device (30, 76, 77) by means of which the relative distance between the vehicles (1, 43, 44, 120) is determined and the crop material (48, 125) issuing from the transfer device (3) impinges on the further vehicle (43, 44) at an impingement point (51, P) whose position is determined in dependence on said relative distance.

22. A method according to claim 21 **characterised in that** at least during the transfer of crop material (48, 125) from a harvester vehicle (1, 120) on to a transport vehicle (43, 44) at least one respective position of a vehicle (1, 43, 44, 120) is determined and at least one position is communicated to at least one further vehicle (1, 43, 44, 120).

23. A method according to at least one of claims 21 and 22 **characterised in that** the respective current position of at least one vehicle (1, 43, 44, 120) on the working field is stored in at least one storage device (32) on at least one vehicle (1, 43, 44, 120) and a travel track (52, 70, 75) for at least one of the vehicles (1, 43, 44, 120) is calculated from the stored positions (49, 50).

24. A method according to at least one of claims 21 to 23 **characterised in that** at least one position presetting (97, 98) for at least one transport vehicle (43, 44) is calculated at least from a position of the harvester vehicle (1, 120) and from the setting of the transfer device (3) and is correspondingly used as a presetting parameter.

25. A method according to at least one of claims 21 to 24 **characterised in that** at least the setting of the transfer device (3) is calculated at least from a position of the harvester vehicle (1, 120) and from at least one position of a transport vehicle (43, 44) and is used for corresponding adjustment.

26. A method according to at least one of claims 21 to 25 **characterised in that** at least one presetting parameter for the setting of the transfer device (3) and/or a position presetting (97, 98) for at least one transport vehicle (43, 44) is calculated at least from a position of the harvester vehicle (1, 120) and from at least one position of a transport vehicle (43, 44) and from the setting of the transfer device (3) and is used correspondingly for adjustment or as a presetting parameter respectively.

27. A method according to at least one of claims 24 to 26 **characterised in that** at least one calculated setting or presetting parameter in the presence of at least one parameter influencing the transfer process suitably corrects the calculated setting or presetting parameter and is only then correspondingly adjusted at at least one vehicle (1, 43, 44, 120) or transmitted to at least one vehicle (1, 43, 44, 120).

28. A method according to at least one of claims 21 to 27 **characterised in that** the position at least of a transport container wall is calculated from the position of the navigation antenna (37) on the transport vehicle (43, 44), the direction of travel and the known dimensions of the transport vehicle (43, 44).

29. A method according to at least one of claims 21 to 28 **characterised in that** for automated co-ordination of at least two vehicles (1, 43, 44, 120), firstly the respective vehicles (1, 43, 44, 120) are manually brought into the desired relative position with respect to each other and the then current relative distance is adopted in response to a command as a relative reference distance by a device (30, 76, 77) for following automatic co-ordination.

30. A method according to at least one of claims 21 to 29 **characterised in that** the theoretical impingement point (51) is calculated from the dimensions and the current setting of the transfer device (3), from at least one position and the orientation of the harvester (1, 120) and in the presence of at least one parameter influencing the transfer process such as for example wind or vehicle inclination, also with the incorporation of said influence.

31. A method according to at least one of claims 21 to 30 **characterised in that** a theoretical impingement point (51) of the crop material (48, 125) on the transport container (47, 65) is calculated, compared to at least one position of the transport vehicle (43, 44) and the corresponding dimensions of the transport container (47, 65) and a warning message is produced at least when the theoretical impingement point (51) is outside the transport container.

32. A method according to at least one of claims 21 to 33 **characterised in that** manual adjustment, intended by a vehicle operator, of the setting of the transfer device (3) or the presetting at least of a position to a further vehicle (1, 43, 44, 120) is prevented when that would result in a theoretical impingement point (51) of the crop material (48, 25) outside the transport container (47, 65).

33. A method according to at least one of claims 21 to 32 **characterised in that** in the case of a manual change, intended by a vehicle operator, of the impingement point (51) of the crop material (48, 125) on the transport container (47, 65), when at least a predetermined working range (71, 72) of the transfer device (3) is exceeded, the relative position of the transport vehicle (43, 44) is altered in such a way that the manual change in the impingement point (51), which is intended by the vehicle operator, occurs.

## Revendications

1. Dispositif pour la coordination et le positionnement de véhicules agricoles (1, 43, 44, 120) qui se trouvent dans un même champ à récolter et, en particulier, de véhicules agricoles automoteurs (12, 43, '44, 120) entre lesquels du produit récolté (48, 125) est transféré au moyen d'au moins un dispositif de transfert (3) associé à au moins un des véhicules (12, 43, 44, 120), entre les véhicules (1, 43, 44, 120) existant un trajet de transmission de données (80, 84, 86) inclus dans le dispositif, et au moins un véhicule (1, 43, 44, 120) étant doté d'au moins un système de navigation (61, 116) inclus dans le dispositif, **caractérisé en ce que** le dispositif est conçu de façon que le système de navigation (61, 116) détermine la position du véhicule (1, 43, 44, 120) et qu'au moins cette position soit transmise au moyen du trajet de transmission de données (80, 84, 86) à au moins un autre véhicule (1, 43, 44, 120), à au moins un véhicule (1, 43, 44, 120) étant affecté un équipement (30, 76, 77) qui est inclus dans le dispositif et au moyen duquel la distance relative entre les véhicules (1, 43, 44, 120) est déterminée et le produit récolté (48, 125) sortant du dispositif de transfert (3) arrivant dans l'autre véhicule (43, 44) en un point de chute (51, P) dont la position est déterminée en fonction de cette distance relative.

2. Dispositif selon la revendication 1, **caractérisé en ce que** sur au moins un véhicule (1, 43, 44, 120) est prévu un équipement (30, 76, 77) dans lequel la position d'un autre véhicule (1, 43, 44, 120) transmise par le trajet de transmission de données (80, 84, 86) est mise en relation avec la position du véhicule (1, 43, 44, 120) doté de l'équipement (30, 76, 77), et au moins un signal influant sur au moins un paramètre d'un véhicule (1, 43, 44, 120) est produit.

3. Dispositif selon au moins une des revendications 1 ou 2, **caractérisé en ce que** sur au moins un véhicule (1, 43, 44, 120) est prévu un équipement (30, 76, 77) qui, de la position d'un autre véhicule (1, 43, 44, 120) transmise au moyen du trajet de transmission de données (80, 84, 86), déduit, en relation avec la position du véhicule (1, 43, 44, 120) doté de l'équipement (30, 76, 77), une information utilisateur et fournit celle-ci au chauffeur.

4. Dispositif selon au moins une des revendications 1 à 3, **caractérisé en ce que** sur au moins un véhicule (1, 43, 44, 120), de préférence sur un véhicule de récolte automoteur (1, 120), est prévu un dispositif de mémoire (32) dans lequel au moins la position instantanée du véhicule de récolte (1, 120), respectivement au moins une position du véhicule de transport (43, 44) peut être mémorisée.

5. Dispositif selon au moins une des revendications 1 à 4, **caractérisé en ce que** sur au moins un véhicule (1, 43, 44, 120) est prévu un dispositif pour agir automatiquement sur la direction de déplacement, respectivement sur la vitesse de déplacement en fonction de l'information transmise par le trajet de transmission de données (80, 84, 86).

6. Dispositif selon au moins une des revendications 1 à 5, **caractérisé en ce que** sur au moins un véhicule (1, 43, 44, 120), de préférence sur un véhicule de récolte automoteur (1, 120), est prévu un équipement (7, 13, 16) permettant de commander la coordination avec' au moins un autre véhicule (1, 43, 44, 120).

7. Dispositif selon au moins une des revendications 1 à 6, **caractérisé en ce que** sur au moins un véhicule (1, 43, 44, 120) est prévu au moins un équipement (30, 76, 77) qui, à partir des positions de navigation respectives, détermine la distance relative entre au moins deux positions de deux véhicules (1, 43, 44, 120) .

8. Dispositif selon au moins une des revendications 1 à 7, **caractérisé en ce que** sur au moins un véhicule (1, 43, 44, 120) est prévu au moins un équipement (30, 76, 77) qui, à partir de la distance relative déterminée à un autre véhicule (1, 43, 44, 120), génère un signal pour régler la distance relative des positions entre au moins les deux véhicules (1, 43, 44, 120).

9. Dispositif selon au moins une des revendications 1 à 8, **caractérisé en ce que** sur au moins un véhicule (1, 43, 44, 120) est prévu un équipement (30, 76, 77) qui, au moins lorsque l'affectation d'une position à au moins un autre véhicule (1, 43, 44, 120) est déterminée, tient compte au moins de la position instantanée du véhicule de récolte (1, 120) et d'au moins un paramètre de positionnement du dispositif de transfert (3).

10. Dispositif selon au moins une des revendications 1 à 9, **caractérisé en ce que** sur au moins un véhicule (1, 43, 44, 120) est prévu un équipement (30, 76, 77) qui, au moins à partir de la position instantanée du véhicule de récolte (1, 120) et au moins à partir de la position instantanée d'un véhicule de transport (43, 44), calcule un positionnement du dispositif de transfert (3) et génère un signal correspondant pour positionner celui-ci.

11. Dispositif selon au moins une des revendications 1 à 10, **caractérisé en ce qu'**au moins un équipement (30, 76, 77) est en relation avec au moins un moyen (13, 16, 26, 33, 93, 94, 100, 101) qui enregistre au moins un paramètre du processus de récolte, comme par exemple le type de produit récolté ou l'influence du vent, respectivement au moins un paramètre d'un véhicule (1, 43, 44, 120), comme par exemple les dimensions du conteneur de transport ou les dimensions du véhicule.

12. Dispositif selon au moins une des revendications 1 à 11, **caractérisé en ce que**, sur le véhicule de récolte (1, 120), au moins une antenne de navigation (35) est disposée directement sur l'axe de rotation vertical (10) du dispositif de transfert (3, 124), respectivement au moins à proximité de celui-ci.

13. Dispositif selon au moins une des revendications 1 à 12, **caractérisé en ce que**, sur le véhicule de récolte (1, 120), au moins une antenne de navigation (36, 119) est disposée sur le dispositif de transfert (3, 124) .

14. Dispositif selon au moins une des revendications 1 à 13, **caractérisé en ce que**, sur au moins un véhicule de transport (43, 44), au moins une antenne de navigation (38, 39) est disposée sur le conteneur de transport (47, 65).

15. Dispositif selon au moins une des revendications 1 à 14, **caractérisé en ce qu'**au moins un système de navigation (116) et le dispositif produisant le trajet de transmission de données (115) sont conformés en module mobile (83).

16. Dispositif selon au moins une des revendications 1 à 15, **caractérisé en ce qu'**au moyen du trajet de transmission de données (80, 84, 86) une liaison est également établie avec un dispositif d'actionnement destiné à commander manuellement le positionnement du dispositif de transfert (3) et disposé au moins sur un autre véhicule (43, 44).

17. Dispositif selon au moins une des revendications 1 à 16, **caractérisé en ce que** sur au moins un véhicule (1, 43, 44, 120), de préférence sur un véhicule de récolte automoteur (1, 120), est disposé un équipement (30, 63, 76, 77) qui est en relation avec une carte de champ récolté du champ récolté à cet instant (40, 55).

18. Dispositif selon au moins une des revendications 1 à 17, **caractérisé en ce que** sur au moins un véhicule (1, 43, 44, 120), de préférence sur un véhicule de récolte automoteur (1, 120), est disposé un dispositif d'affichage (17, 20, 100, 101) sur lequel la position propre respective et la position d'un autre véhicule (43, 44) sont affichées en relation avec au moins une partie de la carte de champ récolté.

19. Dispositif selon au moins une des revendications 1 à 18, **caractérisé en ce que** le dispositif d'affichage (20, 100, 101) est un moniteur à écran tactile qui permet au chauffeur du véhicule de récolte (1, 120) de sélectionner par exemple un véhicule de transport affiché (43, 44) pour y charger le produit récolté (48, 125) .

20. Dispositif selon au moins une des revendications 1 à 19, **caractérisé en ce qu'**au moins un équipement (30, 76, 77) sur un véhicule (1, 43, 44, 120) est en plus en relation avec au moins un moyen pour déterminer des grandeurs spécifiques au véhicule, comme par exemple la vitesse de déplacement, la charge utile ou le rendement, respectivement pour déterminer des grandeurs de sécurité comme par exemple la distance relative minimale.

21. Procédé pour la coordination et le positionnement de véhicules agricoles (1, 43, 44, 120) qui se trouvent dans un même champ à récolter et, en particulier, de véhicules agricoles automoteurs (12, 43, 44, 120) entre lesquels du produit récolté (48, 125) est transféré au moyen d'au moins un dispositif de transfert (3) associé à au moins un des véhicules (12, 43, 44, 120), entre les véhicules (1, 43, 44, 120) existant un trajet de transmission de données (80, 84, 86), et au moins un véhicule (1, 43, 44, 120) étant doté d'au moins un système de navigation (61, 116), **caractérisé en ce que** la position d'un véhicule (1, 43, 44, 120) est déterminée et transmise à au moins un autre véhicule (1, 43, 44, 120), au moins à un véhicule (1, 43, 44, 120) étant associé un équipement (30, 76, 77) au moyen duquel la distance relative entre les véhicules (1, 43, 44, 120) est déterminée, et le produit récolté (48, 125) sortant du dispositif de transfert (3) arrivant dans l'autre véhicule (43, 44) en un point de chute (51, P) dont la position est déterminée en fonction de cette distance relative.

22. Procédé selon la revendication 21, **caractérisé en ce qu'**au moins lors d'un transfert de produit récolté (48, 125) d'un véhicule de récolte (1, 120) à un véhicule de transport (43, 44), au moins à chaque fois une position d'un véhicule (1, 43, 44, 120) est déterminée et au moins une position est transmise à au moins un autre véhicule (1, 43, 44, 120).

23. Procédé selon au moins une des revendications 21 ou 22, **caractérisé en ce que** la position instantanée respective d'au moins un véhicule (1, 43, 44, 120) dans le champ à récolter (40, 55) est mémorisée dans au moins un dispositif de mémoire (32) sur au moins un véhicule (1, 43, 44, 120) et, à partir des positions mémorisées (49, 50), une trace de roulement (52, 70, 75) est calculée pour au moins un des véhicules (1, 43, 44, 120).

24. Procédé selon au moins une des revendications 21 à 23, **caractérisé en ce qu'**au moins à partir d'une position du véhicule de récolte (1, 120) et à partir du positionnement du dispositif de transfert (3), au moins une position prescrite (97, 98) est calculée pour au moins un véhicule de transport (43, 44) et est utilisée de manière correspondante comme valeur prescrite.

25. Procédé selon au moins une des revendications 21 à 24, **caractérisé en ce qu'**au moins à partir d'une position du véhicule de récolte (1, 120) et à partir d'au moins une position d'un véhicule de transport (43, 44), au moins le positionnement du dispositif de transfert (3) est calculé et utilisé pour le positionnement correspondant.

26. Procédé selon au moins une des revendications 21 à 25, **caractérisé en ce qu'**au moins à partir d'une position du véhicule de récolte (1, 120), à partir d'au moins une position d'un véhicule de transport (43, 44) et à partir du positionnement du dispositif de transfert (3), au moins une valeur prescrite pour le positionnement du dispositif de transfert (3) et/ou une position prescrite (97, 98) pour au moins un véhicule de transport (43, 44) est calculée et utilisée de manière correspondante pour le positionnement, respectivement comme valeur prescrite.

27. Procédé selon au moins une des revendications 24 à 26, **caractérisé en ce que**, en présence d'au moins un paramètre influant sur le processus de transfert, au moins un positionnement calculé, respectivement une valeur prescrite calculée est corrigé(e) et seulement ensuite adopté(e) de manière correspondante sur au moins un véhicule (1, 43, 44, 120) ou transmis(e) à au moins un véhicule (1, 43, 44, 120).

28. Procédé selon au moins une des revendications 21 à 27, **caractérisé en ce que** la position d'au moins une paroi de conteneur de transport est calculée à partir de la position de l'antenne de navigation (37) sur le véhicule de transport (43, 44), de la direction de déplacement et des dimensions connues du véhicule de transport (43, 44).

29. Procédé selon au moins une des revendications 21 à 28, **caractérisé en ce que**, pour une coordination automatisée d'au moins deux véhicules (1, 43, 44, 120), les véhicules en question (1, 43, 44, 120) sont au préalable amenés manuellement dans la position relative souhaitée et, conformément à une instruction, la distance relative instantanée est adoptée par l'équipement (30, 76, 77) comme distance relative de consigne pour la coordination automatisée ultérieure.

30. Procédé selon au moins une des revendications 21 à 29, **caractérisé en ce que** le point de chute théorique (51) est calculé à partir des dimensions et du positionnement instantané du dispositif de transfert (3), à partir d'au moins une position et de l'orientation de la machine de récolte (1, 120) et, en présence d'au moins un paramètre influant sur le processus de transfert, comme par exemple le vent ou l'inclinaison du véhicule, en prenant également en compte cette influence.

31. Procédé selon au moins une des revendications 21 à 30, **caractérisé en ce qu'**un point de chute théorique (51) du produit récolté (48, 125) sur le conteneur de transport (47, 65) est calculé et comparé avec au moins une position du véhicule de transport (43, 44) et avec les dimensions correspondantes du conteneur de transport (47, 65), et au moins un message d'avertissement est généré lorsque le point de chute théorique (51) se trouve à l'extérieur du conteneur de transport.

32. Procédé selon au moins une des revendications 21 à 31, **caractérisé en ce qu'**une modification manuelle, souhaitée par un chauffeur, du positionnement du dispositif de transfert (3), respectivement la prescription d'au moins une position à un autre véhicule (1, 43, 44, 120) est interdite si elle a pour effet de placer un point de chute théorique (51) du produit récolté (48, 125) à l'extérieur du conteneur de transport (47, 65).

33. Procédé selon au moins une des revendications 21 à 32, **caractérisé en ce qu'**en cas de modification manuelle, souhaitée par un chauffeur, du point de chute (51) du produit récolté (48, 125) sur le conteneur de transport (47, 65) en présence d'un dépassement d'au moins une zone de travail prescrite (71, 72) du dispositif de transfert (3), la position relative du véhicule de transport (43, 44) est modifiée de façon à réaliser la modification manuelle du point de chute (51) souhaitée par le chauffeur.
